(19) Europäisches Patentamt
European Patent Office
Office européen des brevets

(11) **EP 4 589 473 A1**

(12) **EUROPEAN PATENT APPLICATION**
published in accordance with Art. 153(4) EPC

(43) Date of publication:
**23.07.2025 Bulletin 2025/30**

(21) Application number: **23876239.7**

(22) Date of filing: **29.06.2023**

(51) International Patent Classification (IPC):
**G06N 3/044** (2023.01)

(52) Cooperative Patent Classification (CPC):
**G06N 3/044; G06N 3/06**

(86) International application number:
**PCT/CN2023/103854**

(87) International publication number:
**WO 2024/078030 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 CN 202211258515**

(71) Applicant: **Huawei Technologies Co., Ltd.
Shenzhen, Guangdong 518129 (CN)**

(72) Inventors:
• **ZHOU, Hang
  Shenzhen, Guangdong 518129 (CN)**
• **HAN, Kai
  Shenzhen, Guangdong 518129 (CN)**
• **WANG, Yunhe
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND APPARATUS, AND STORAGE MEDIUM**

(57) This application relates to a data processing method and apparatus, and a storage medium. The method includes: extracting a feature sequence of target data, where the feature sequence includes T input features, T is a positive integer, and $t\in[1, T]$; obtaining T hidden state vectors based on a recurrent neural network, where a $t^{th}$ hidden state vector is determined based on a $(t-1)^{th}$ input feature, a $(t-1)^{th}$ hidden state vector, and a $(t-1)^{th}$ extended state vector, and the $(t-1)^{th}$ extended state vector is obtained by performing lightweight processing based on the $(t-1)^{th}$ hidden state vector; and obtaining a processing result of the target data based on the T hidden state vectors by using a downstream task network. According to embodiments of this application, a network computing speed can be improved, network precision can be ensured during data processing, and processing efficiency of the target data can be improved.

S601

Extract a feature sequence of target data, where the feature sequence includes T input features, T is a positive integer, and $t\in[1, T]$

S602

Obtain T hidden state vectors based on a recurrent neural network, where a $t^{th}$ hidden state vector is determined based on a $(t-1)^{th}$ input feature, a $(t-1)^{th}$ hidden state vector, and a $(t-1)^{th}$ extended state vector

S603

Obtain a processing result of the target data based on the T hidden state vectors by using a downstream task network

FIG. 6

EP 4 589 473 A1

**Description**

This application claims priority to Chinese Patent Application No. 202211258515.2, filed with the China National Intellectual Property Administration on October 13, 2022 and entitled "DATA PROCESSING METHOD AND APPARATUS, AND STORAGE MEDIUM", which is incorporated herein by reference in its entirety.

**TECHNICAL FIELD**

This application relates to the field of artificial intelligence technologies, and in particular, to a data processing method and apparatus, and a storage medium.

**BACKGROUND**

With continuous development of artificial intelligence (artificial intelligence, AI) technologies, a recurrent neural network (Recurrent Neural Network, RNN) has a large quantity of application requirements in a terminal device, for example, applications such as voice wake-up, speech noise cancellation, and speech recognition. However, storage resources and computing resources of the terminal device are limited, and a quantity of included parameters and a calculation amount in the recurrent neural network are large. Consequently, it is difficult to deploy the recurrent neural network on the terminal device. Therefore, how to reduce the calculation amount and the quantity of parameters in the recurrent neural network and accelerate a network computing speed with network precision being ensured becomes an urgent problem to be resolved.

**SUMMARY**

In view of this, a data processing method and apparatus, and a storage medium are provided.

According to a first aspect, an embodiment of this application provides a data processing method. The method includes: extracting a feature sequence of target data, where the feature sequence includes T input features, T is a positive integer, and $t \in [1, T]$; obtaining T hidden state vectors based on a recurrent neural network, where a $t^{th}$ hidden state vector is determined based on a $(t-1)^{th}$ input feature, a $(t-1)^{th}$ hidden state vector, and a $(t-1)^{th}$ extended state vector, and the $(t-1)^{th}$ extended state vector is obtained by performing lightweight processing based on the $(t-1)^{th}$ hidden state vector; and obtaining a processing result of the target data based on the T hidden state vectors by using a downstream task network.

According to this embodiment of this application, because a partial state vector in a state vector that currently needs to be input to the recurrent neural network is an extended state vector obtained through lightweight processing, the recurrent neural network may be controlled to output a hidden state vector of a small dimension. In this way, a quantity of parameters and a calculation amount that are required for outputting the hidden state vector by the recurrent neural network can be reduced. A dimension of the hidden state vector output by the recurrent neural network is reduced. However, because an extended state vector obtained by performing lightweight processing on the hidden state vector and the hidden state vector jointly form a complete state vector input to the recurrent neural network, this is equivalent to a supplementary to status information input to the recurrent neural network. In this way, a network computing speed can be improved, network precision can be ensured during data processing, and processing efficiency of the target data can be improved. In addition, a recurrent neural network with a reduced quantity of parameters and a reduced calculation amount can be deployed on a terminal device, and has higher universality.

With reference to the first aspect, in a first possible implementation of the first aspect, the recurrent neural network includes a first-type recurrent neural network. The first-type recurrent neural network includes a reset gate layer and an update gate layer. The reset gate layer is used to control information to be discarded from a hidden state vector. The update gate layer is used to control information to be added to a hidden state vector. That a $t^{th}$ hidden state vector is determined based on a $(t-1)^{th}$ input feature, a $(t-1)^{th}$ hidden state vector, and a $(t-1)^{th}$ extended state vector includes: determining first gated vectors based on the $(t-1)^{th}$ input feature, the $(t-1)^{th}$ hidden state vector, and the $(t-1)^{th}$ extended state vector respectively by using first gated neurons at the reset gate layer and the update gate layer; determining, by using a candidate neuron in the first-type recurrent neural network, a first candidate hidden state vector based on the first gated vector determined by the first gated neuron at the reset gate layer, the $(t-1)^{th}$ input feature, and the $(t-1)^{th}$ hidden state vector, or determining a first candidate hidden state vector based on the first gated vector determined by the first gated neuron at the reset gate layer, the $(t-1)^{th}$ input feature, the $(t-1)^{th}$ hidden state vector, and the $(t-1)^{th}$ extended state vector; and determining the $t^{th}$ hidden state vector based on the first gated vector determined by the first gated neuron at the update gate layer, the $(t-1)^{th}$ hidden state vector, and the first candidate hidden state vector.

According to this embodiment of this application, the $t^{th}$ hidden state vector is determined based on the $(t-1)^{th}$ input feature, the $(t-1)^{th}$ hidden state vector, and the $(t-1)^{th}$ extended state vector by using the first-type recurrent neural network, so that the first-type recurrent neural network can output a hidden state vector of a small dimension, thereby reducing a quantity of parameters and a calculation amount in the first-type recurrent neural network.

With reference to the first aspect, in a second possible implementation of the first aspect, the recurrent neural network includes a first-type recurrent neural network. The first-type recurrent neural network includes a reset gate layer and an update gate layer. The reset gate layer is used to control information to be discarded from a hidden state vector. The update gate layer is used to control information to be added to a hidden state vector. That a $t^{th}$ hidden state vector is determined based on a $(t-1)^{th}$ input feature, a $(t-1)^{th}$ hidden state vector, and a $(t-1)^{th}$ extended state vector by using the recurrent neural network includes: determining a first gated vector based on the $(t-1)^{th}$ input feature, the $(t-1)^{th}$ hidden state vector, and the $(t-1)^{th}$ extended state vector by using a first gated neuron at the reset gate layer or the update gate layer in the first-type recurrent neural network; performing lightweight processing on the first gated vector by using a first transform neuron in the first-type recurrent neural network, to obtain a first supplementary gated vector; and determining the $t^{th}$ hidden state vector based on the $(t-1)^{th}$ input feature, the $(t-1)^{th}$ hidden state vector, the first supplementary gated vector, and the first gated vector, or determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a second candidate hidden state vector based on the $(t-1)^{th}$ input feature, the $(t-1)^{th}$ hidden state vector, and the first supplementary gated vector by using a candidate neuron in the first-type recurrent neural network; and determining the $t^{th}$ hidden state vector based on the first gated vector, the $(t-1)^{th}$ hidden state vector, and the second candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a third candidate hidden state vector based on the $(t-1)^{th}$ input feature, the $(t-1)^{th}$ hidden state vector, and the first gated vector by using a candidate neuron in the first-type recurrent neural network; and determining the $t^{th}$ hidden state vector based on the first supplementary gated vector, the $(t-1)^{th}$ hidden state vector, and the third candidate hidden state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fourth candidate hidden state vector based on the $(t-1)^{th}$ input feature, the $(t-1)^{th}$ hidden state vector, the first supplementary gated vector, and the $(t-1)^{th}$ extended state vector by using a candidate neuron in the first-type recurrent neural network; and determining the $t^{th}$ hidden state vector based on the first gated vector, the $(t-1)^{th}$ hidden state vector, and the fourth candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fifth candidate hidden state vector based on the $(t-1)^{th}$ input feature, the $(t-1)^{th}$ hidden state vector, the first gated vector, and the $(t-1)^{th}$ extended state vector by using a candidate neuron in the first-type recurrent neural network; and determining the $t^{th}$ hidden state vector based on the first supplementary gated vector, the $(t-1)^{th}$ hidden state vector, and the fifth candidate hidden state vector.

According to this embodiment of this application, lightweight processing is performed on the first gated vector, to obtain the first supplementary gated vector. This is equivalent to generating a partial gated vector through lightweight processing. In a related technology, two gated neurons in the first-type recurrent neural network are directly used to output two gated vectors based on the $(t-1)^{th}$ input feature and a $(t-1)^{th}$ spliced state vector. In comparison, in this application, a quantity of parameters and a calculation amount for generating a gated vector can be reduced, thereby reducing a quantity of parameters and a calculation amount in the entire first-type recurrent neural network and improving a network computing speed. Control of the first-type recurrent neural network on a hidden state can be ensured, so that the first-type recurrent neural network has higher universality.

With reference to the first aspect, in a third possible implementation of the first aspect, the recurrent neural network includes a second-type recurrent neural network. That a $t^{th}$ hidden state vector is determined based on a $(t-1)^{th}$ input feature, a $(t-1)^{th}$ hidden state vector, and a $(t-1)^{th}$ extended state vector includes: splicing the $(t-1)^{th}$ hidden state vector and the $(t-1)^{th}$ extended state vector, to obtain a $(t-1)^{th}$ spliced state vector; and determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network, where the $t^{th}$ cell state vector is determined based on the $(t-1)^{th}$ spliced state vector, the $(t-1)^{th}$ input feature, and the $(t-1)^{th}$ cell state vector, the $t^{th}$ hidden state vector is determined based on the $(t-1)^{th}$ spliced state vector, the $(t-1)^{th}$ input feature, and the $t^{th}$ cell state vector, and a $0^{th}$ cell state vector is an initial value.

According to this embodiment of this application, the second-type recurrent neural network can output a hidden state vector of a small dimension, thereby reducing a quantity of parameters and a calculation amount in the second-type recurrent neural network.

With reference to the first aspect, in a fourth possible implementation of the first aspect, the determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network includes: determining a second gated vector based on the $(t-1)^{th}$ input feature and the $(t-1)^{th}$ spliced state vector by using a second gated neuron in the second-type recurrent neural network; performing lightweight processing on the second gated vector by using a second transform neuron in the second-type recurrent neural network, to obtain a second supplementary gated vector; determining a first candidate cell state vector based on the $(t-1)^{th}$ input feature and the $(t-1)^{th}$ spliced state vector by using a candidate neuron in the second-type recurrent neural network; and determining the $t^{th}$ hidden state vector and the $t^{th}$ cell state vector based on the second gated vector, the second supplementary gated vector, the first candidate cell state vector, and the $(t-1)^{th}$ cell state vector.

Optionally, the second-type recurrent neural network includes a forget gate layer, an input gate layer, and an output gate layer. The forget gate layer is used to control information to be discarded from a cell state vector. The input gate layer is used to control information to be added to a cell state vector. The output gate layer is used to control information in a to-be-output cell state vector.

Optionally, when the second gated neuron is a gated neuron at the forget gate layer, the second supplementary gated vector includes second supplementary gated vectors that are obtained by performing lightweight processing on the second gated vector respectively by second transform neurons at the input gate layer and the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the input gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the input gate layer, the second supplementary gated vector includes second supplementary gated vectors that are obtained by performing lightweight processing on the second gated vector respectively by second transform neurons at the forget gate layer and the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the forget gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the output gate layer in the second-type recurrent neural network, the second supplementary gated vector includes second supplementary gated vectors that are obtained by performing lightweight processing on the second gated vector respectively by second transform neurons at the forget gate layer and the input gate layer in the second-type recurrent neural network. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vectors that are obtained by performing lightweight processing on the second gated vector respectively by the second transform neurons at the forget gate layer and the input gate layer, and the first candidate cell state vector; and determining the $t^{th}$ hidden state vector based on the $t^{th}$ cell state vector and the second gated vector.

Optionally, when the second gated neuron includes gated neurons at the forget gate layer and the input gate layer in the second-type recurrent neural network, the second supplementary gated vector includes a second supplementary gated vector that is obtained by the second transform neuron by performing lightweight processing on a second gated vector determined by the second gated neuron at the forget gate layer and/or the input gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vectors respectively determined by the second gated neurons at the forget gate layer and the input gate layer, and the first candidate cell state vector; and determining the $t^{th}$ hidden state vector based on the $t^{th}$ cell state vector and the second supplementary gated vector.

Optionally, when the second gated neuron includes gated neurons at the forget gate layer and the output gate layer, the second supplementary gated vector includes a second supplementary gated vector that is obtained by the second transform neuron by performing lightweight processing on a second gated vector determined by a second gated neuron at the forget gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the forget gate layer, the second supplementary gated vector, and the first candidate cell state vector; and determining the $t^{th}$ hidden state vector based on the $t^{th}$ cell state vector and the second gated vector determined by the second gated neuron at the output gate layer.

Optionally, when the second gated neuron includes gated neurons at the input gate layer and the output gate layer in the second-type recurrent neural network, the second supplementary gated vector includes a second supplementary gated vector that is obtained by the second transform neuron by performing lightweight processing on a second gated vector determined by a second gated neuron at the input gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the input gate layer, the second supplementary gated vector, and the first candidate cell state vector; and determining the $t^{th}$ hidden state vector based on the $t^{th}$ cell state vector and the second gated vector determined by the second gated neuron at the output gate layer.

According to this embodiment of this application, lightweight processing is performed on the second gated vector, to obtain the second supplementary gated vector. This is equivalent to generating a partial gated vector through lightweight processing. In a related technology, three gated neurons in the second-type recurrent neural network are directly used to output three gated vectors based on the $(t-1)^{th}$ input feature and a $(t-1)^{th}$ spliced state vector. In comparison, in this application, a quantity of parameters and a calculation amount for generating a gated vector can be reduced, thereby reducing a quantity of parameters and a calculation amount in the entire second-type recurrent neural network and improving a network computing speed. Control of the second-type recurrent neural network on a hidden state can be ensured, so that the second-type recurrent neural network has higher universality.

In the first aspect or the first, second, third, and fourth possible implementations of the first aspect, the lightweight processing includes nonlinear transformation and/or linear transformation.

According to this embodiment of this application, a corresponding extended state vector and/or a corresponding supplementary gated vector are/is obtained through nonlinear transformation and/or linear transformation, so that an overall quantity of parameters and a calculation amount can be reduced through lightweight processing at a lightweight level.

In the first aspect or the first, the second, the third, and the fourth possible implementations of the first aspect, the target data includes at least one of the following: voice data, image data, and text data; and the processing result includes at least one of the following: a speech recognition result of the voice data, a speech noise cancellation result of the voice data, a voice wake-up result of the voice data, a text recognition result of the image data, and a text translation result of the text data.

In the first aspect or the first, the second, the third, and the fourth possible implementations of the first aspect, the quantity of parameters in the recurrent neural network is positively correlated with a dimension of a hidden state vector output by the recurrent neural network.

According to this embodiment of this application, because the quantity of parameters in the recurrent neural network is positively correlated with the dimension of the hidden state vector output by the recurrent neural network, a hidden state vector with a small dimension may be output by using a recurrent neural network with a small quantity of parameters, thereby reducing a calculation amount in the recurrent neural network and improving a network processing speed.

According to a second aspect, an embodiment of this application provides a data processing method. The method includes: extracting a feature sequence of target data, where the feature sequence includes T input features, T is a positive integer, and $t \in [1, T]$; obtaining T hidden state vectors based on a first-type recurrent neural network, where a $t^{th}$ hidden state vector is determined based on a $(t-1)^{th}$ input feature, a $(t-1)^{th}$ hidden state vector, a third supplementary gated vector, and a third gated vector, the third gated vector is determined based on the $(t-1)^{th}$ input feature and the $(t-1)^{th}$ hidden state vector by using a first gated neuron in the first-type recurrent neural network, a $0^{th}$ hidden state vector is an initial value, and the third supplementary gated vector is obtained by performing lightweight processing on the third gated vector by using a first transform neuron in the first-type recurrent neural network; and obtaining a processing result of the target data based on the T hidden state vectors by using a downstream task network.

Optionally, the first-type recurrent neural network includes a reset gate layer and an update gate layer. The reset gate layer is used to control information to be discarded from a hidden state vector. The update gate layer is used to control information to be added to a hidden state vector.

Optionally, when the first gated neuron is a gated neuron at the update gate layer, that a $t^{th}$ hidden state vector is determined based on a $(t-1)^{th}$ input feature, a $(t-1)^{th}$ hidden state vector, a third supplementary gated vector, and a third gated vector includes: determining a sixth candidate hidden state vector based on the $(t-1)^{th}$ input feature, the $(t-1)^{th}$ hidden state vector, and the third supplementary gated vector by using a candidate neuron in the first-type recurrent neural network; and determining the $t^{th}$ hidden state vector based on the third gated vector, the $(t-1)^{th}$ hidden state vector, and the sixth candidate hidden state vector.

Optionally, when the first gated neuron is a gated neuron at the reset gate layer, that a $t^{th}$ hidden state vector is determined based on a $(t-1)^{th}$ input feature, a $(t-1)^{th}$ hidden state vector, a third supplementary gated vector, and a third gated vector includes: determining a seventh candidate hidden state vector based on the $(t-1)^{th}$ input feature, the $(t-1)^{th}$ hidden state vector, and the third gated vector by using a candidate neuron in the first-type recurrent neural network; and determining the $t^{th}$ hidden state vector based on the third supplementary gated vector, the $(t-1)^{th}$ hidden state vector, and the seventh candidate hidden state vector.

According to this embodiment of this application, lightweight processing is performed on the third gated vector, to obtain the third supplementary gated vector. This is equivalent to generating a partial gated vector through lightweight processing. In a related technology, two gated neurons in the first-type recurrent neural network are directly used to output two gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire first-type recurrent neural network and improving a network computing speed. Control of the first-type recurrent neural network on a hidden state can be ensured, so that the first-type recurrent neural network has higher universality.

In some possible implementations of the second aspect, the lightweight processing includes nonlinear transformation and/or linear transformation. According to this embodiment of this application, a corresponding supplementary gated vector is obtained through nonlinear transformation and/or linear transformation, so that an overall quantity of parameters and a calculation amount can be reduced through lightweight processing at a lightweight level.

According to a third aspect, an embodiment of this application provides a data processing method. The method includes: extracting a feature sequence of target data, where the feature sequence includes T input features, T is a positive integer, $t \in [1, T]$, a $t^{th}$ hidden state vector and a $t^{th}$ cell state vector are determined based on a fourth gated vector, a fourth supplementary gated vector, a second candidate cell state vector, and a $(t-1)^{th}$ cell state vector, a $0^{th}$ cell state vector is an initial value, the fourth gated vector is determined based on a $(t-1)^{th}$ input feature and a $(t-1)^{th}$ hidden state vector by using a second gated neuron in a second-type recurrent neural network, a $0^{th}$ hidden state vector is an initial value, the fourth supplementary gated vector is obtained by performing lightweight processing on the fourth gated vector by using a second transform neuron in the second-type recurrent neural network, and the second candidate cell state vector is determined based on the $(t-1)^{th}$ input feature and the $(t-1)^{th}$ hidden state vector by using a candidate neuron in the second-type recurrent neural network; and obtaining a processing result of the target data based on the T hidden state vectors by using a downstream task network.

Optionally, the second-type recurrent neural network includes a forget gate layer, an input gate layer, and an output gate layer. The forget gate layer is used to control information to be discarded from a cell state vector. The input gate layer is used to control information to be added to a cell state vector. The output gate layer is used to control information in a to-be-output cell state vector.

Optionally, when the second gated neuron is a gated neuron at the forget gate layer, the fourth supplementary gated vector includes fourth supplementary gated vectors that are obtained by performing lightweight processing on the fourth gated vector respectively by second transform neurons at the input gate layer and the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the input gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at the input gate layer in the second-type recurrent neural network, the fourth supplementary gated vector includes fourth supplementary gated vectors that are obtained by performing lightweight processing on the fourth gated vector respectively by second transform neurons at the forget gate layer and the output gate layer in the second-type recurrent neural network. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the forget gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at the output gate layer, the fourth supplementary gated vector includes fourth supplementary gated vectors that are obtained by performing lightweight processing on the fourth gated vector respectively by second transform neurons at the forget gate layer and the input gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vectors that are obtained by performing lightweight processing on the fourth gated vector respectively by the second transform neurons at the forget gate layer and the input gate layer, and the second candidate cell state vector; and determining the $t^{th}$ hidden state vector based on the $t^{th}$ cell state vector and the second gated vector.

Optionally, when the second gated neuron includes gated neurons at the forget gate layer and the input gate layer, the fourth supplementary gated vector includes a fourth supplementary gated vector that is obtained by the second transform neuron by performing lightweight processing on a fourth gated vector determined by the second gated neuron at the forget gate layer and/or the input gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vectors respectively determined by the second gated neurons at the forget gate layer and the input gate layer, and the second candidate cell state vector; and determining the $t^{th}$ hidden state vector based on the $t^{th}$ cell state vector and the fourth supplementary gated vector.

Optionally, when the second gated neuron includes gated neurons at the forget gate layer and the output gate layer, the fourth supplementary gated vector includes a fourth supplementary gated vector that is obtained by the second transform neuron by performing lightweight processing on a fourth gated vector determined by a second gated neuron at the forget gate layer and/or the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the forget gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

Optionally, when the second gated neuron includes gated neurons at the input gate layer and the output gate layer, the fourth supplementary gated vector includes a fourth supplementary gated vector that is obtained by the second transform neuron by performing lightweight processing on a fourth gated vector determined by a second gated neuron at the input gate layer and/or the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the input gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

According to this embodiment of this application, lightweight processing is performed on the fourth gated vector, to obtain the fourth supplementary gated vector. This is equivalent to generating a partial gated vector through lightweight processing. In a related technology, three gated neurons in the second-type recurrent neural network are directly used to output three gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire second-type recurrent neural network and improving a network computing speed. Control of the second-type recurrent neural network on a hidden state can be ensured, so that the second-type recurrent neural network has higher universality.

In some possible implementations of the third aspect, the lightweight processing includes nonlinear transformation and/or linear transformation. According to this embodiment of this application, a corresponding supplementary gated vector is obtained through nonlinear transformation and/or linear transformation, so that an overall quantity of parameters and a calculation amount can be reduced through lightweight processing at a lightweight level.

According to a fourth aspect, an embodiment of this application provides a data processing apparatus. The apparatus includes the following modules. A feature extraction module is configured to extract a feature sequence of target data. The feature sequence includes T input features. Herein, T is a positive integer, and $t \in [1, T]$. A first determining module is configured to obtain T hidden state vectors based on a recurrent neural network. A $t^{th}$ hidden state vector is determined based on a $(t-1)^{th}$ input feature, a $(t-1)^{th}$ hidden state vector, and a $(t-1)^{th}$ extended state vector. The $(t-1)^{th}$ extended state vector is obtained by performing lightweight processing based on the $(t-1)^{th}$ hidden state vector. A processing result determining module is configured to obtain a processing result of the target data based on the T hidden state vectors by using a downstream task network.

With reference to the fourth aspect, in a first possible implementation of the fourth aspect, the recurrent neural network includes a first-type recurrent neural network. The first-type recurrent neural network includes a reset gate layer and an update gate layer. The reset gate layer is used to control information to be discarded from a hidden state vector. The update gate layer is used to control information to be added to a hidden state vector. That a $t^{th}$ hidden state vector is determined based on a $(t-1)^{th}$ input feature, a $(t-1)^{th}$ hidden state vector, and a $(t-1)^{th}$ extended state vector includes: determining first gated vectors based on the $(t-1)^{th}$ input feature, the $(t-1)^{th}$ hidden state vector, and the $(t-1)^{th}$ extended state vector respectively by using first gated neurons at the reset gate layer and the update gate layer; determining, by using a candidate neuron in the first-type recurrent neural network, a first candidate hidden state vector based on the first gated vector determined by the first gated neuron at the reset gate layer, the $(t-1)^{th}$ input feature, and the $(t-1)^{th}$ hidden state vector, or determining a first candidate hidden state vector based on the first gated vector determined by the first gated neuron at the reset gate layer, the $(t-1)^{th}$ input feature, the $(t-1)^{th}$ hidden state vector, and the $(t-1)^{th}$ extended state vector; and determining the $t^{th}$ hidden state vector based on the first gated vector determined by the first gated neuron at the update gate layer, the $(t-1)^{th}$ hidden state vector, and the first candidate hidden state vector.

With reference to the fourth aspect, in a second possible implementation of the fourth aspect, the recurrent neural network includes a first-type recurrent neural network. The first-type recurrent neural network includes a reset gate layer and an update gate layer. The reset gate layer is used to control information to be discarded from a hidden state vector. The update gate layer is used to control information to be added to a hidden state vector. That a $t^{th}$ hidden state vector is determined based on a $(t-1)^{th}$ input feature, a $(t-1)^{th}$ hidden state vector, and a $(t-1)^{th}$ extended state vector includes: determining a first gated vector based on the $(t-1)^{th}$ input feature, the $(t-1)^{th}$ hidden state vector, and the $(t-1)^{th}$ extended state vector by using a first gated neuron at the reset gate layer or the update gate layer in the first-type recurrent neural network; performing lightweight processing on the first gated vector by using a first transform neuron in the first-type recurrent neural network, to obtain a first supplementary gated vector; and determining the $t^{th}$ hidden state vector based on the $(t-1)^{th}$ input feature, the $(t-1)^{th}$ hidden state vector, the first supplementary gated vector, and the first gated vector, or determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a second candidate hidden state vector based on the $(t-1)^{th}$ input feature, the $(t-1)^{th}$ hidden state vector, and the first supplementary gated vector by using a candidate neuron in the first-type recurrent neural network; and determining the $t^{th}$ hidden state vector based on the first gated vector, the $(t-1)^{th}$ hidden state vector, and the second candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a third candidate hidden state vector based on the $(t-1)^{th}$ input feature, the $(t-1)^{th}$ hidden state vector, and the first gated vector by using a candidate neuron in the first-type recurrent neural network; and determining the $t^{th}$ hidden state vector based on the first supplementary gated vector, the $(t-1)^{th}$ hidden state vector, and the third candidate hidden state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fourth candidate hidden state vector based on the $(t-1)^{th}$ input feature, the $(t-1)^{th}$ hidden state vector, the first supplementary gated vector, and the $(t-1)^{th}$ extended state vector by using a candidate neuron in the first-type recurrent neural network; and determining the $t^{th}$ hidden state vector based on the first gated vector, the $(t-1)^{th}$ hidden state vector, and the fourth candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fifth candidate hidden state vector based on the $(t-1)^{th}$ input feature, the $(t-1)^{th}$ hidden state vector, the first gated vector, and the $(t-1)^{th}$ extended state vector by using a candidate neuron in the first-type recurrent neural network; and determining the $t^{th}$ hidden state vector based on the first supplementary gated vector, the $(t-1)^{th}$ hidden state vector, and the fifth candidate hidden state vector.

With reference to the fourth aspect, in a third possible implementation of the fourth aspect, the recurrent neural network includes a second-type recurrent neural network. That a $t^{th}$ hidden state vector is determined based on a $(t-1)^{th}$ input feature, a $(t-1)^{th}$ hidden state vector, and a $(t-1)^{th}$ extended state vector includes: splicing the $(t-1)^{th}$ hidden state vector and the $(t-1)^{th}$ extended state vector, to obtain a $(t-1)^{th}$ spliced state vector; and determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network, where the $t^{th}$ cell state vector is determined based on the $(t-1)^{th}$ spliced state vector, the $(t-1)^{th}$ input feature, and the $(t-1)^{th}$ cell state vector, the $t^{th}$ hidden state vector is determined based on the $(t-1)^{th}$ spliced state vector, the $(t-1)^{th}$ input feature, and the $t^{th}$ cell state vector, and a $0^{th}$ cell state vector is an initial value.

With reference to the fourth aspect, in a fourth possible implementation of the fourth aspect, the determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network includes: determining a second gated vector based on the $(t-1)^{th}$ input feature and the $(t-1)^{th}$ spliced state vector by using a second gated neuron in the second-type recurrent neural network; performing lightweight processing on the second gated vector by using a second transform neuron in the second-type recurrent neural network, to obtain a second supplementary gated vector; determining a first candidate cell state vector based on the $(t-1)^{th}$ input feature and the $(t-1)^{th}$ spliced state vector by using a candidate neuron in the second-type recurrent neural network; and determining the $t^{th}$ hidden state vector and the $t^{th}$ cell state vector based on the second gated vector, the second supplementary gated vector, the first candidate cell state vector, and the $(t-1)^{th}$ cell state vector.

Optionally, the second-type recurrent neural network includes a forget gate layer, an input gate layer, and an output gate layer. The forget gate layer is used to control information to be discarded from a cell state vector. The input gate layer is used to control information to be added to a cell state vector. The output gate layer is used to control information in a to-be-output cell state vector.

Optionally, when the second gated neuron is a gated neuron at the forget gate layer in the second-type recurrent neural network, the second supplementary gated vector includes second supplementary gated vectors that are obtained by performing lightweight processing on the second gated vector respectively by second transform neurons at the input gate layer and the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the input gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the input gate layer in the second-type recurrent neural network, the second supplementary gated vector includes second supplementary gated vectors that are obtained by performing lightweight processing on the second gated vector respectively by second transform neurons at the forget gate layer and the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the forget gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the output gate layer, the second supplementary gated vector includes second supplementary gated vectors that are obtained by performing lightweight processing on the second gated vector respectively by second transform neurons at the forget gate layer and the input gate layer in the second-type recurrent neural network. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vectors that are obtained by performing lightweight processing on the second gated vector respectively by the second transform neurons at the forget gate layer and the input gate layer, and the first candidate cell state vector; and determining the $t^{th}$ hidden state vector based on the $t^{th}$ cell state vector and the second gated vector.

Optionally, when the second gated neuron includes gated neurons at the forget gate layer and the input gate layer, the second supplementary gated vector includes a second supplementary gated vector that is obtained by the second transform neuron by performing lightweight processing on a second gated vector determined by the second gated neuron at the forget gate layer and/or the input gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vectors respectively determined by the second gated neurons at the forget gate layer and the input gate layer, and the first candidate cell state vector; and determining the $t^{th}$ hidden state vector based on the $t^{th}$ cell state vector and the second supplementary gated vector.

Optionally, when the second gated neuron includes gated neurons at the forget gate layer and the output gate layer, the second supplementary gated vector includes a second supplementary gated vector that is obtained by the second transform neuron by performing lightweight processing on a second gated vector determined by a second gated neuron at the forget gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the forget gate layer, the second supplementary gated vector, and the first candidate cell state vector; and determining the $t^{th}$ hidden state vector based on the $t^{th}$ cell state vector and the second gated vector determined by the second gated neuron at the output gate layer.

Optionally, when the second gated neuron includes gated neurons at the input gate layer and the output gate layer, the second supplementary gated vector includes a second supplementary gated vector that is obtained by the second transform neuron by performing lightweight processing on a second gated vector determined by a second gated neuron at the input gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the input gate layer, the second supplementary gated vector, and the first candidate cell state vector; and determining the $t^{th}$ hidden state vector based on the $t^{th}$ cell state vector and the second gated vector determined by the second gated neuron at the output gate layer.

In the fourth aspect or the first, second, third, and fourth possible implementations of the fourth aspect, the lightweight processing includes nonlinear transformation and/or linear transformation.

According to a fifth aspect, an embodiment of this application provides a data processing apparatus. The apparatus includes the following modules. A feature extraction module is configured to extract a feature sequence of target data. The feature sequence includes T input features. Herein, T is a positive integer, and $t \in [1, T]$. A second determining module is configured to obtain T hidden state vectors based on a first-type recurrent neural network. A $t^{th}$ hidden state vector is determined based on a $(t-1)^{th}$ input feature, a $(t-1)^{th}$ hidden state vector, a third supplementary gated vector, and a third gated vector. The third gated vector is determined based on the $(t-1)^{th}$ input feature and the $(t-1)^{th}$ hidden state vector by using a first gated neuron in the first-type recurrent neural network. A $0^{th}$ hidden state vector is an initial value. The third supplementary gated vector is obtained by performing lightweight processing on the third gated vector by using a first transform neuron in the first-type recurrent neural network. A result determining module is configured to obtain a processing result of the target data based on the T hidden state vectors by using a downstream task network.

Optionally, the first-type recurrent neural network includes a reset gate layer and an update gate layer. The reset gate layer is used to control information to be discarded from a hidden state vector. The update gate layer is used to control information to be added to a hidden state vector.

Optionally, when the first gated neuron is a gated neuron at the update gate layer, that a $t^{th}$ hidden state vector is determined based on a $(t-1)^{th}$ input feature, a $(t-1)^{th}$ hidden state vector, a third supplementary gated vector, and a third gated vector includes: determining a sixth candidate hidden state vector based on the $(t-1)^{th}$ input feature, the $(t-1)^{th}$ hidden state vector, and the third supplementary gated vector by using a candidate neuron in the first-type recurrent neural network; and determining the $t^{th}$ hidden state vector based on the third gated vector, the $(t-1)^{th}$ hidden state vector, and the sixth candidate hidden state vector.

Optionally, when the first gated neuron is a gated neuron at the reset gate layer, that a $t^{th}$ hidden state vector is determined based on a $(t-1)^{th}$ input feature, a $(t-1)^{th}$ hidden state vector, a third supplementary gated vector, and a third gated vector includes: determining a seventh candidate hidden state vector based on the $(t-1)^{th}$ input feature, the $(t-1)^{th}$ hidden state vector, and the third gated vector by using a candidate neuron in the first-type recurrent neural network; and determining the $t^{th}$ hidden state vector based on the third supplementary gated vector, the $(t-1)^{th}$ hidden state vector, and the seventh candidate hidden state vector.

In some possible implementations of the fifth aspect, the lightweight processing includes nonlinear transformation and/or linear transformation.

According to a sixth aspect, an embodiment of this application provides a data processing apparatus. The apparatus includes the following modules. A feature extraction module is configured to extract a feature sequence of target data. The feature sequence includes T input features. Herein, T is a positive integer, and $t \in [1, T]$. A third determining module is configured to obtain T hidden state vectors based on a second-type recurrent neural network. A $t^{th}$ hidden state vector and a $t^{th}$ cell state vector are determined based on a fourth gated vector, a fourth supplementary gated vector, a second candidate cell state vector, and a $(t-1)^{th}$ cell state vector. A $0^{th}$ cell state vector is an initial value. The fourth gated vector is determined based on a $(t-1)^{th}$ input feature and a $(t-1)^{th}$ hidden state vector by using a second gated neuron in the second-type recurrent neural network. A $0^{th}$ hidden state vector is an initial value. The fourth supplementary gated vector is obtained by performing lightweight processing on the fourth gated vector by using a second transform neuron in the second-type recurrent neural network. The second candidate cell state vector is determined based on the $(t-1)^{th}$ input feature and the $(t-1)^{th}$ hidden state vector by using a candidate neuron in the second-type recurrent neural network. A result determining module is configured to obtain a processing result of the target data based on the T hidden state vectors by using a downstream task network.

Optionally, the second-type recurrent neural network includes a forget gate layer, an input gate layer, and an output gate layer. The forget gate layer is used to control information to be discarded from a cell state vector. The input gate layer is used to control information to be added to a cell state vector. The output gate layer is used to control information in a to-be-output cell state vector.

Optionally, when the second gated neuron is a gated neuron at the forget gate layer, the fourth supplementary gated vector includes fourth supplementary gated vectors that are obtained by performing lightweight processing on the fourth gated vector respectively by second transform neurons at the input gate layer and the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the input gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at the input gate layer, the fourth supplementary gated vector includes fourth supplementary gated vectors that are obtained by performing lightweight processing on the fourth gated vector respectively by second transform neurons at the forget gate layer and the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the forget gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at the output gate layer, the fourth supplementary gated vector includes fourth supplementary gated vectors that are obtained by performing lightweight processing on the fourth gated vector respectively by second transform neurons at the forget gate layer and the input gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vectors that are obtained by performing lightweight processing on the fourth gated vector respectively by the second transform neurons at the forget gate layer and the input gate layer, and the second candidate cell state vector; and determining the $t^{th}$ hidden state vector based on the $t^{th}$ cell state vector and the second gated vector.

Optionally, when the second gated neuron includes gated neurons at the forget gate layer and the input gate layer, the fourth supplementary gated vector includes a fourth supplementary gated vector that is obtained by the second transform neuron by performing lightweight processing on a fourth gated vector determined by the second gated neuron at the forget gate layer and/or the input gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vectors respectively determined by the second gated neurons at the forget gate layer and the input gate layer, and the second candidate cell state vector; and determining the $t^{th}$ hidden state vector based on the $t^{th}$ cell state vector and the fourth supplementary gated vector.

Optionally, when the second gated neuron includes gated neurons at the forget gate layer and the output gate layer, the fourth supplementary gated vector includes a fourth supplementary gated vector that is obtained by the second transform neuron by performing lightweight processing on a fourth gated vector determined by a second gated neuron at the forget gate layer and/or the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the forget gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

Optionally, when the second gated neuron includes gated neurons at the input gate layer and the output gate layer, the fourth supplementary gated vector includes a fourth supplementary gated vector that is obtained by the second transform neuron by performing lightweight processing on a fourth gated vector determined by a second gated neuron at the input gate layer and/or the output gate layer. That a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the input gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

In some possible implementations of the sixth aspect, the lightweight processing includes nonlinear transformation and/or linear transformation.

According to a seventh aspect, an embodiment of this application provides a data processing apparatus. The apparatus includes a processor, and a memory configured to store instructions executable by the processor. When the processor is configured to execute the instructions, the data processing method in the first aspect or one or more of the possible implementations of the first aspect is implemented.

According to an eighth aspect, an embodiment of this application provides a non-volatile computer-readable storage medium. The non-volatile computer-readable storage medium stores computer program instructions. When the computer program instructions are executed by a processor, the data processing method according to the first aspect or one or more of the possible implementations of the first aspect is implemented.

According to a ninth aspect, an embodiment of this application provides a terminal device. The terminal device may perform the data processing method in the first aspect or one or more of the possible implementations of the first aspect.

According to a tenth aspect, an embodiment of this application provides a computer program product, including computer-readable code or a non-volatile computer-readable storage medium carrying computer-readable code. When the computer-readable code is run in an electronic device, a processor in the electronic device performs the data processing method in the first aspect or one or more of the possible implementations of the first aspect.

These aspects and other aspects of this application are more concise and more comprehensible in descriptions of the following (a plurality of) embodiments.

## BRIEF DESCRIPTION OF DRAWINGS

The accompanying drawings included in this specification and constituting a part of this specification and this specification jointly show example embodiments, features, and aspects of this application, and are intended to explain the principles of this application.

FIG. 1(a) and FIG. 1(b) are diagrams of a long short-term memory neural network according to an embodiment of this application;
FIG. 2(a) and FIG. 2(b) are diagrams of a gated recurrent unit neural network according to an embodiment of this application;
FIG. 3 is a diagram of a pruned gated recurrent unit neural network according to an embodiment of this application;
FIG. 4 is a diagram of a voice wake-up interface according to an embodiment of this application;
FIG. 5 is a diagram of a video call interface according to an embodiment of this application;
FIG. 6 is a flowchart of a data processing method according to an embodiment of this application;
FIG. 7(a) and FIG. 7(b) are diagrams of a process of determining a hidden state vector according to an embodiment of this application;
FIG. 8(a) and FIG. 8(b) are diagrams of a process of determining a hidden state vector according to an embodiment of this application;
FIG. 9(a), FIG. 9(b), FIG. 9(c), and FIG. 9(d) are diagrams of determining a hidden state vector by using a first-type recurrent neural network according to an embodiment of this application;
FIG. 10(a), FIG. 10(b), and FIG. 10(c) are diagrams of determining a hidden state vector by using a second-type recurrent neural network according to an embodiment of this application;
FIG. 11(a), FIG. 11(b), and FIG. 11(c) are diagrams of determining a hidden state vector by using a second-type recurrent neural network according to an embodiment of this application;
FIG. 12 is a flowchart of a data processing method according to an embodiment of this application;
FIG. 13(a) and FIG. 13(b) are diagrams of determining a hidden state vector by using a first-type recurrent neural network according to an embodiment of this application;
FIG. 14 is a flowchart of a data processing method according to an embodiment of this application;
FIG. 15(a), FIG. 15(b), and FIG. 15(c) are diagrams of determining a hidden state vector by using a second-type recurrent neural network according to an embodiment of this application;
FIG. 16(a), FIG. 16(b), and FIG. 16(c) are diagrams of determining a hidden state vector by using a second-type recurrent neural network according to an embodiment of this application;
FIG. 17 is a block diagram of a data processing apparatus according to an embodiment of this application;
FIG. 18 is a block diagram of a data processing apparatus according to an embodiment of this application;
FIG. 19 is a block diagram of a data processing apparatus according to an embodiment of this application; and
FIG. 20 is a diagram of a structure of an electronic device 1300 according to an embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The special term "example" herein means "used as an example, an embodiment, or an illustration". Any embodiment described as "exemplary" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

For better understanding of solutions in embodiments of this application, the following first describes related terms and concepts that may be used in embodiments of this application.

(1) A recurrent neural network (Recurrent Neural Network, RNN) is a recursive neural network (recursive neural network) that uses sequence (sequence) data as an input and implements recursion (recursion) in a sequence evolution direction and in which all nodes (recurrent units) are connected in a chain manner. A reason why the RNN is referred to as the recurrent neural network is that a current output of a sequence is also related to a previous output of the sequence. A specific representation form is that the network memorizes previous information and applies the previous information to calculation of the current output. To be specific, nodes at a hidden layer are connected, and an input of the hidden layer not only includes an output of an input layer, but also includes an output of the hidden layer at a previous moment. In other words, in terms of a network structure, the recurrent neural network memorizes the previous information and uses the previous information to affect an output of a subsequent node.

(2) A long short-term memory (Long Short-Term Memory, LSTM) neural network is a recurrent neural network with three gate structures and can learn long-term dependency (long-term dependencies). A name "gate" is used because three neurons use a sigmoid activation function and a gate outputs a value ranging from 0 to 1 to indicate a specific amount of currently input information can pass through the gate. When the gate is opened (for example, an output of a sigmoid neural network layer is 1), it means that all information can pass through the gate. When the gate is closed (for example, the output of the sigmoid neural network layer is 0), it means that any information cannot pass through the gate. Compared with a hidden state (hidden state, also referred to as a hidden state) in a conventional RNN, a cell state (cell state, also referred to as a cell state) is added to the LSTM. The three gate structures in the LSTM can protect and control the cell state. The cell state represents long-term memory information, and the hidden state represents short-term memory information.

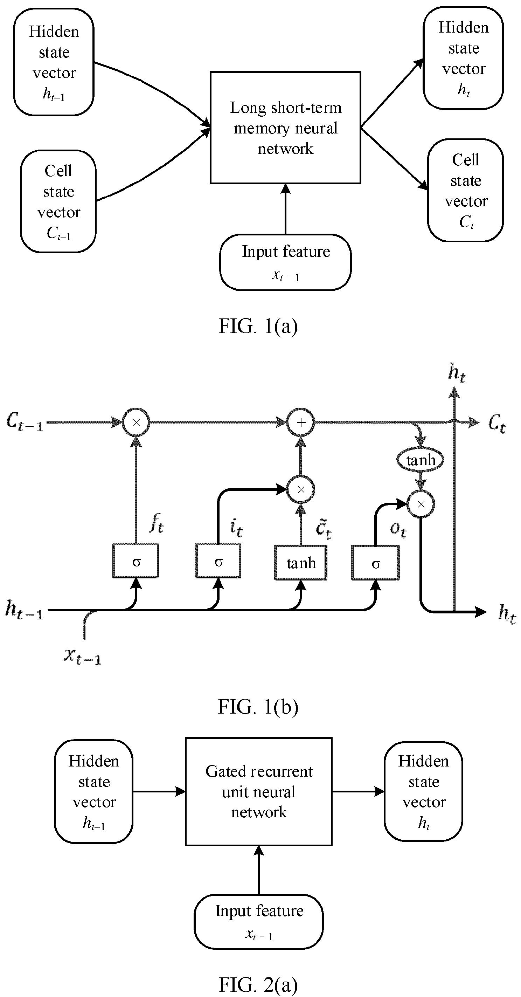

FIG. 1(a) and FIG. 1(b) are diagrams of a long short-term memory neural network module according to an embodiment of this application. As shown in FIG. 1(a), an input of an LSTM includes $C_{t-1}$, $h_{t-1}$, and $x_{t-1}$, and an output of the LSTM includes $C_t$ and $h_t$. Herein, $C_{t-1}$ represents a cell state vector output in a previous time step (that is, a cell state vector input in a current time step), $C_t$ represents a cell state vector output in the current time step, $h_{t-1}$ represents a hidden state vector output in the previous time step (that is, a hidden state vector input in the current time step), $h_t$ represents a hidden state vector output in the current time step, and $x_{t-1}$ represents a feature input in the current time step. As shown in FIG. 1(b), four rectangular boxes represent four neurons. Herein, $\sigma$ represents a sigmoid activation function used in the neuron, and tanh represents a tanh function used in the neuron and is used to output a candidate cell state (candidate cell state) vector. The candidate cell state vector is kept between -1 to 1. In FIG. 1(b), network layers at which the three $\sigma$s from left to right are located may be respectively referred to as a forget gate (forget gate) layer, an input gate (input gate) layer, and an output gate (output gate) layer, where $f_t$ represents an output value of $\sigma$ at the forget gate layer, $i_t$ represents an output value of $\sigma$ at the input gate layer, $o_t$ represents an output value of $\sigma$ at the output gate layer, and $\tilde{c}_t$ represents a candidate cell state vector. Calculation formulas of the LSTM shown in FIG. 1(b) may be expressed as Formulas (1-1) to (1-6):

$$f_t = \sigma(W_f x_{t-1} + U_f h_{t-1} + b_f) \qquad (1\text{-}1)$$

$$i_t = \sigma(W_i x_{t-1} + U_i h_{t-1} + b_i) \qquad (1\text{-}2)$$

$$o_t = \sigma(W_o x_{t-1} + U_o h_{t-1} + b_o) \qquad (1\text{-}3)$$

$$\tilde{c}_t = \tanh(W_c x_{t-1} + U_c h_{t-1} + b_c) \qquad (1\text{-}4)$$

$$C_t = f_t \circ C_{t-1} + i_t \circ \tilde{c}_t \qquad (1\text{-}5)$$

$$h_t = o_t \circ tanh(C_t) \qquad (1\text{-}6)$$

Herein, $\circ$ represents a Hadamard product (Hadamard product), $W_f$, $W_i$, $W_c$, and $W_o$ respectively represent weight matrices of the neurons for $x_{t-1}$, $U_f$, $U_i$, $U_c$, and $U_o$ respectively represent weight matrices of the neurons for $h_{t-1}$, and $b_f$, $b_i$, $b_o$, and $b_c$ may respectively represent biases in the neurons. It should be understood that the bias in the neuron may be 0.

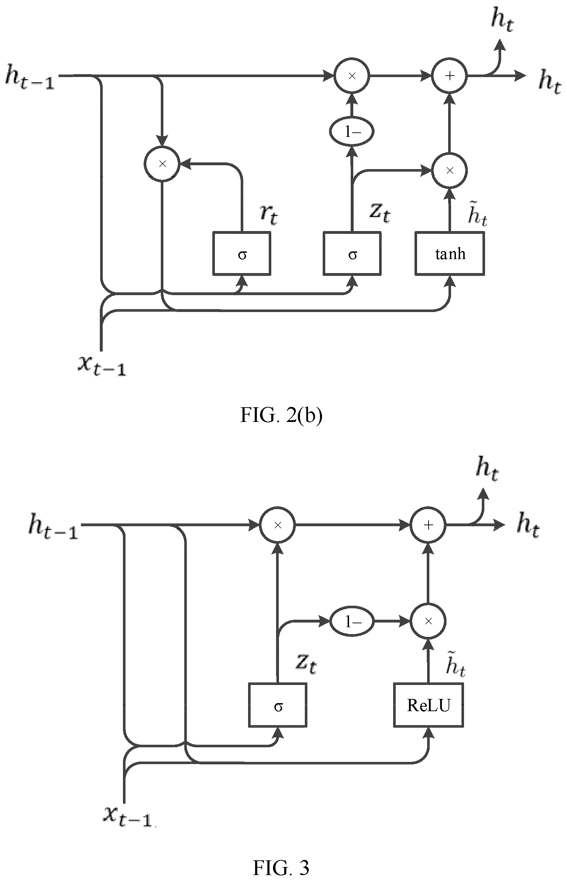

(3) A gated recurrent unit (Gated recurrent unit, GRU) neural network is an LSTM-based recurrent neural network variant. The gated recurrent unit neural network combines a forget gate and an input gate in the LSTM into a separate update gate (update gate), and further combines a cell state and a hidden state and makes some modifications. A network structure of the GRU is simpler than that of the LSTM. FIG. 2(a) and FIG. 2(b) are diagrams of a gated recurrent unit neural network according to an embodiment of this application. As shown in FIG. 2(a), an input of a CRU includes $h_{t-1}$ and $x_{t-1}$, and an output of the CRU includes $h_{t-1}$. As shown in FIG. 2(b), the CRU has two gate structures. In FIG. 2(b), network layers at which the two σs from left to right are located may be respectively referred to as a reset gate (Reset gate) layer and an update gate (update gate) layer. Herein, $r_t$ represents an output value of σ at the reset gate layer, and $z_t$ represents an output value of σ at the update gate layer. A value output by a neuron using a tanh function in the GRU may be referred to as a candidate hidden state (candidate hidden state) vector. In other words, a candidate hidden state vector $\bar{h}_t$ is output. Calculation formulas of the GRU shown in FIG. 2(b) may be expressed as Formulas (2-1) to (2-4):

$$z_t = \sigma(W_z x_{t-1} + U_z h_{t-1} + b_z) \tag{2-1}$$

$$r_t = \sigma(W_r x_{t-1} + U_r h_{t-1} + b_r) \tag{2-2}$$

$$\widetilde{h_t} = tanh(W_h x_{t-1} + U_h(r_t \circ h_{t-1}) + b_h) \tag{2-3}$$

$$h_t = (1 - z_t) \circ h_{t-1} + z_t \circ \tilde{h}_t \tag{2-4}$$

Herein, $W_z$, $W_r$, and $W_h$ respectively represent weight matrices of the neurons for $x_{t-1}$, $U_z$, $U_r$, and $U_h$ respectively represent weight matrices of the neurons for $h_{t-1}$, and $b_z$, $b_r$, and $b_h$ may respectively represent biases in the neurons. It should be understood that the bias in the neuron may be 0.

It should be noted that the LSTM and the GRU are two recurrent neural networks provided in this application. Actually, the recurrent neural network in this application is not limited thereto. The recurrent neural network in this application may include a first-type recurrent neural network (for example, a recurrent neural network that uses only a hidden state, such as a gated recurrent unit neural network or a bidirectional gated recurrent unit neural network), and may further include a second-type recurrent neural network (for example, a recurrent neural network that uses a cell state and a hidden state, such as a long short-term memory neural network or a bidirectional long short-term memory neural network). In addition to the two types of recurrent neural networks, in the data processing method in this application, another neural network that needs to use a state vector to cache historical information may be actually further applied. In addition, the recurrent neural network in this application may be further used for signal processing in another field, for example, further used to process a serialized signal such as a time signal or a communication signal.

To better understand the solutions of embodiments of the data processing method in this application, in this application, description is provided by using an example in which the gated recurrent unit neural network represents a first-type recurrent neural network, and the long short-term memory neural network represents a second-type recurrent neural network. A processing process of another type of recurrent neural network is similar to that of the LSTM or the GRU. In addition, in this application, a neuron that uses a sigmoid function in a recurrent neural network is referred to as a gated neuron, and a neuron that uses a tanh function in a recurrent neural network is referred to as a candidate neuron.

With continuous development of artificial intelligence (artificial intelligence, AI) technologies, a recurrent neural network has a large quantity of application requirements in a terminal device, for example, applications such as voice wake-up, speech noise cancellation, and speech recognition. In a current recurrent neural network, a quantity of parameters in an entire network may usually reach a level of hundreds of thousands, millions, or tens of millions. If a 32-bit floating-point number is used for representation, a memory or a cache of hundreds of megabytes is needed. However, memory and cache resources of a terminal device are very limited. How to reduce the quantity of parameters in the recurrent neural network to adapt to the terminal device is an urgent problem to be resolved. In addition, because a calculation amount in the recurrent neural network is positively correlated with a time step of input data, floating point operations per second (Floating Point Operations per second, FLOPS) of the recurrent neural network including hundreds of thousands of parameters may reach a level of tens of millions. When the terminal device performs computing, the recurrent neural network needs to consume a large quantity of computing resources. Therefore, the calculation amount in the recurrent neural network needs to be reduced. Therefore, how to reduce the calculation amount and the quantity of parameters in the recurrent neural network and accelerate a network computing speed with network precision being ensured becomes an urgent problem to be resolved.

Currently, to reduce the quantity of parameters and the calculation amount in the recurrent neural network, the recurrent neural network is usually pruned. For example, some gated neurons in the recurrent neural network are usually directly deleted, and a state is kept and updated by using a remaining gated neuron. FIG. 3 is a diagram of a pruned gated recurrent unit neural network according to an embodiment of this application. As shown in FIG. 3, a gated neuron in an original GRU may be deleted, and a calculation formula of a GRU obtained after the gated neuron is deleted may be expressed as Formulas (3-1) to (3-3):

$$z_t = \sigma(BN(W_z x_{t-1}) + U_z h_{t-1}) \qquad (3\text{-}1)$$

$$\tilde{h}_t = ReLU(BN(W_h x_{t-1}) + U_h h_{t-1}) \qquad (3\text{-}2)$$

$$h_t = z_t \circ h_{t-1} + (1 - z_t) \circ \tilde{h}_t \qquad (3\text{-}3)$$

Herein, ReLU represents a ReLU function, and BN represents batch normalization (Batch Normalization). Compared with the GRU shown in FIG. 2(b), a quantity of parameters in the pruned GRU is reduced, in other words, a weight matrix is reduced. However, in this manner, a quantity of gated neurons in the recurrent neural network is reduced. This affects control of the recurrent neural network on a hidden state. In addition, this manner is usually applicable to a recurrent neural network including a plurality of gated neurons, and does not have universality.

In view of this, this application provides several data processing methods. According to a data processing method in embodiments of this application, a complete hidden state vector and a complete gated vector can be generated through lightweight processing such as linear transformation based on a hidden state vector and a gated vector that are generated by a recurrent neural network, to effectively reduce a quantity of parameters and a calculation amount of neurons in the recurrent neural network, thereby improving running efficiency of the recurrent neural network. The data processing method in embodiments of this application is applicable to various data processing by using the recurrent neural network, so that the quantity of parameters and the calculation amount in the network can be reduced when network precision is ensured, thereby improving processing efficiency of target data.

Specifically, embodiments of this application provide an extension manner of a hidden state vector for constructing a high-efficiency recurrent neural network. To be specific, lightweight processing such as matrix transformation, normalization, and nonlinear transformation is performed on the hidden state vector generated by the recurrent neural network. This is equivalent to extending the hidden state vector through calculation at a lightweight level, to obtain a complete state vector, thereby constructing a miniaturized model. Embodiments of this application further provide a supplementing manner of a gated vector for constructing a high-efficiency recurrent neural network. To be specific, lightweight processing such as matrix transformation, normalization, and nonlinear transformation is performed on a gated vector generated by using a gated neuron, to obtain a supplementary gated vector. This is equivalent to supplementing the gated vector through calculation at a lightweight level, thereby constructing a miniaturized model.

The data processing method in embodiments of this application can be applied to processing of various serialized target data, for example, data processing scenarios such as voice data, text data, and image data, to reduce the quantity of parameters and the calculation amount in the recurrent neural network. This improves a network running speed, and further improves processing efficiency of target data. In addition, the recurrent neural network can be deployed on a terminal device. For example, the following briefly describes a voice data processing scenario.

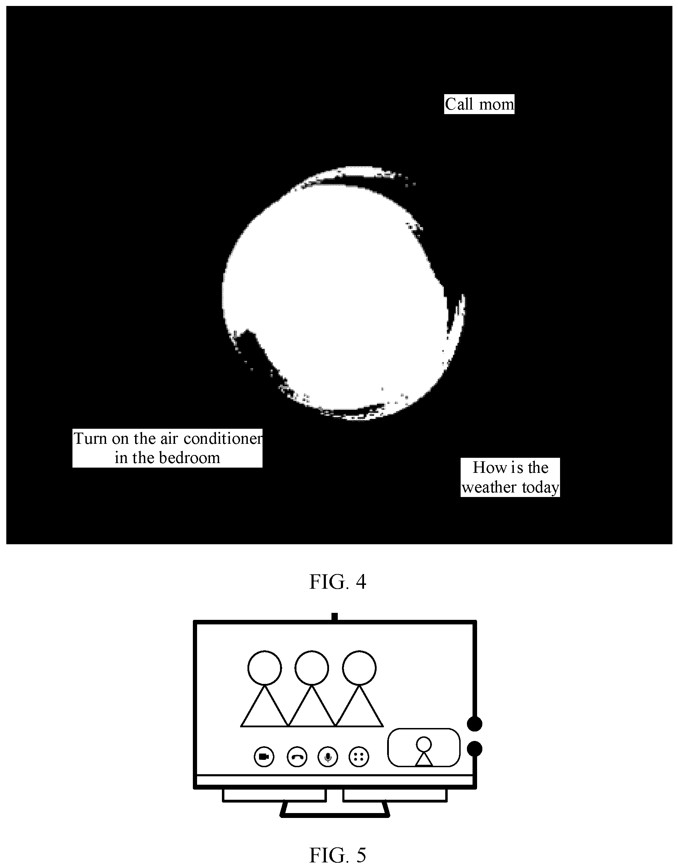

Voice wake-up in a voice assistant: FIG. 4 is a diagram of a voice wake-up interface according to an embodiment of this application. As shown in FIG. 4, a user may wake up a voice assistant on a terminal device by saying a specified word or sentence (for example, "Call mom", "Turn on the air conditioner in the bedroom", or "How is the weather today") to the terminal device (for example, a smart watch or a smart speaker). The data processing method in embodiments of this application may be used as a voice wake-up model, to reduce a quantity of parameters and a calculation amount. By using a small-sized and fast-running voice wake-up model, power consumption of the terminal device can be reduced, and user experience can be further improved. For example, the smart watch (for example, a microphone on the smart watch) may obtain voice data sent by a user, extract a feature sequence of the voice data by using the foregoing voice wake-up model deployed on the smart watch, output a text sequence corresponding to the voice data, and detect whether the text sequence corresponding to the voice data matches the specified word or sequence of the voice assistant. This is equivalent to a keyword detection process.

Speech noise cancellation in a MeeTime call: FIG. 5 is a diagram of a video call interface according to an embodiment of this application. As shown in FIG. 5, when a user uses a terminal device (for example, a smartphone or a smart screen) to answer a video call or a voice call, speech noise cancellation can automatically cancel background noise in a speech of a peer party, thereby improving call quality. Because speech noise cancellation is a real-time signal processing task and needs to be deployed on an electronic device, a size and a running speed of a speech noise cancellation model are very important. The data processing method in embodiments of this application may be used as a speech noise cancellation model, to reduce a quantity of parameters and a calculation amount in the speech noise cancellation model, thereby improving a running speed of the speech noise cancellation model. For example, the smart screen (for example, a microphone on the smart screen) may obtain voice data of a user in a call process, extract a feature sequence of the voice data by using the foregoing speech noise cancellation model deployed on the smart screen, and output voice data after noise cancellation. This is equivalent to a real-time signal processing process.

Speech recognition in a voice input method: A user can use the voice input method to convert, into text, content that the user says. The data processing method in embodiments of this application may be used as a speech recognition model, to reduce a quantity of parameters and a calculation amount in the speech recognition model, thereby improving speech recognition efficiency. For example, the smartphone (for example, a microphone on the smartphone) may obtain voice data input when a user uses a voice input method, extract a feature sequence of the voice data by using the speech recognition model deployed on the smartphone, and output a text sequence corresponding to the target data.

It should be understood that the data processing method in embodiments of this application may be applied to various scenarios in which voice data needs to be processed, or may be applied to various scenarios in which a terminal device processes voice data by using a recurrent neural network. The scenarios include but are not limited to the foregoing three application scenarios. For example, the data processing method may be further used to recognize text in image data, and may be further used to translate text data.

The terminal device in this application may alternatively be another terminal device. The data processing method in embodiments of this application may be deployed on various terminal devices through software or hardware reconstruction, so that storage resources and computing resources required for deploying the recurrent neural network can be reduced, thereby improving processing efficiency of target data. For example, the terminal device in this application may include but is not limited to a terminal device such as a tablet computer, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal Digital Assistant, PDA), an artificial intelligence (artificial intelligence) device, and a wearable device. The wearable device may be a smart watch, a smart band, a wireless headset, smart glasses, a smart helmet, a glucometer, a blood pressure meter, or the like.

The terminal device in this application may be a touchscreen device, may be a non-touchscreen device, or may have no screen. The touchscreen device may be controlled by performing tapping, sliding, or the like on a display by using a finger, a stylus, or the like. The non-touchscreen device may be connected to an input device such as a mouse, a keyboard, or a touch panel. The terminal device is controlled by using the input device. The terminal device that has no screen may be, for example, a Bluetooth speaker without a screen. For example, in a speech noise cancellation scenario, the user may tap a corresponding control on the terminal device by using a finger, to trigger an operation of a voice call or a video call. In this way, in the data processing method in this application, target data can be obtained in response to the operation of the user, to perform speech noise cancellation.

The terminal device in this application may be a device with a wireless connection function. The wireless connection function means that the terminal device may be connected to another terminal device or a server in a wireless connection manner such as Wi-Fi or Bluetooth. The terminal device in this application may also have a function of performing communication through a wired connection. For example, in the speech noise cancellation scenario, target data of both parties in a call can be transmitted through communication between a terminal device and a server, so that noise cancellation processing is performed on transmitted voice data on a terminal device on which the data processing method in this application is deployed.

It should be noted that the data processing method in embodiments of this application can also be deployed on a server. The server may be located on a cloud or located locally, may be a physical device, or may be a virtual device such as a virtual machine or a container. The server has a wireless communication function. The wireless communication function may be set on a chip (system) or another component or part of the server. The server may be a device with a wireless connection function. The wireless connection function means that the server may be connected to another server or terminal device in a wireless connection manner such as Wi-Fi or Bluetooth. The server in this application may also have a function of performing communication through a wired connection. For example, the server in this application may be located on a cloud, communicate with the terminal device, receive target data sent by the terminal device, output a processing result (for example, voice data obtained after speech noise cancellation and a text sequence obtained through speech recognition) of the target data by using the data processing method deployed on the server, and return the processing result to the terminal device.

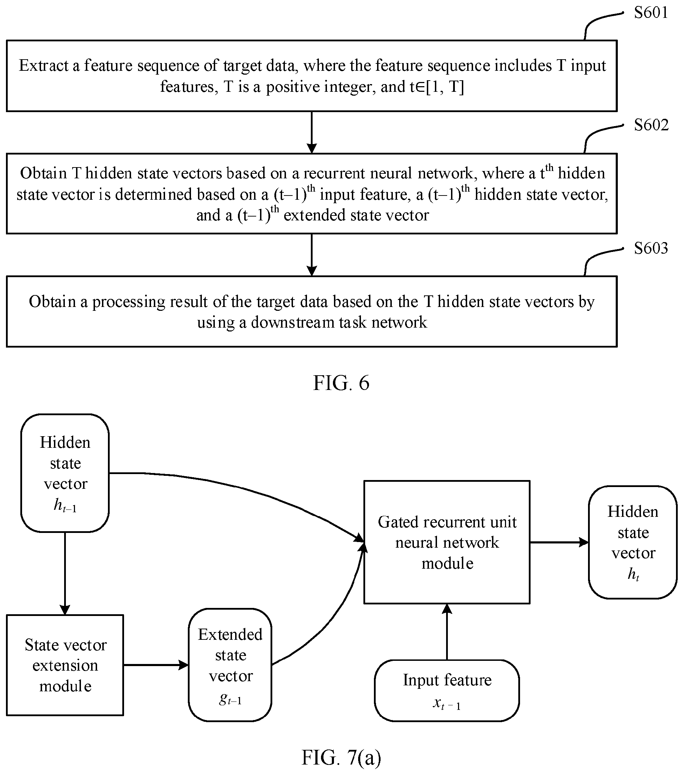

The following describes in detail the data processing method provided in embodiments of this application by using FIG. 6 to FIG. 16(c).

FIG. 6 is a flowchart of a data processing method according to an embodiment of this application. The method may be performed by a data processing apparatus that can process data. For example, the method may be performed by the foregoing various terminal devices or servers. As shown in FIG. 6, the method includes the following steps.

Step S601: Extract a feature sequence of target data, where the feature sequence includes T input features, and T is a positive integer.

The target data may include at least one of the following: voice data, image data, and text data. The target data may be target data collected by a data collection apparatus (such as a microphone) of the foregoing terminal device, or may be target data obtained by the terminal device from a local storage or a cloud server, or the like. A source of the target data is not limited in this application.

For example, for the voice data, a feature sequence of the voice data may be extracted by using a mel-frequency cepstral coefficient (Mel-Frequency Cepstral Coefficient, MFCC). The MFCC is a cepstral parameter extracted in a mel Mel scale frequency domain. A mel scale is used to describe a nonlinear feature of a human ear frequency. The MFCC may include pre-emphasis, frame segmentation, windowing, fast Fourier transform, a mel filter bank, discrete cosine transform, and the like. The MFCC is used to extract an acoustic feature from a segment of voice data. Because some information in the voice data is irrelevant to speech recognition, and makes speech recognition more complex, acoustic feature extraction is performed on the voice data, and the voice data may be described by using a given quantity of signal components, to extract a feature sequence that helps data processing.

It should be understood that, in a process of extracting the acoustic feature of the voice data by using the MFCC, the entire voice data is usually divided into a plurality of segments based on a time step (that is, a window movement step) for feature extraction. In this case, the feature sequence may include the T sequentially extracted input features, and the T input features may be arranged in a time order.

It should be noted that a feature extraction manner of the target data is not limited in this embodiment of this application. For example, a gammatone frequency cepstral coefficient (Gammatone Frequency Cepstral Coefficient, GFCC), a shifted delta cepstrum (Shifted Delta Cepstra, SDC), or the like may be further used for the voice data, and a convolutional neural network may be used for the image data.

Step S602: Obtain T hidden state vectors based on a recurrent neural network, where a $t^{th}$ hidden state vector is determined based on a $(t-1)^{th}$ input feature, a $(t-1)^{th}$ hidden state vector, and a $(t-1)^{th}$ extended state vector, and the $(t-1)^{th}$ extended state vector is obtained by performing lightweight processing based on the $(t-1)^{th}$ hidden state vector, and $t \in [1, T]$.

The lightweight processing may include linear transformation and/or nonlinear transformation. The linear transformation and the nonlinear transformation may be transformation manners at a lightweight level. Matrix transformation, normalization, an activation function, or the like may be used for the linear transformation. Convolution processing or the like may be used for the nonlinear transformation.

The lightweight processing at the lightweight level is performed based on the $(t-1)^{th}$ hidden state vector to obtain the $(t-1)^{th}$ extended state vector. This is equivalent to extending the hidden state vector through calculation at the lightweight level. Because a quantity of parameters in the recurrent neural network is positively correlated with a dimension of a hidden state vector output by the recurrent neural network, the hidden state vector is extended through calculation at the lightweight level, so that the recurrent neural network can output a hidden state vector of a small dimension, thereby reducing the quantity of parameters in the recurrent neural network and reducing an overall calculation amount.

It should be understood that step S602 is a recursive recurrent process. A $0^{th}$ hidden state vector may be a customized initial value, for example, may be 0 or any empirical value. $1^{st}$ to $T^{th}$ hidden state vectors may be output values of the recurrent neural network.

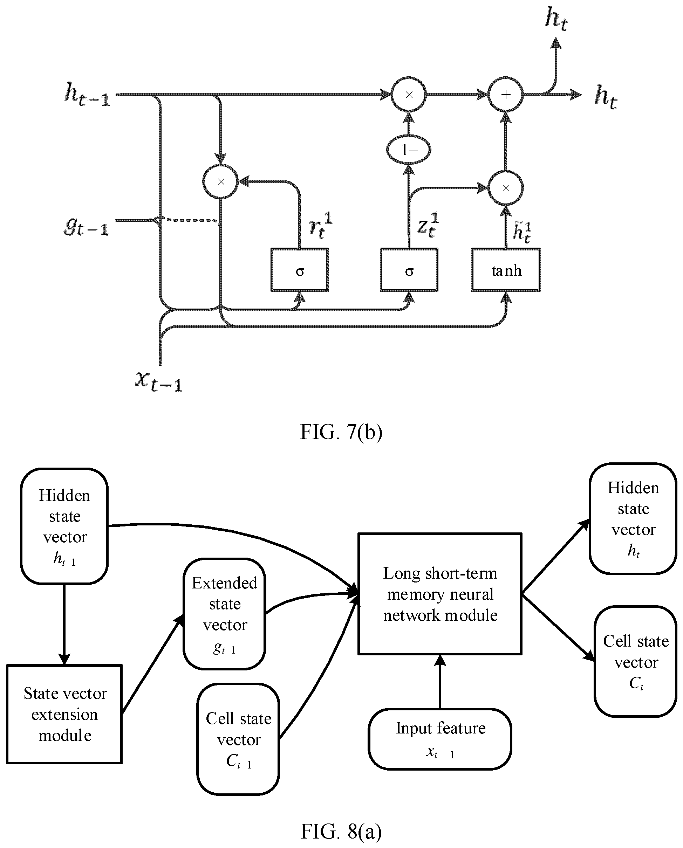

As described above, the recurrent neural network may include a first-type recurrent neural network represented by a gated recurrent unit neural network. FIG. 7(a) and FIG. 7(b) are diagrams of a process of determining a hidden state vector according to an embodiment of this application. When the recurrent neural network includes the first-type recurrent neural network, with reference to FIG. 7(a) and FIG. 7(b), the following describes a process of determining a hidden state vector by using the first-type recurrent neural network.

As shown in FIG. 7(a), a $(t-1)^{th}$ hidden state vector $h_{t-1}$ output by a gated recurrent unit neural network module may be input to a state vector extension module. The state vector extension module may perform lightweight processing on the $(t-1)^{th}$ hidden state vector $h_{t-1}$ to obtain a $(t-1)^{th}$ extended state vector $g_{t-1}$. Then, a $(t-1)^{th}$ input feature $x_{t-1}$, the $(t-1)^{th}$ hidden state vector $h_{t-1}$, and the $(t-1)^{th}$ extended state vector $g_{t-1}$ are input to the gated recurrent unit neural network module, to output a $t^{th}$ hidden state vector $h_t$. In this embodiment of this application, a $0^{th}$ input feature to a $(T-1)^{th}$ input feature in the T input features that are counted from 0 are sequentially input to the recurrent neural network.

As shown in FIG. 7(b), after the $(t-1)^{th}$ input feature $x_{t-1}$, the $(t-1)^{th}$ hidden state vector $h_{t-1}$, and the $(t-1)^{th}$ extended state vector $g_{t-1}$ are input to the gated recurrent unit neural network module, a processing process in which the gated recurrent unit neural network in the module outputs the $t^{th}$ hidden state vector $h_t$ may be expressed as Formulas (4-1) to (4-4):

$$z_t^1 = \sigma(W_z x_{t-1} + U_z([h_{t-1}, g_{t-1}]) + b_z) \tag{4-1}$$

$$r_t^1 = \sigma(W_r x_{t-1} + U_r([h_{t-1}, g_{t-1}]) + b_r) \tag{4-2}$$

$$\tilde{h}_t^1 = tanh(W_h x_{t-1} + U_h(r_t^1 \circ h_{t-1}) + G_h g_{t-1}), \text{ or } \tilde{h}_t^1 = tanh(W_h x_{t-1} + U_h(r_t^1 \circ h_{t-1}) + G_h(r_t^g \circ g_{t-1})), \text{ or } \tilde{h}_t^1 = tanh(W_h x_{t-1} + U_h(r_t^1 \circ h_{t-1})) \tag{4-3}$$

$$h_t = (1 - z_t^1) \circ h_{t-1} + z_t^1 \circ \tilde{h}_t^1 \qquad\qquad (4\text{-}4)$$

Herein, $[h_{t-1}, g_{t-1}]$ represents a spliced state vector obtained by splicing $h_{t-1}$ and $g_{t-1}$, $G_h$ represents a weight matrix of a neuron for $g_{t-1}$, $z_t^1$ represents a gated vector output by a gated neuron at an update gate layer, $r_t^1$ represents a gated vector output by a gated neuron at a reset gate layer, $\tilde{h}_t^1$ represents a candidate hidden state vector output by a candidate neuron, and $r_t^g$ represents an intermediate gated vector that is obtained by performing lightweight processing on $r_t^1$ and that has the same dimension as $g_{t-1}$. It should be understood that dimensions of $h_{t-1}$ and $g_{t-1}$ may be different. If it is expected to perform same processing on $g_{t-1}$ *as* $h_{t-1}$ when $\tilde{h}_t^1$ is determined, $r_t^1$ needs to be transformed into a gated vector $r_t^g$ of the same dimension as $g_{t-1}$. The lightweight processing may be linear transformation and/or nonlinear transformation. A dashed line in FIG. 7(b) indicates that when a candidate hidden state vector $\tilde{h}_t^1$ is determined, the $(t-1)^{th}$ extended state vector $g_{t-1}$ may be input to a candidate neuron tanh, or the $(t-1)^{th}$ extended state vector $g_{t-1}$ may not be input to a candidate neuron tanh. When the $(t-1)^{th}$ extended state vector $g_{t-1}$ is input to the candidate neuron tanh, the candidate neuron may directly process $g_{t-1}$, or may process a product of $g_{t-1}$ and $r_t^g$. For details, refer to descriptions and explanations of the following Formula (4-3).

Formula (4-1) and Formula (4-2) indicate to obtain two gated vectors $z_t^1$ and $r_t^1$ by inputting the $(t-1)^{th}$ input feature $x_{t-1}$ and the spliced state vector $[h_{t-1}, g_{t-1}]$ to two gated neurons in the gated recurrent unit neural network. Formula (4-3) indicates to obtain a candidate hidden state vector $\tilde{h}_t^1$ by inputting the $(t-1)^{th}$ input feature $x_{t-1}$, a product ( $r_t^1 \circ h_{t-1}$ ) of the $(t-1)^{th}$ hidden state vector $h_{t-1}$ and the gated vector $r_t^1$, and the $(t-1)^{th}$ extended state vector $g_{t-1}$ to a candidate neuron in the gated recurrent unit neural network; or obtain a candidate hidden state vector $\tilde{h}_t^1$ by inputting the $(t-1)^{th}$ input feature $x_{t-1}$, a product ( $r_t^1 \circ h_{t-1}$ ) of the $(t-1)^{th}$ hidden state vector $h_{t-1}$ and the gated vector $r_t^1$, and a product ( $r_t^g \circ g_{t-1}$ ) of the $(t-1)^{th}$ extended state vector $g_{t-1}$ and the intermediate gated vector $r_t^g$ to a candidate neuron in the gated recurrent unit neural network; or obtain a candidate hidden state vector $\tilde{h}_t^1$ by inputting the $(t-1)^{th}$ input feature $x_{t-1}$ and a product ( $r_t^g \circ g_{t-1}$ ) of the $(t-1)^{th}$ hidden state vector $h_{t-1}$ and the gated vector $r_t^1$ to a candidate neuron in the gated recurrent unit neural network. Formula (4-4) indicates to obtain the $t^{th}$ hidden state vector $h_t$ by multiplying the gated vector $z_t^1$ by the candidate hidden state vector $\tilde{h}_t^1$, multiplying a difference between a unit vector and the gated vector $z_t^1$ by the $(t-1)^{th}$ hidden state vector $h_{t-1}$, and adding two multiplication results.

As described above, the quantity of parameters in the recurrent neural network is positively correlated with the dimension of the hidden state vector output by the recurrent neural network. The hidden state vector is extended through calculation at the lightweight level, so that the recurrent neural network can output a hidden state vector of a small dimension, thereby reducing the quantity of parameters in the recurrent neural network. It is assumed that biases of all neurons in the gated recurrent unit neural networks in FIG. 2(b) and FIG. 7(b) are all 0. It may be deduced by using the following Formulas (5-1) to (5-8) that: A total quantity of parameters in the state vector extension module and the gated recurrent unit neural network module in FIG. 7(a) may be compressed to at least $\frac{3}{4}r_{g1}$ times the quantity of parameters in the gated recurrent unit neural network in FIG. 2(b). **In** addition, because all the neurons in the gated recurrent unit neural network perform linear processing, the calculation amount in the gated recurrent unit neural network is approximately directly proportional to the quantity of parameters in the gated recurrent unit neural network. Therefore, the calculation amount in FIG. 7(a) is also compressed to at least $\frac{3}{4}r_{g1}$ times the calculation amount in FIG. 2(b).

It can be obtained based on FIG. 2(b) that

$$Params_{gru} = 3 \times (dim_{h1} + dim_x) \times dim_{h1}$$

$$(5\text{-}1)$$

It can be obtained based on FIG. 7(a) and FIG. 7(b) that

$$Params_{ghostgru} = 3 \times \left(dim_{hg1} + dim_g + dim_x\right) \times dim_{hg1} + dim_{hg1} \times dim_g \qquad (5\text{-}2)$$

$$\text{Assuming that } r_{g1} = dim_{h1} \div dim_{hg1} \qquad (5\text{-}3)$$

$$\text{Assuming that } dim_{h1} = dim_g + dim_{hg1} \qquad (5\text{-}4)$$

$$\text{So } Params_{ghostgru} = 3 \times (dim_{h1} + dim_x) \times dim_{hg1} + dim_{hg1} \times dim_g \qquad (5\text{-}5)$$

$$\text{Because } dim_{hg1} \times dim_g < dim_{hg1} \times (dim_{h1} + dim_x) \qquad (5\text{-}6)$$

$$\text{So } Params_{ghostgru} < 4 \times (dim_{h1} + dim_x) \times dim_{hg1} \qquad (5\text{-}7)$$

$$\text{So } \frac{Params_{gru}}{Params_{ghostgru}} > \frac{3 \times (dim_{h1} + dim_x) \times dim_{h1}}{4 \times (dim_{h1} + dim_x) \times dim_{hg1}} = \frac{3 \times dim_{h1}}{4 \times dim_{hg1}} = \frac{3}{4}r_{g1} \qquad (5\text{-}8)$$

Herein, $Params_{gru}$ represents the total quantity of parameters in the gated recurrent unit neural network in FIG. 2(b), $Params_{ghostgru}$ represents the total quantity of parameters in the state vector extension module and the gated recurrent unit neural network module in FIG. 7(a), $dim_{h1}$ represents a dimension of a hidden state vector in FIG. 2(b), $dim_x$ represents a dimension of an input feature, $dim_{hg1}$ represents a dimension of a hidden state vector in FIG. 7(a), and $dim_g$ represents a dimension of an extended state vector. $3 \times (dim_{h1} + dim_x) \times dim_{h1}$ in Formula (5-1) represents the total quantity of parameters in the gated recurrent unit neural network in FIG. 2(b). In Formula (5-2), $dim_{hg1} \times dim_g$ represents a quantity of parameters in the state vector extension module in FIG. 7(a), and $3 \times (dim_{hg1} + dim_g + dim_x) \times dim_{hg1}$ represents a quantity of parameters in the gated recurrent unit neural network module in FIG. 7(a) and FIG. 7(b).

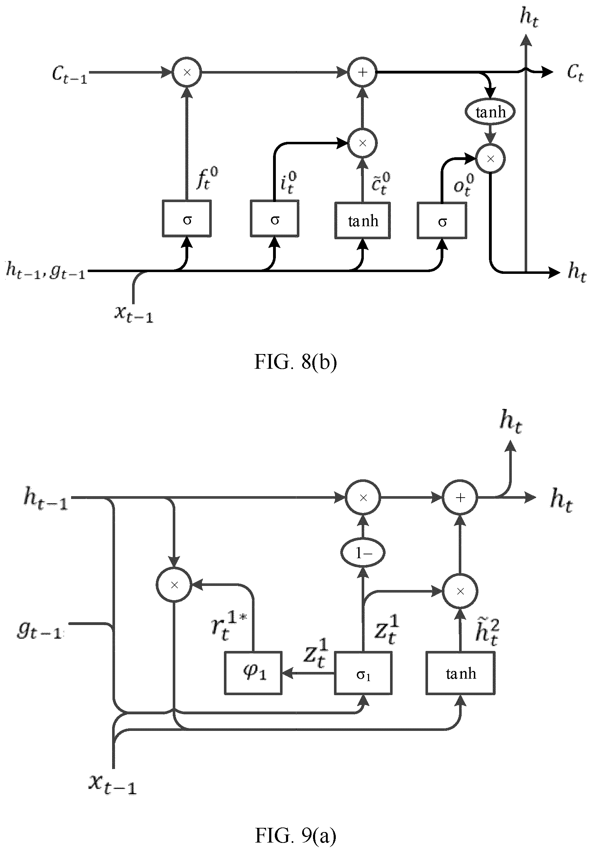

As described above, the recurrent neural network may include a second-type recurrent neural network represented by a long short-term memory neural network. When the recurrent neural network includes the second-type recurrent neural network, a process of determining a hidden state vector by using the second-type recurrent neural network is described with reference to FIG. 8(a) and FIG. 8(b).

FIG. 8(a) and FIG. 8(b) are diagrams of a process of determining a hidden state vector according to an embodiment of this application. As shown in FIG. 8(a), a (t-1)th hidden state vector $h_{t-1}$ output by a long short-term memory neural network module may be input to a state vector extension module. The state vector extension module may perform lightweight processing on the (t-1)th hidden state vector $h_{t-1}$ to obtain a (t-1)th extended state vector $g_{t-1}$. Then, a (t-1)th input feature $x_{t-1}$, the (t-1)th hidden state vector $h_{t-1}$, the (t-1)th extended state vector $g_{t-1}$, and a (t-1)th cell state vector $C_{t-1}$ are input to the long short-term memory neural network module, to output a tth hidden state vector $h_t$ and a tth cell state vector $C_t$.

As shown in FIG. 8(b), after the (t-1)th input feature $x_{t-1}$, the (t-1)th hidden state vector $h_{t-1}$, the (t-1)th extended state vector $g_{t-1}$, and the (t-1)th cell state vector $C_{t-1}$ are input to the long short-term memory neural network module, a processing process in which a long short-term memory neural network in the module outputs the $t^{th}$ hidden state vector $h_t$ and the $t^{th}$ cell state vector $C_t$ may be expressed as Formulas (6-1) to (6-6):

$$f_t^0 = \sigma(W_f x_{t-1} + U_f([h_{t-1}, g_{t-1}]) + b_f) \qquad (6\text{-}1)$$

$$i_t^0 = \sigma(W_i x_{t-1} + U_i([h_{t-1}, g_{t-1}]) + b_i) \qquad (6\text{-}2)$$

$$o_t^0 = \sigma(W_o x_{t-1} + U_o([h_{t-1}, g_{t-1}]) + b_o) \qquad (6\text{-}3)$$

$$\tilde{c}_t^0 = \tanh(W_c x_{t-1} + U_c([h_{t-1}, g_{t-1}]) + b_c) \qquad (6\text{-}4)$$

$$C_t = f_t^0 \circ C_{t-1} + i_t^0 \circ \tilde{c}_t^0 \qquad (6\text{-}5)$$

$$h_t = o_t^0 \circ tanh(C_t) \qquad (6\text{-}6)$$

Herein, $[h_{t-1}, g_{t-1}]$ represents a spliced state vector obtained by splicing $h_{t-1}$ and $g_{t-1}$. A processing process of Formulas (6-1) to (6-6) may be expressed as follows: inputting the $(t-1)^{th}$ input feature $x_{t-1}$ and the spliced state vector $[h_{t-1}, g_{t-1}]$ to three gated neurons and a candidate neuron in the long short-term memory neural network, to obtain three gated vectors $f_t^0$, $i_t^0$, and $o_t^0$, and a candidate cell state vector $\tilde{c}_t^0$; multiplying the gated vector $f_t^0$ by the $(t-1)^{th}$ cell state vector $C_{t-1}$, and adding a multiplication result and a product of the gated vector $i_t^0$ and the candidate cell state vector $\tilde{c}_t^0$, to obtain the $t^{th}$ cell state vector $C_t$; and then, multiplying the gated vector $o_t^0$ by $tanh(C_t)$, to obtain the $t^{th}$ hidden state vector $h_t$.

It is assumed that biases of all neurons in the long short-term memory neural networks in FIG. 1(b) and FIG. 8(b) are all 0. It may be deduced by using the following Formulas (7-1) to (7-8) that: A total quantity of parameters in the state vector extension module and the long short-term memory neural network module in FIG. 8(a) may be compressed to at least $\frac{4}{5}r_{g2}$ times a quantity of parameters in the long short-term memory neural network in FIG. 1(b). In addition, because all the neurons in the long short-term memory neural network perform linear processing, a calculation amount in the long short-term memory neural network is approximately directly proportional to the quantity of parameters in the long short-term memory neural network. Therefore, the calculation amount in FIG. 8(a) is also compressed to at least $\frac{4}{5}r_{g2}$ times a calculation amount in FIG. 1(b).

It can be obtained based on FIG. 1(b) that

$$Params_{lstm} = 4 \times (dim_{h2} + dim_x) \times dim_{h2}$$
$$(7\text{-}1)$$

It can be obtained based on FIG. 8(a) and FIG. (b) that

$$Params_{ghostlstm} = 4 \times (dim_{hg2} + dim_g + dim_x) \times dim_{hg2} + dim_{hg2} \times dim_g \qquad (7\text{-}2)$$

$$\text{Assuming that } r_{g2} = dim_{h2} \div dim_{hg2} \qquad (7\text{-}3)$$

$$\text{Assuming that } dim_{h2} = dim_g + dim_{hg2} \qquad (7\text{-}4)$$

$$So\ Params_{ghostlstm} = 4 \times (dim_{h2} + dim_x) \times dim_{hg2} + dim_{hg2} \times dim_g \qquad (7\text{-}5)$$

$$Because\ dim_{hg2} \times dim_g < dim_{hg2} \times (dim_{h2} + dim_x) \qquad (7\text{-}6)$$

$$So\ Params_{ghostlstm} < 5 \times (dim_{h2} + dim_x) \times dim_{hg2} \qquad (7\text{-}7)$$

$$So\ \frac{Params_{lstm}}{Params_{ghostlstm}} > \frac{4 \times (dim_{h2} + dim_x) \times dim_{h2}}{5 \times (dim_{h2} + dim_x) \times dim_{hg2}} = \frac{4 \times dim_{h2}}{5 \times dim_{hg2}} = \frac{4}{5} r_{g2} \qquad (7\text{-}8)$$

Herein, $Params_{lstm}$ represents the total quantity of parameters in the long short-term memory neural network in FIG. 1(b), $Params_{ghostlstm}$ represents the total quantity of parameters in the state vector extension module and the long short-term memory neural network module in FIG. 8(a), $dim_{h2}$ represents a dimension of a hidden state vector in FIG. 1(b), $dim_x$ represents a dimension of an input feature, $dim_{hg2}$ represents a dimension of a hidden state vector in FIG. 8(a), and $dim_g$ represents a dimension of an extended state vector. $4 \times (dim_{h2} + dim_x) \times dim_{h2}$ in Formula (7-1) represents the total quantity of parameters in the long short-term memory neural network in FIG. 1(b). In Formula (7-2), $dim_{hg2} \times dim_g$ represents a quantity of parameters in the state vector extension module in FIG. 8(a), and $4 \times (dim_{hg2} + dim_g + dim_x) \times dim_{hg2}$ represents a quantity of parameters in the long short-term memory neural network module in FIG. 8(a) and FIG. 8(b).

Step S603: Obtain a processing result of the target data based on the T hidden state vectors by using a downstream task network.

It should be understood that the downstream task network may be customized based on a specific downstream task, and different downstream task networks may be used for different downstream tasks. A network structure, a network type, and the like of the downstream task network are not limited in this embodiment of this application. For example, the downstream task may include at least one of the following: a speech recognition task, a speech noise cancellation task, a voice wake-up task, a text recognition task, and a text translation task. Correspondingly, the processing result may include at least one of the following: a speech recognition result of the voice data, a speech noise cancellation result of the voice data, a voice wake-up result of the voice data, a text recognition result of the image data, and a text translation result of the text data.

For example, in the speech recognition task, a text sequence corresponding to voice data may be determined based on T hidden state vectors by using a downstream task network (for example, a decoder network). For example, the decoder network may determine, based on the T hidden state vectors, a probability that each hidden state vector belongs to each word in a language model, and provide a text sequence with a maximum probability as a processing result of the target data. In the voice wake-up task, after a text sequence of semantic data is output by using a downstream task network, whether the text sequence corresponding to the voice data matches a specified word or sentence of a voice assistant may be detected, and a matching result is used as a processing result of the voice data. In the speech noise cancellation task, a processing process reverse to feature extraction in step S601 may be performed on T hidden state vectors, for example, processing reverse to MFCC is performed, to obtain voice data after noise cancellation.

According to this embodiment of this application, because a partial state vector in a complete state vector that currently needs to be input to the recurrent neural network is an extended state vector obtained through lightweight processing, the recurrent neural network may be controlled to output a hidden state vector of a small dimension. In this way, a quantity of parameters and a calculation amount that are required for outputting the hidden state vector by the recurrent neural network can be reduced. A dimension of the hidden state vector output by the recurrent neural network is reduced. However, because an extended state vector obtained by performing lightweight processing on the hidden state vector and the hidden state vector jointly form a complete state vector input to the recurrent neural network, this is equivalent to a supplementary to status information input to the recurrent neural network. In this way, a network computing speed can be improved, network precision can be ensured during data processing, and processing efficiency of the target data can be improved. In addition, a recurrent neural network with a reduced quantity of parameters and a reduced calculation amount can be deployed on a terminal device, and has higher universality.

As described above, the recurrent neural network may include the first-type recurrent neural network represented by the gated recurrent unit neural network. The first-type recurrent neural network includes a reset gate layer and an update gate layer. The reset gate layer is used to control information to be discarded from a hidden state vector (that is, to-be-discarded old information). The update gate layer is used to control information to be added to a hidden state vector (that is, to-be-added new information). Based on the process of determining the hidden state vector shown in FIG. 7(b), when the recurrent neural network includes the first-type recurrent neural network, that a $t^{th}$ hidden state vector is determined based on a $(t-1)^{th}$ input feature, a $(t-1)^{th}$ hidden state vector, and a $(t-1)^{th}$ extended state vector in step S602 may include the following steps:

Step S6021: Determine first gated vectors based on the (t-1)th input feature, the (t-1)th hidden state vector, and the (t-1)th extended state vector respectively by using first gated neurons at the reset gate layer and the update gate layer in the first-type recurrent neural network.

Step S6022: Determine, by using a candidate neuron in the first-type recurrent neural network, a first candidate hidden state vector based on the first gated vector determined by the first gated neuron at the reset gate layer, the (t-1)th input feature, and the (t-1)th hidden state vector, or determine a first candidate hidden state vector based on the first gated vector determined by the first gated neuron at the reset gate layer, the (t-1)th input feature, the (t-1)th hidden state vector, and the (t-1)th extended state vector.

Step S6023: Determine the tth hidden state vector based on the first gated vector determined by the first gated neuron at the update gate layer, the (t-1)th hidden state vector, and the first candidate hidden state vector.

In step S6021, in the processing manners shown in the foregoing Formulas (4-1) and (4-2), the first gated vectors may be determined based on the (t-1)th input feature, the (t-1)th hidden state vector, and the (t-1)th extended state vector respectively by using the first gated neurons at the reset gate layer and the update gate layer in the first-type recurrent neural network. Specifically, the (t-1)th hidden state vector and the (t-1)th extended state vector may be spliced, to obtain a spliced state vector. Then, the (t-1)th input feature and the spliced state vector are input to the first gated neurons at the reset gate layer and the update gate layer, to obtain the two first gated vectors $z_t^1$ and $r_t^1$. To be specific, $z_t^1$ may represent the first gated vector output by the first gated neuron at the update gate layer, and $r_t^1$ may represent the first gated vector output by the first gated neuron at the reset gate layer.

In step S6022, the three processing manners shown in the foregoing Formula (4-3) may be used to implement: determining the first candidate hidden state vector $\tilde{h}_t^1$ based on the first gated vector $r_t^1$ determined by the first gated neuron at the reset gate layer, the (t-1)th input feature, and the (t-1)th hidden state vector, or determining the first candidate hidden state vector $\tilde{h}_t^1$ based on the first gated vector $r_t^1$ determined by the first gated neuron at the reset gate layer, the (t-1)th input feature, the (t-1)th hidden state vector, and the (t-1)th extended state vector.

Specifically, when the first candidate hidden state vector is determined based on the first gated vector determined by the first gated neuron at the reset gate layer, the (t-1)th input feature, and the (t-1)th hidden state vector, the (t-1)th input feature and a product of the first gated vector $r_t^1$ and the (t-1)th hidden state vector may be input to the candidate neuron, to obtain the first candidate hidden state vector $\tilde{h}_t^1$; when the first candidate hidden state vector is determined based on the first gated vector determined by the first gated neuron at the reset gate layer, the (t-1)th input feature, the (t-1)th hidden state vector, and the (t-1)th extended state vector, the (t-1)th input feature, the (t-1)th hidden state vector, and a product of the (t-1)th extended state vector and the first gated vector $r_t^1$ may be input to the candidate neuron in the first-type recurrent neural network, to obtain the first candidate hidden state vector $\tilde{h}_t^1$; or the first gated vector $r_t^1$ may be first transformed into an intermediate gated vector $r_t^g$ of the same dimension as the (t-1)th extended state vector, and then the (t-1)th input feature $x_{t-1}$, a product of the (t-1)th hidden state vector and the first gated vector $r_t^1$, and a product of the (t-1)th extended state vector and the intermediate gated vector $r_t^g$ are input to the candidate neuron, to obtain the first candidate hidden state vector $\tilde{h}_t^1$.

In step S6023, with reference to the processing manner shown in the foregoing Formula (4-4), the tth hidden state vector may be determined based on the first gated vector determined by the first gated neuron at the update gate layer, the (t-1)th hidden state vector, and the first candidate hidden state vector. Specifically, the first gated vector $z_t^1$ may be multiplied by the first candidate hidden state vector $\tilde{h}_t^1$, a difference between the unit vector and the first gated vector $z_t^1$ is multiplied by the (t-1)$^{th}$ hidden state vector, and two multiplication results are added, to obtain the t$^{th}$ hidden state vector $h_t$.

According to this embodiment of this application, the t$^{th}$ hidden state vector is determined based on the (t-1)$^{th}$ input feature, the (t-1)$^{th}$ hidden state vector, and the (t-1)$^{th}$ extended state vector by using the first-type recurrent neural network, so that the first-type recurrent neural network can output a hidden state vector of a small dimension, thereby reducing a quantity of parameters and a calculation amount in the first-type recurrent neural network.

Optionally, to further reduce the quantity of parameters and the calculation amount in the recurrent neural network and accelerate a network running speed, a calculation process in the recurrent neural network may be further improved. For example, calculation of a gated neuron is simplified through lightweight processing at the lightweight level. In a possible implementation, when the recurrent neural network includes the first-type recurrent neural network, that a t$^{th}$ hidden state vector is determined based on a (t-1)$^{th}$ input feature, a (t-1)$^{th}$ hidden state vector, and a (t-1)$^{th}$ extended state vector in step S602 may include the following steps:

Step S6024: Determine a first gated vector based on the (t-1)$^{th}$ input feature, the (t-1)$^{th}$ hidden state vector, and the (t-1)$^{th}$ extended state vector by using a first gated neuron at the reset gate layer or the update gate layer in the first-type recurrent neural network.

Step S6025: Perform lightweight processing on the first gated vector by using a first transform neuron in the first-type recurrent neural network, to obtain a first supplementary gated vector.

Step S6026: Determine the t$^{th}$ hidden state vector based on the (t-1)$^{th}$ input feature, the (t-1)$^{th}$ hidden state vector, the first supplementary gated vector, and the first gated vector; or determine the t$^{th}$ hidden state vector based on the (t-1)$^{th}$ input feature, the (t-1)$^{th}$ hidden state vector, the first supplementary gated vector, the first gated vector, and the (t-1)$^{th}$ extended state vector.

In step S6024, the first gated neural network may be a gated neuron at the update gate layer in the first-type recurrent neural network, or a gated neuron at the reset gate layer in the first-type recurrent neural network. The first gated neuron may determine the first gated vector based on the (t-1)$^{th}$ input feature, the (t-1)$^{th}$ hidden state vector, and the (t-1)$^{th}$ extended state vector with reference to the processing process shown in the foregoing Formula (4-1) or (4-2).

In step S6025, the lightweight processing may include linear transformation and/or nonlinear transformation. The linear transformation and the nonlinear transformation may be transformation manners at the lightweight level. Matrix transformation, normalization, an activation function, or the like may be used for the linear transformation. Convolution processing or the like may be used for the nonlinear transformation. It should be understood that a dimension of the first supplementary gated vector obtained by performing lightweight processing on the first gated vector is the same as a dimension of the first gated vector, that is, the same as a dimension of the (t-1)$^{th}$ hidden state vector. In addition, lightweight processing performed by the first transform neuron on the first gated vector may be different from or certainly the same as lightweight processing performed on the (t-1)$^{th}$ hidden state vector in step S602.

Lightweight processing is performed on the first gated vector in step S6025, to obtain the first supplementary gated vector. In comparison with a case in which two gated vectors are output based on the (t-1)$^{th}$ input feature, the (t-1)$^{th}$ hidden state vector, and the (t-1)$^{th}$ extended state vector by using two gated neurons in FIG. 7(b), the quantity of parameters and the calculation amount for generating the gated vector can be reduced, thereby reducing the quantity of parameters and the calculation amount in the entire recurrent neural network and improving a network computing speed.

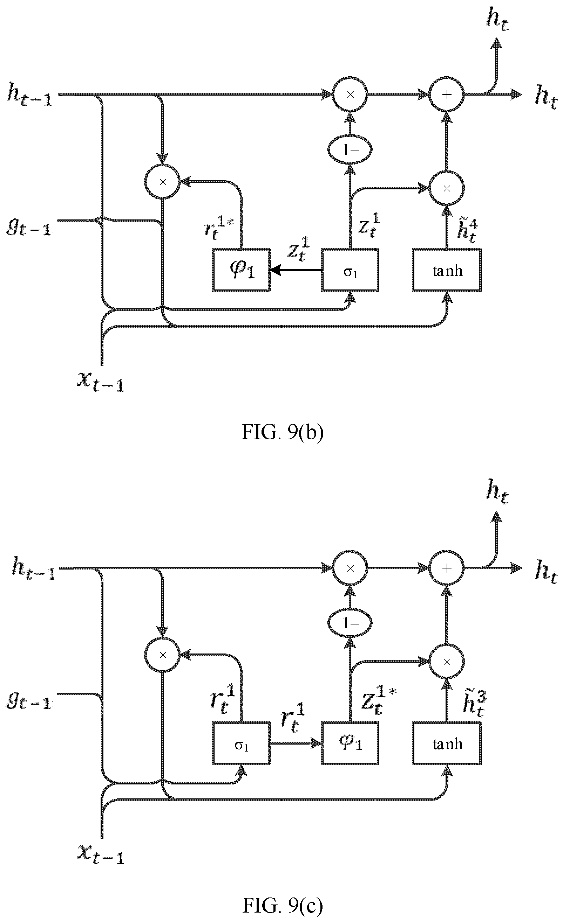

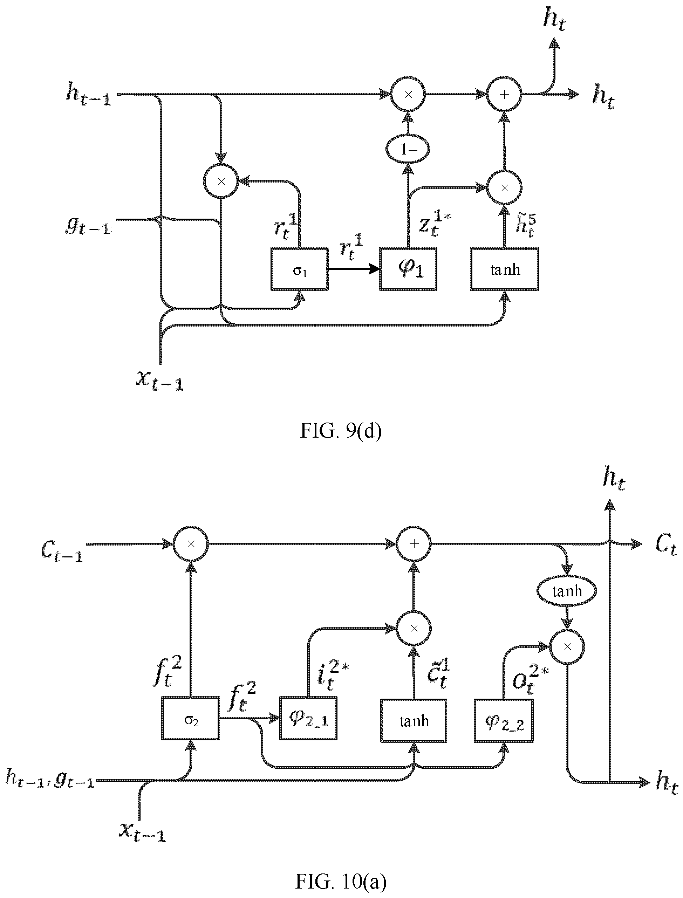

FIG. 9(a), FIG. 9(b), FIG. 9(c), and FIG. 9(d) are diagrams of determining a hidden state vector by using a first-type recurrent neural network according to an embodiment of this application. With reference to FIG. 9(a), FIG. 9(b), FIG. 9(c), and FIG. 9(d), the following separately describes a process of determining the t$^{th}$ hidden state vector in step S6026 when the first gated neuron is a gated neuron at the update gate layer or the reset gate layer in the first-type recurrent neural network.

As shown in FIG. 9(a), $\sigma_1$ represents the first gated neuron at the update gate layer in the first-type recurrent neural network, $\varphi_1$ represents the first transform neuron, $z_t^1$ represents the first gated vector output by the first gated neuron at the update gate layer, $r_t^{1*}$ represents the first supplementary gated vector output by the first transform neuron, and $\tilde{h}_t^2$ represents a second candidate hidden state vector.

As shown in FIG. 9(a), when the first gated neuron is the gated neuron at the update gate layer in the first-type recurrent neural network, determining the t$^{th}$ hidden state vector based on the (t-1)$^{th}$ input feature, the (t-1)$^{th}$ hidden state vector, the first supplementary gated vector, and the first gated vector in step S6025 includes: determining the second candidate hidden state vector based on the (t-1)th input feature, the (t-1)th hidden state vector, and the first supplementary gated vector by using a candidate neuron in the first-type recurrent neural network; and determining the tth hidden state vector based on the first gated vector, the (t-1)th hidden state vector, and the second candidate hidden state vector.

The processing process shown in FIG. 9(a) may be expressed as Formulas (8-1) to (8-4):

$$z_t^1 = \sigma_1(W_z x_{t-1} + U_z([h_{t-1}, g_{t-1}])) \tag{8-1}$$

$$r_t^{1*} = \varphi_1(U_r z_t^1) \tag{8-2}$$

$$\tilde{h}_t^2 = tanh(W_h x_{t-1} + U_h(r_t^{1*} \circ h_{t-1})) \tag{8-3}$$

$$h_t = (1 - z_t^1) \circ h_{t-1} + z_t^1 \circ \tilde{h}_t^2 \tag{8-4}$$

Formula (8-1) indicates to obtain the first gated vector $z_t^1$ by inputting the (t-1)th input feature $x_{t-1}$ and the spliced state vector $[h_{t-1}, g_{t-1}]$ to the first gated neuron at the update gate layer. Formula (8-2) indicates to obtain the first supplementary gated vector $r_t^{1*}$ by inputting the first gated vector $z_t^1$ to the first transform neuron $\varphi_1$. Formula (8-3) indicates to obtain the second candidate hidden state vector $\tilde{h}_t^2$ by multiplying the first supplementary gated vector $r_t^{1*}$ by the (t-1)th hidden state vector $h_{t-1}$, and inputting a multiplication result and the input feature $x_{t-1}$ to the candidate neuron.

Formula (8-4) indicates to obtain the tth hidden state vector $h_t$ by multiplying the first gated vector $z_t^1$ by the second candidate hidden state vector $\tilde{h}_t^2$, multiplying a difference between the unit vector and the first gated vector $z_t^1$ by the (t-1)th hidden state vector $h_{t-1}$, and adding two multiplication results.

As shown in FIG. 9(b), $\sigma_1$ represents the first gated neuron at the update gate layer in the first-type recurrent neural network, $\varphi_1$ represents the first transform neuron, $z_t^1$ represents the first gated vector output by the first gated neuron at the update gate layer, $r_t^{1*}$ represents the first supplementary gated vector output by the first transform neuron, and $\tilde{h}_t^4$ represents a fourth candidate hidden state vector.

As shown in FIG. 9(b), when the first gated neuron is the gated neuron at the update gate layer in the first-type recurrent neural network, determining the tth hidden state vector based on the (t-1)th input feature, the (t-1)th hidden state vector, the first supplementary gated vector, the first gated vector, and the (t-1)th extended state vector in step S6025 includes: determining the fourth candidate hidden state vector based on the (t-1)th input feature, the (t-1)th hidden state vector, the first supplementary gated vector, and the (t-1)th extended state vector by using a candidate neuron in the first-type recurrent neural network; and determining the tth hidden state vector based on the first gated vector, the (t-1)th hidden state vector, and the fourth candidate hidden state vector.

The processing process shown in FIG. 9(b) may be expressed as Formulas (8-1) and (8-2) above and Formulas (8-5) and (8-6) below:

$$\tilde{h}_t^4 = tanh(W_h x_{t-1} + U_h(r_t^{1*} \circ h_{t-1}) + G_h g_{t-1}) , \quad or \quad \tilde{h}_t^4 = tanh(W_h x_{t-1} + U_h(r_t^{1*} \circ h_{t-1}) + G_h(r_t^{g*} \circ g_{t-1})) \tag{8-5}$$

$$h_t = (1 - z_t^1) \circ h_{t-1} + z_t^1 \circ \tilde{h}_t^4 \tag{8-6}$$

Herein, $G_h$ represents a weight matrix of the candidate neuron for the (t-1)th extended state vector, and $r_t^{g*}$

represents an intermediate gated vector that is obtained by performing lightweight processing on $r_t^{1*}$ and that has the same dimension as $g_{t-1}$. It should be understood that dimensions of $h_{t-1}$ and $g_{t-1}$ may be different. If it is expected to perform same processing on $g_{t-1}$ as $h_{t-1}$ when $\tilde{h}_t^4$ is determined, $r_t^{1*}$ needs to be transformed into a gated vector $r_t^{g*}$ of the same dimension as $g_{t-1}$. The lightweight processing may be linear transformation and/or nonlinear transformation.

Formula (8-5) indicates to obtain the fourth candidate hidden state vector $\tilde{h}_t^4$ by inputting the (t-1)$^{th}$ input feature $x_{t-1}$, a product ( $r_t^{1*} \circ h_{t-1}$ ) of the (t-1)$^{th}$ hidden state vector $h_{t-1}$ and the first supplementary gated vector $r_t^{1*}$, and the (t-1)$^{th}$ extended state vector $g_{t-1}$ to the candidate neuron in the first-type recurrent neural network; or obtain the fourth candidate hidden state vector $\tilde{h}_t^4$ by inputting the (t-1)$^{th}$ input feature $x_{t-1}$, a product ( $r_t^{1*} \circ h_{t-1}$ ) of the (t-1)$^{th}$ hidden state vector $h_{t-1}$ and the first supplementary gated vector $r_t^{1*}$, and a product ( $r_t^{g*} \circ g_{t-1}$ ) of the (t-1)$^{th}$ extended state vector $g_{t-1}$ and the intermediate gated vector $r_t^{g*}$ to the candidate neuron in the first-type recurrent neural network.

Formula (8-6) indicates to obtain the t$^{th}$ hidden state vector $h_t$ by multiplying the first gated vector $z_t^1$ by the fourth candidate hidden state vector $\tilde{h}_t^4$, multiplying a difference between the unit vector and the first gated vector $z_t^1$ by the (t-1)$^{th}$ hidden state vector $h_{t-1}$, and adding two multiplication results.

As shown in FIG. 9(c), $\sigma_1$ represents the first gated neuron at the reset gate layer in the first-type recurrent neural network, $\varphi_1$ represents the first transform neuron, $r_t^1$ represents the first gated vector output by the first gated neuron at the reset gate layer, $z_t^{1*}$ represents the first supplementary gated vector output by the first transform neuron, and $\tilde{h}_t^3$ represents a third candidate hidden state vector.

As shown in FIG. 9(c), when the first gated neuron is the gated neuron at the reset gate layer in the first-type recurrent neural network, determining the t$^{th}$ hidden state vector based on the (t-1)$^{th}$ input feature, the (t-1)$^{th}$ hidden state vector, the first supplementary gated vector, and the first gated vector in step S6025 includes: determining the third candidate hidden state vector based on the (t-1)$^{th}$ input feature, the (t-1)$^{th}$ hidden state vector, and the first gated vector by using a candidate neuron in the first-type recurrent neural network; and determining the t$^{th}$ hidden state vector based on the first supplementary gated vector, the (t-1)$^{th}$ hidden state vector, and the third candidate hidden state vector.

The processing process shown in FIG. 9(c) may be expressed as Formulas (9-1) to (9-4):

$$r_t^1 = \sigma_1(W_r x_{t-1} + U_r([h_{t-1}, g_{t-1}])) \qquad (9\text{-}1)$$

$$z_t^{1*} = \varphi_1(U_z r_t^1) \qquad (9\text{-}2)$$

$$\tilde{h}_t^3 = tanh(W_h x_{t-1} + U_h(r_t^1 \circ h_{t-1})) \qquad (9\text{-}3)$$

$$h_t = (1 - z_t^{1*}) \circ h_{t-1} + z_t^{1*} \circ \tilde{h}_t^3 \qquad (9\text{-}4)$$

Formula (9-1) indicates to obtain the first gated vector $r_t^1$ by inputting the (t-1)$^{th}$ input feature $x_{t-1}$ and the spliced state vector [$h_{t-1}$, $g_{t-1}$] to the first gated neuron at the reset gate layer. Formula (9-2) indicates to obtain the first supplementary gated vector $z_t^{1*}$ by inputting the first gated vector $r_t^1$ to the first transform neuron $\varphi_1$. Formula (9-3) indicates to obtain the third candidate hidden state vector $\tilde{h}_t^3$ by multiplying the first gated vector $r_t^1$ by the (t-1)$^{th}$ hidden state vector $h_{t-1}$, and inputting a multiplication result and the input feature $x_{t-1}$ to the candidate neuron. Formula (8-4) indicates to obtain the t$^{th}$ hidden state vector $h_t$ by multiplying the first supplementary gated vector $z_t^{1*}$ by the third candidate hidden state vector $\tilde{h}_t^3$, multiplying a difference between the unit vector and the first supplementary gated vector $z_t^{1*}$ by the (t-1)$^{th}$ hidden state vector $h_{t-1}$, and adding two multiplication results.

As shown in FIG. 9(d), $\sigma_1$ represents the first gated neuron at the reset gate layer in the first-type recurrent neural network, $\varphi_1$ represents the first transform neuron, $r_t^1$ represents the first gated vector output by the first gated neuron at the reset gate layer, $z_t^{1*}$ represents the first supplementary gated vector output by the first transform neuron, and $\tilde{h}_t^5$ represents a fifth candidate hidden state vector.

As shown in FIG. 9(d), when the first gated neuron is the gated neuron at the reset gate layer in the first-type recurrent neural network, determining the t$^{th}$ hidden state vector based on the (t-1)$^{th}$ input feature, the (t-1)$^{th}$ hidden state vector, the first supplementary gated vector, the first gated vector, and the (t-1)$^{th}$ extended state vector in step S6025 includes: determining the fifth candidate hidden state vector based on the (t-1)$^{th}$ input feature, the (t-1)$^{th}$ hidden state vector, the first gated vector, and the (t-1)$^{th}$ extended state vector by using a candidate neuron in the first-type recurrent neural network; and determining the t$^{th}$ hidden state vector based on the first supplementary gated vector, the (t-1)$^{th}$ hidden state vector, and the fifth candidate hidden state vector.

The processing process shown in FIG. 9(d) may be expressed as Formulas (9-1) and (9-2) above and Formulas (9-5) and (9-6) below:

$$\tilde{h}_t^5 = tanh(W_h x_{t-1} + U_h(r_t^1 \circ h_{t-1}) + G_h g_{t-1}) \;, \quad \text{or} \quad \tilde{h}_t^5 = tanh(W_h x_{t-1} + U_h(r_t^1 \circ h_{t-1}) + G_h(r_t^g \circ g_{t-1})) \tag{9-5}$$

$$h_t = (1 - z_t^{1*}) \circ h_{t-1} + z_t^{1*} \circ \tilde{h}_t^5 \tag{9-6}$$

Herein, $r_t^g$ represents an intermediate gated vector that is obtained by performing lightweight processing on $r_t^1$ and that has the same dimension as $g_{t-1}$. It should be understood that dimensions of $h_{t-1}$ and $g_{t-1}$ may be different. If it is expected to perform same processing on $g_{t-1}$ as $h_{t-1}$ when $\tilde{h}_t^5$ is determined, $r_t^1$ needs to be transformed into a gated vector $r_t^g$ of the same dimension as $g_{t-1}$. The lightweight processing may be linear transformation and/or nonlinear transformation.

Formula (9-5) indicates to obtain the fifth candidate hidden state vector $\tilde{h}_t^5$ by inputting the (t-1)$^{th}$ input feature $x_{t-1}$, a product ($r_t^1 \circ h_{t-1}$) of the (t-1)$^{th}$ hidden state vector $h_{t-1}$ and the first gated vector $r_t^1$, and the (t-1)$^{th}$ extended state vector $g_{t-1}$ to the candidate neuron in the first-type recurrent neural network; or obtain the fifth candidate hidden state vector $\tilde{h}_t^5$ by inputting the (t-1)$^{th}$ input feature $x_{t-1}$, a product ($r_t^1 \circ h_{t-1}$) of the (t-1)$^{th}$ hidden state vector $h_{t-1}$ and the first gated vector $r_t^1$, and a product ($r_t^g \circ g_{t-1}$) of the (t-1)$^{th}$ extended state vector $g_{t-1}$ and the intermediate gated vector $r_t^g$ to the candidate neuron in the first-type recurrent neural network. Formula (9-6) indicates to obtain the t$^{th}$ hidden state vector $h_t$ by multiplying the first supplementary gated vector $z_t^{1*}$ by the fifth candidate hidden state vector $\tilde{h}_t^5$, multiplying a difference between the unit vector and the first supplementary gated vector $z_t^{1*}$ by the (t-1)$^{th}$ hidden state vector $h_{t-1}$, and adding two multiplication results.

It can be learned based on Formulas (8-1) to (8-6) and Formulas (9-1) to (9-6) that a quantity of weight matrices of a neuron in the recurrent neural network in Formulas (8-1) to (8-6) and Formulas (9-1) to (9-6) is smaller than that in the foregoing Formulas (4-1) to (4-4), thereby significantly reducing the quantity of parameters and the calculation amount in the recurrent neural network.

It should be noted that the first transform neuron $\varphi_1$ may perform lightweight processing at the lightweight level such as linear transformation and/or nonlinear transformation. For example, $\varphi_1$ may also use a sigmoid function.

As described above, the quantity of parameters in the recurrent neural network is positively correlated with the dimension of the hidden state vector output by the recurrent neural network. A main difference between FIG. 2(b), and FIG. 9(a), FIG. 9(b), FIG. 9(c), and FIG. 9(d) lies in that the gated recurrent unit neural network shown in FIG. 2(b) includes two gated neurons, and there is one gated neuron and one transform neuron in FIG. 9(a), FIG. 9(b), FIG. 9(c), and FIG. 9(d). A quantity of parameters of a single gated neuron in FIG. 2(b) may be expressed as $Params_{gru\_gate} = (dim_{h1} + dim_x) \times dim_{h1}$. A quantity of parameters of a single gated neuron in FIG. 9(a), FIG. 9(b), FIG. 9(c), and FIG. 9(d) may be expressed as $Params_{ghostgru\_gate} = (dim_{hg1} + dim_g + dim_x) \times dim_{hg1}$. In addition, with reference to the foregoing Formulas (5-3) and (5-4), it may be deduced that the quantity of parameters of the gated neuron in FIG. 9(a), FIG. 9(b), FIG. 9(c), and FIG. 9(d) is reduced at least by about $Params_{gru\_gate} - Params_{ghostgru_{gate}} = (dim_{h1} + dim_x) \times dim_{h1} \times (1 - r_{g1})$ in comparison with the quantity of parameters of the gated neuron in FIG. 2(b). Because the calculation amount in the recurrent neural network is approximately directly proportional to the quantity of parameters, the calculation amount is also reduced accordingly.

According to this embodiment of this application, lightweight processing is performed on the first gated vector, to obtain the first supplementary gated vector. This is equivalent to supplementing a gated vector through lightweight processing at the lightweight level. Two gated neurons in the first-type recurrent neural network are directly used to output two gated vectors based on the $(t-1)^{th}$ input feature and a $(t-1)^{th}$ spliced state vector. In comparison, in this application, a quantity of parameters and a calculation amount for generating a gated vector can be reduced, thereby reducing a quantity of parameters and a calculation amount in the entire first-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the first-type recurrent neural network on a hidden state can be ensured, so that the first-type recurrent neural network has higher universality.

As described above, the recurrent neural network may include the second-type recurrent neural network represented by the long short-term memory neural network. The second-type recurrent neural network includes a forget gate layer, an input gate layer, and an output gate layer. The forget gate layer is used to control information to be discarded from a cell state vector (that is, to-be-discarded old information). The input gate layer is used to control information to be added to a cell state vector (that is, to-be-added new information). The output gate layer is used to control output information in a cell state vector (that is, output partial information screened out from the cell state vector). Based on the process of determining the hidden state vector shown in FIG. 8(b), when the recurrent neural network includes the second-type recurrent neural network, that a $t^{th}$ hidden state vector is determined based on a $(t-1)^{th}$ input feature, a $(t-1)^{th}$ hidden state vector, and a $(t-1)^{th}$ extended state vector in step S602 may include the following steps:

Step S6027: Splice the $(t-1)^{th}$ hidden state vector and the $(t-1)^{th}$ extended state vector, to obtain a $(t-1)^{th}$ spliced state vector.

Step S6028: Determine the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network.

Optionally, in step S6028, by using the processing process shown in FIG. 8(b) and Formulas (6-1) and (6-6), the $t^{th}$ hidden state vector and the $t^{th}$ cell state vector may be determined based on the $(t-1)^{th}$ input feature, the $(t-1)^{th}$ spliced state vector, and the $(t-1)^{th}$ cell state vector by using the second-type recurrent neural network. As shown in FIG. 8(b), the $t^{th}$ cell state vector is determined based on the $(t-1)^{th}$ spliced state vector, the $(t-1)^{th}$ input feature, and the $(t-1)^{th}$ cell state vector, the $t^{th}$ hidden state vector is determined based on the $(t-1)^{th}$ spliced state vector, the $(t-1)^{th}$ input feature, and the $t^{th}$ cell state vector, and a $0^{th}$ cell state vector is an initial value. In this manner, the second-type recurrent neural network can output a hidden state vector of a small dimension, thereby reducing a quantity of parameters and a calculation amount in the second-type recurrent neural network.

It should be understood that step S602 is a recursive recurrent process. The $0^{th}$ cell state vector may be a customized initial value, for example, may be 0 or any empirical value. $1^{st}$ to $T^{th}$ cell state vectors may be output values of the second-type recurrent neural network.

Optionally, to further reduce the quantity of parameters and the calculation amount in the recurrent neural network and accelerate a network running speed, a calculation process in the recurrent neural network may be further improved. For example, calculation of a gated neuron is simplified through lightweight processing at the lightweight level. In a possible implementation, determining the $t^{th}$ hidden state vector and the $t^{th}$ cell state vector based on the $(t-1)^{th}$ input feature, the (t-1)<sup>th</sup> spliced state vector, and the (t-1)<sup>th</sup> cell state vector by using the second-type recurrent neural network in step S6028 may include the following steps:

Step S60281: Determine a second gated vector based on the (t-1)<sup>th</sup> input feature and the (t-1)<sup>th</sup> spliced state vector by using a second gated neuron in the second-type recurrent neural network.

Step S60282: Perform lightweight processing on the second gated vector by using a second transform neuron in the second-type recurrent neural network, to obtain a second supplementary gated vector.

Step S60283: Determine a first candidate cell state vector based on the (t-1)<sup>th</sup> input feature and the (t-1)<sup>th</sup> spliced state vector by using a candidate neuron in the second-type recurrent neural network.

Step S60284: Determine the t<sup>th</sup> hidden state vector and the t<sup>th</sup> cell state vector based on the second gated vector, the second supplementary gated vector, the first candidate cell state vector, and the (t-1)<sup>th</sup> cell state vector.

In step S60281, the second gated neural network may be any gated neuron at the forget gate layer, the input gate layer, and the output gate layer in the second-type recurrent neural network, or may be any two gated neurons at the forget gate layer, the input gate layer, and the output gate layer. The second gated neuron may determine the second gated vector based on the (t-1)<sup>th</sup> input feature and the (t-1)<sup>th</sup> spliced state vector with reference to the processing process shown in the foregoing Formulas (6-1), (6-2), and (6-3).

In step S60282, the lightweight processing may include linear transformation and/or nonlinear transformation. The linear transformation and the nonlinear transformation may be transformation manners at the lightweight level. Matrix transformation, normalization, an activation function, or the like may be used for the linear transformation. Convolution processing or the like may be used for the nonlinear transformation. It should be understood that lightweight processing performed by the second transform neuron on the second gated vector may be different from or certainly the same as lightweight processing performed on the (t-1)<sup>th</sup> hidden state vector and lightweight processing performed on the first gated vector in step S602.

When the second gated neural network in step S60281 is any gated neuron at the forget gate layer, the input gate layer, and the output gate layer in the second-type recurrent neural network, in step S60282, lightweight processing may be separately performed on the second gated vector by using two second transform neurons, to obtain two second supplementary gated vectors. It should be understood that weight matrices of the two second transform neurons may be different. When the second gated neural network in step S60281 is any two gated neurons at the forget gate layer, the input gate layer, and the output gate layer in the second-type recurrent neural network, in step S60282, lightweight processing may be performed by using the second transform neuron on a second gated vector output by one of any two gated neurons; or an operation such as splicing or adding may be first performed on two second gated vectors output by any two gated neurons, and then lightweight processing is performed on a result obtained after the operation such as splicing or adding, to obtain the second supplementary gated vector.

In step S60282, lightweight processing is performed on a second gated vector generated by one or two gated neurons in the second-type recurrent neural network, to obtain the second supplementary gated vector. In comparison with a case in which three gated vectors are output based on the (t-1)<sup>th</sup> input feature and the (t-1)<sup>th</sup> spliced state vector by using three gated neurons in FIG. 8(b), the quantity of parameters and the calculation amount for generating the gated vector can be reduced, thereby reducing the quantity of parameters and the calculation amount in the entire recurrent neural network and improving a network computing speed.

In step S60283, the candidate neuron may determine the first candidate cell state vector based on the (t-1)<sup>th</sup> input feature and the (t-1)<sup>th</sup> spliced state vector with reference to the processing process shown in the foregoing Formula (6-4).

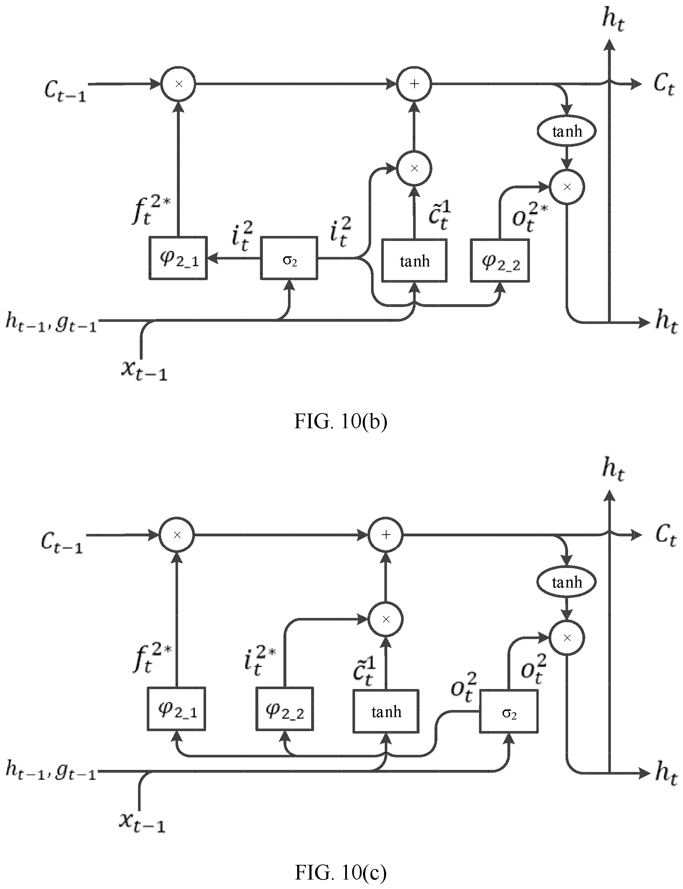

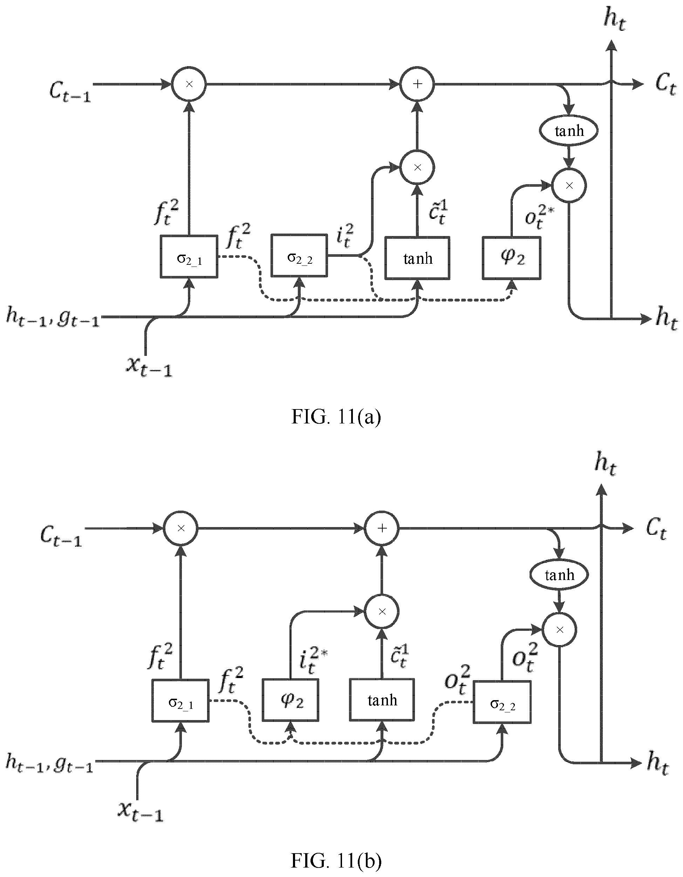

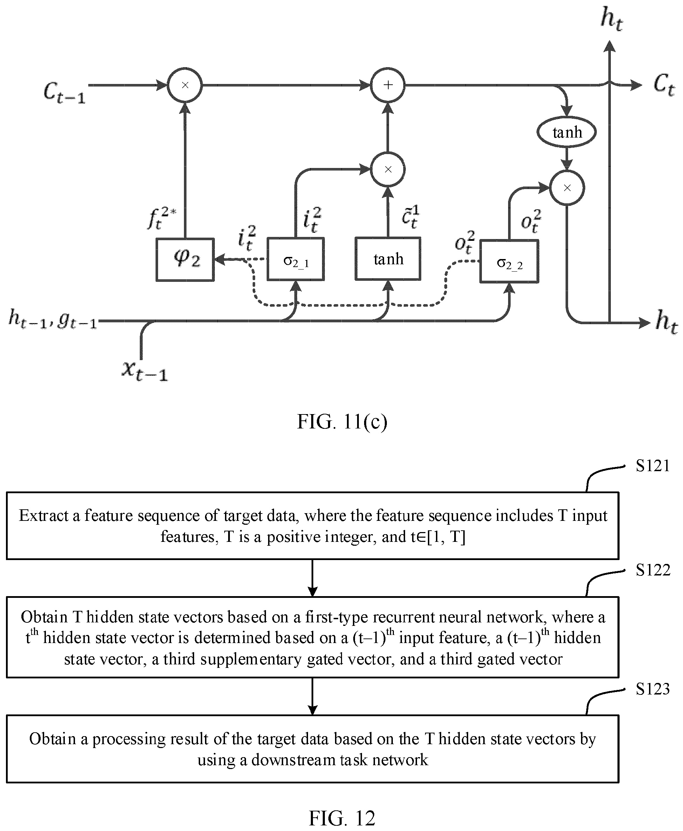

With reference to FIG. 10(a), FIG. 10(b), and FIG. 10(c), the following separately describes a process in which the second-type recurrent neural network determines the t<sup>th</sup> hidden state vector when the second gated neuron is any gated neuron at the forget gate layer, the input gate layer, and the output gate layer in the second-type recurrent neural network. With reference to FIG. 11(a), FIG. 11(b), and FIG. 11(c), the following separately describes a process in which the second-type recurrent neural network determines the t<sup>th</sup> hidden state vector when the second gated neuron is any two gated neurons at the forget gate layer, the input gate layer, and the output gate layer in the second-type recurrent neural network. FIG. 10(a), FIG. 10(b), and FIG. 10(c) are diagrams of determining a hidden state vector by using a second-type recurrent neural network according to an embodiment of this application. FIG. 11(a), FIG. 11(b), and FIG. 11(c) are diagrams of determining a hidden state vector by using a second-type recurrent neural network according to an embodiment of this application.

As shown in FIG. 10(a), $\sigma_2$ represents a second gated neuron at the forget gate layer in the second-type recurrent neural network, $\varphi_{2\_1}$ and $\varphi_{2\_2}$ represent two second transform neurons at the input gate layer and the output gate layer in the second-type recurrent neural network, $f_t^2$ represents a second gated vector output by the second gated neuron at the forget gate layer, $i_t^{2*}$ represents a second supplementary gated vector output by the second transform neuron at the input gate layer, $o_t^{2*}$ represents a second supplementary gated vector output by the second transform neuron at the output gate layer, and $\tilde{c}_t^1$ represents the first candidate cell state vector.

As shown in FIG. 10(a), when the second gated neuron is a gated neuron at the forget gate layer in the second-type recurrent neural network, the second supplementary gated vector includes second supplementary gated vectors that are obtained by performing lightweight processing on the second gated vector respectively by second transform neurons at the input gate layer and the output gate layer in the second-type recurrent neural network. Determining the $t^{th}$ hidden state vector and the $t^{th}$ cell state vector based on the second gated vector, the second supplementary gated vector, the first candidate cell state vector, and the $(t-1)^{th}$ cell state vector in step S60284 includes:

determining the $t^{th}$ cell state vector based on the second supplementary gated vector that is obtained by performing lightweight processing on the second gated vector by the second transform neuron at the input gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

The processing process shown in FIG. 10(a) may be expressed as Formulas (10-1) to (10-6):

$$f_t^2 = \sigma_2(W_f x_{t-1} + U_f([h_{t-1}, g_{t-1}]) + b_f) \qquad (10\text{-}1)$$

$$i_t^{2*} = \varphi_{2\_1}(W_i f_t^2) \qquad (10\text{-}2)$$

$$o_t^{2*} = \varphi_{2\_2}(W_o f_t^2) \qquad (10\text{-}3)$$

$$\tilde{c}_t^1 = \tanh(W_c x_{t-1} + U_c([h_{t-1}, g_{t-1}]) + b_c) \qquad (10\text{-}4)$$

$$C_t = f_t^2 \circ C_{t-1} + i_t^{2*} \circ \tilde{c}_t^1 \qquad (10\text{-}5)$$

$$h_t = o_t^{2*} \circ tanh(C_t) \qquad (10\text{-}6)$$

Formula (10-1) indicates to obtain the second gated vector $f_t^2$ by inputting the $(t-1)^{th}$ input feature $x_{t-1}$ and the spliced state vector $[h_{t-1}, g_{t-1}]$ to the second gated neuron at the forget gate layer. Formula (10-2) indicates to obtain the second supplementary gated vector $i_t^{2*}$ by inputting the second gated vector $f_t^2$ to the second transform neuron at the input gate layer. Formula (10-3) indicates to obtain the second supplementary gated vector $o_t^{2*}$ by inputting the second gated vector $f_t^2$ to the second transform neuron at the output gate layer. Formula (10-4) indicates to obtain the first candidate cell state vector $\tilde{c}_t^1$ by inputting the $(t-1)^{th}$ input feature $x_{t-1}$ and the spliced state vector $[h_{t-1}, g_{t-1}]$ to the candidate neuron. Formula (10-5) indicates to obtain the $t^{th}$ cell state vector $C_t$ by multiplying the second gated vector $f_t^2$ by the $(t-1)^{th}$ cell state vector $C_{t-1}$, and adding a multiplication result and a product of the second supplementary gated vector $i_t^{2*}$ and the first candidate cell state vector $\tilde{c}_t^1$. Formula (10-6) indicates to obtain the $t^{th}$ hidden state vector $h_t$ by multiplying the second supplementary gated vector $o_t^{2*}$ by $tanh(Ct)$.

As shown in FIG. 10(b), $\sigma_2$ represents a second gated neuron at the input gate layer in the second-type recurrent neural network, $\varphi_{2\text{-}1}$ and $\varphi_{2\_2}$ represent two second transform neurons at the forget gate layer and the output gate layer in the second-type recurrent neural network, $i_t^2$ represents a second gated vector output by the second gated neuron at the input gate layer, $f_t^{2*}$ represents a second supplementary gated vector output by the second transform neuron at the forget gate layer, $o_t^{2*}$ represents a second supplementary gated vector output by the second transform neuron at the output gate layer, and $\tilde{c}_t^1$ represents the first candidate cell state vector.

As shown in FIG. 10(b), when the second gated neuron is a gated neuron at the input gate layer in the second-type recurrent neural network, the second supplementary gated vector includes second supplementary gated vectors that are obtained by performing lightweight processing on the second gated vector respectively by second transform neurons at the forget gate layer and the output gate layer in the second-type recurrent neural network. Determining the t<sup>th</sup> hidden state vector and the t<sup>th</sup> cell state vector based on the second gated vector, the second supplementary gated vector, the first candidate cell state vector, and the (t-1)<sup>th</sup> cell state vector in step S60284 includes:

determining the t<sup>th</sup> cell state vector based on the second supplementary gated vector that is obtained by performing lightweight processing on the second gated vector by the second transform neuron at the forget gate layer, the second gated vector, and the first candidate cell state vector; and determining the t<sup>th</sup> hidden state vector based on the t<sup>th</sup> cell state vector and the second supplementary gated vector that is obtained by performing lightweight processing on the second gated vector by the second transform neuron at the output gate layer.

The processing process shown in FIG. 10(b) may be expressed as Formulas (11-1) to (11-6):

$$i_t^2 = \sigma_2(W_i x_{t-1} + U_i([h_{t-1}, g_{t-1}]) + b_i) \qquad (11\text{-}1)$$

$$f_t^{2*} = \varphi_{2\_1}(W_f i_t^2) \qquad (11\text{-}2)$$

$$o_t^{2*} = \varphi_{2\_2}(W_o i_t^2) \qquad (11\text{-}3)$$

$$\tilde{c}_t^1 = \tanh(W_c x_{t-1} + U_c([h_{t-1}, g_{t-1}]) + b_c) \qquad (11\text{-}4)$$

$$C_t = f_t^{2*} \circ C_{t-1} + i_t^2 \circ \tilde{c}_t^1 \qquad (11\text{-}5)$$

$$h_t = o_t^{2*} \circ tanh(C_t) \qquad (11\text{-}6)$$

Formula (11-1) indicates to obtain the second gated vector $i_t^2$ by inputting the (t-1)<sup>th</sup> input feature $x_{t-1}$ and the spliced state vector $[h_{t-1}, g_{t-1}]$ to the second gated neuron at the input gate layer. Formula (11-2) indicates to obtain the second supplementary gated vector $f_t^{2*}$ by inputting the second gated vector $i_t$ to the second transform neuron at the forget gate layer. Formula (11-3) indicates to obtain the second supplementary gated vector $o_t^{2*}$ by inputting the second gated vector $i_t^2$ to the second transform neuron at the output gate layer. Formula (11-4) indicates to obtain the first candidate cell state vector $\tilde{c}_t^1$ by inputting the (t-1)<sup>th</sup> input feature $x_{t-1}$ and the spliced state vector $[h_{t-1}, g_{t-1}]$ to the candidate neuron. Formula (11-5) indicates to obtain the t<sup>th</sup> cell state vector $C_t$ by multiplying the second supplementary gated vector $f_t^{2*}$ by the (t-1)<sup>th</sup> cell state vector $C_{t-1}$, and adding a multiplication result and a product of the second gated vector $i_t^2$ and the first candidate cell state vector $\tilde{c}_t^1$. Formula (11-6) indicates to obtain the t<sup>th</sup> hidden state vector $h_t$ by multiplying the second supplementary gated vector $o_t^{2*}$ by *tanh(Ct)*.

As shown in FIG. 10(c), $\sigma_2$ represents a second gated neuron at the output gate layer in the second-type recurrent neural network, $\varphi_{2\text{-}1}$ and $\varphi_{2\_2}$ represent two second transform neurons at the forget gate layer and the input gate layer in the second-type recurrent neural network, $o_t^2$ represents a second gated vector output by the second gated neuron at the output gate layer, $f_t^{2*}$ represents a second supplementary gated vector output by the second transform neuron at the forget gate layer, $i_t^{2*}$ represents a second supplementary gated vector output by the second transform neuron at the input gate layer, and $\tilde{c}_t^1$ represents the first candidate cell state vector.

As shown in FIG. 10(c), when the second gated neuron is a gated neuron at the output gate layer in the second-type recurrent neural network, the second supplementary gated vector includes second supplementary gated vectors that are obtained by performing lightweight processing on the second gated vector respectively by second transform neurons at the forget gate layer and the input gate layer in the second-type recurrent neural network. Determining the tth hidden state vector and the tth cell state vector based on the second gated vector, the second supplementary gated vector, the first candidate cell state vector, and the (t-1)th cell state vector in step S60284 includes:

determining the tth cell state vector based on the second supplementary gated vectors that are obtained by performing lightweight processing on the second gated vector respectively by the second transform neurons at the forget gate layer and the input gate layer, and the first candidate cell state vector; and determining the tth hidden state vector based on the tth cell state vector and the second gated vector.

The processing process shown in FIG. 10(c) may be expressed as Formulas (12-1) to (12-6):

$$o_t^2 = \sigma_2(W_o x_{t-1} + U_o([h_{t-1}, g_{t-1}]) + b_0) \qquad (12\text{-}1)$$

$$f_t^{2*} = \varphi_{2\_1}(W_f o_t^2) \qquad (12\text{-}2)$$

$$i_t^{2*} = \varphi_{2\_2}(W_i o_t^2) \qquad (12\text{-}3)$$

$$\tilde{c}_t^1 = \tanh(W_c x_{t-1} + U_c([h_{t-1}, g_{t-1}]) + b_c) \qquad (12\text{-}4)$$

$$C_t = f_t^{2*} \circ C_{t-1} + i_t^{2*} \circ \tilde{c}_t^1 \qquad (12\text{-}5)$$

$$h_t = o_t^2 \circ tanh(C_t) \qquad (12\text{-}6)$$

Formula (12-1) indicates to obtain the second gated vector $o_t^2$ by inputting the (t-1)th input feature $x_{t-1}$ and the spliced state vector $[h_{t-1}, g_{t-1}]$ to the second gated neuron at the output gate layer. Formula (12-2) indicates to obtain the second supplementary gated vector $f_t^{2*}$ by inputting the second gated vector $o_t^2$ to the second transform neuron at the forget gate layer. Formula (12-3) indicates to obtain the second supplementary gated vector $i_t^{2*}$ by inputting the second gated vector $o_t^2$ to the second transform neuron at the input gate layer. Formula (12-4) indicates to obtain the first candidate cell state vector $\tilde{c}_t^1$ by inputting the (t-1)th input feature $x_{t-1}$ and the spliced state vector $[h_{t-1}, g_{t-1}]$ to the candidate neuron. Formula (12-5) indicates to obtain the tth cell state vector $C_t$ by multiplying the second supplementary gated vector $f_t^{2*}$ by the (t-1)th cell state vector $C_{t-1}$, and adding a multiplication result and a product of the second supplementary gated vector $i_t^{2*}$ and the first candidate cell state vector $\tilde{c}_t^1$. Formula (12-6) indicates to obtain the tth hidden state vector $h_t$ by multiplying the second gated vector $o_t^2$ by $tanh(Ct)$.

As described above, the quantity of parameters in the recurrent neural network is positively correlated with the dimension of the hidden state vector output by the recurrent neural network. A main difference between FIG. 1(b), and FIG. 10(a), FIG. 10(b), and FIG. 10(c) lies in that the long short-term memory neural network shown in FIG. 1(b) includes three gated neurons, and there is one gated neuron and two transform neurons in FIG. 10(a), FIG. 10(b), and FIG. 10(c). A quantity of parameters of a single gated neuron in FIG. 1(b) may be expressed as $Params_{lstm\_gate} = (dim_{h2} + dim_x) \times dim_{h2}$. A quantity of parameters of a single gated neuron in FIG. 10(a), FIG. 10(b), and FIG. 10(c) may be expressed as $Params_{grostlstm\_gate} = (dim_{hg2} + dim_g + dim_x) \times dim_{hg2}$. In addition, with reference to the foregoing Formulas (7-3) and (7-4), it may be deduced that the quantity of parameters of the gated neuron in FIG. 10(a), FIG. 10(b), and FIG. 10(c) is reduced at least by about $Params_{lstm\_gate} - Params_{grostlstm\_gate} = 2 \times (dim_{h2} + dim_x) \times dim_{h2} \times (1 - r_{g2})$ in comparison with the quantity of parameters in FIG. 1(b). Because the calculation amount in the recurrent neural network is approximately directly proportional to the quantity of parameters, the calculation amount is also reduced accordingly.

As shown in FIG. 11(a), $\sigma_{2\_1}$ and $\sigma_{2\_2}$ represent second gated neurons at the forget gate layer and the input gate layer in the second-type recurrent neural network, $\varphi_2$ represents a second transform neuron, $f_t^2$ represents a second gated vector output by the second gated neuron at the forget gate layer, $i_t^2$ represents a second gated vector output by the second gated neuron at the input gate layer, and $o_t^{2*}$ represents a second supplementary gated vector output by the second transform neuron at the output gate layer.

Two dashed lines in FIG. 11(a) may represent that one or two of the two dashed lines may be reserved. Specifically, the second transform neuron $\varphi_2$ may perform lightweight processing on $f_t^2$, or may perform lightweight processing on $i_t^2$, or may perform lightweight processing on $f_t^2$ and $i_t^2$. When lightweight processing is performed on $f_t^2$ and $i_t^2$, lightweight processing may be performed on a result obtained by splicing or adding $f_t$ and $i_t^2$. In other words, when the second gated neuron includes the gated neurons at the forget gate layer and the input gate layer in the second-type recurrent neural network, the second supplementary gated vector includes a second supplementary gated vector that is obtained by the second transform neuron by performing lightweight processing on a second gated vector determined by a second gated neuron at the forget gate layer and/or the input gate layer.

As shown in FIG. 11(a), determining the t$^{th}$ hidden state vector and the t$^{th}$ cell state vector based on the second gated vector, the second supplementary gated vector, the first candidate cell state vector, and the (t-1)$^{th}$ cell state vector in step S60284 includes: determining the t$^{th}$ cell state vector based on the second gated vectors respectively determined by the second gated neurons at the forget gate layer and the input gate layer, and the first candidate cell state vector; and determining the t$^{th}$ hidden state vector based on the t$^{th}$ cell state vector and the second supplementary gated vector.

The processing process shown in FIG. 11(a) may be expressed as Formulas (13-1) to (13-6):

$$f_t^2 = \sigma_{2\_1}(W_f x_{t-1} + U_f([h_{t-1}, g_{t-1}]) + b_f) \tag{13-1}$$

$$i_t^2 = \sigma_{2\_2}(W_i x_{t-1} + U_i([h_{t-1}, g_{t-1}]) + b_i) \tag{13-2}$$

$$o_t^{2*} = \varphi_2(W_o f_t^2), \text{ or } o_t^{2*} = \varphi_2(W_o i_t^2), \text{ or } o_t^{2*} = \varphi_2(W_o [f_t^2, i_t^2]) \tag{13-3}$$

$$\tilde{c}_t^1 = \tanh(W_c x_{t-1} + U_c([h_{t-1}, g_{t-1}]) + b_c) \tag{13-4}$$

$$C_t = f_t^2 \circ C_{t-1} + i_t^2 \circ \tilde{c}_t^1 \tag{13-5}$$

$$h_t = o_t^{2*} \circ tanh(C_t) \tag{13-6}$$

Formula (13-1) indicates to obtain the second gated vector $f_t^2$ by inputting the (t-1)$^{th}$ input feature $x_{t-1}$ and the spliced state vector $[h_{t-1}, g_{t-1}]$ to the second gated neuron at the forget gate layer. Formula (13-2) indicates to obtain the second gated vector $i_t^2$ by inputting the (t-1)$^{th}$ input feature $x_{t-1}$ and the spliced state vector $[h_{t-1}, g_{t-1}]$ to the second gated neuron at the input gate layer. Formula (13-3) indicates to obtain the second supplementary gated vector $o_t^{2*}$ by inputting the second gated vector $i_t^2$ and/or $f_t^2$ to the second transform neuron at the output gate layer. Formula (13-4) indicates to obtain the first candidate cell state vector $\tilde{c}_t^1$ by inputting the (t-1)$^{th}$ input feature $x_{t-1}$ and the spliced state vector $[h_{t-1}, g_{t-1}]$ to the candidate neuron. Formula (13-5) indicates to obtain the t$^{th}$ cell state vector $C_t$ by multiplying the second gated vector $f_t^2$ by the (t-1)$^{th}$ cell state vector $C_{t-1}$, and adding a multiplication result and a product of the second gated vector $i_t^2$ and the first candidate cell state vector $\tilde{c}_t^1$. Formula (13-6) indicates to obtain the t$^{th}$ hidden state vector $h_t$ by multiplying the second supplementary gated vector $o_t^{2*}$ by *tanh(Ct)*.

As shown in FIG. 11(b), $\sigma_{2\_1}$ and $\sigma_{2\_2}$ represent second gated neurons at the forget gate layer and the output gate layer in the second-type recurrent neural network, $\varphi_2$ represents a second transform neuron at the input gate layer, $f_t^2$ represents a second gated vector output by the second gated neuron at the forget gate layer, $o_t^2$ represents a second gated vector output by the second gated neuron at the output gate layer, and $i_t^{2*}$ represents a second supplementary gated vector output by the second transform neuron at the input gate layer.

Two dashed lines in FIG. 11(b) may represent that one or two of the two dashed lines may be reserved. Specifically, the second transform neuron $\varphi_2$ may perform lightweight processing on $f_t^2$, or may perform lightweight processing on $o_t^2$, or may perform lightweight processing on $f_t^2$ and $o_t^2$. When lightweight processing is performed on $f_t^2$ and $o_t^2$, lightweight processing may be performed on a result obtained by splicing or adding $f_t^2$ and $o_t^2$. In other words, when the second gated neuron includes the gated neurons at the forget gate layer and the output gate layer in the second-type recurrent neural network, the second supplementary gated vector includes a second supplementary gated vector that is obtained by the second transform neuron by performing lightweight processing on a second gated vector determined by a second gated neuron at the forget gate layer and/or the output gate layer.

As shown in FIG. 11(b), determining the $t^{th}$ hidden state vector and the $t^{th}$ cell state vector based on the second gated vector, the second supplementary gated vector, the first candidate cell state vector, and the $(t-1)^{th}$ cell state vector in step S60284 includes: determining the $t^{th}$ cell state vector based on the second gated vector determined by the second gated neuron at the forget gate layer, the second supplementary gated vector, and the first candidate cell state vector; and determining the $t^{th}$ hidden state vector based on the $t^{th}$ cell state vector and the second gated vector determined by the second gated neuron at the output gate layer.

The processing process shown in FIG. 11(b) may be expressed as Formulas (14-1) to (14-6):

$$f_t^2 = \sigma_{2\_1}(W_f x_{t-1} + U_f([h_{t-1}, g_{t-1}]) + b_f) \qquad (14\text{-}1)$$

$$o_t^2 = \sigma_{2\_2}(W_o x_{t-1} + U_o([h_{t-1}, g_{t-1}]) + b_o) \qquad (14\text{-}2)$$

$$i_t^{2*} = \varphi_2(W_i f_t^2), \text{or } i_t^{2*} = \varphi_2(W_i o_t^2), \text{or } i_t^{2*} = \varphi_2(W_i[f_t^2, o_t^2]) \qquad (14\text{-}3)$$

$$\tilde{c}_t^1 = \tanh(W_c x_{t-1} + U_c([h_{t-1}, g_{t-1}]) + b_c) \qquad (14\text{-}4)$$

$$C_t = f_t^2 \circ C_{t-1} + i_t^{2*} \circ \tilde{c}_t^1 \qquad (14\text{-}5)$$

$$h_t = o_t^2 \circ tanh(C_t) \qquad (14\text{-}6)$$

Formula (14-1) indicates to obtain the second gated vector $f_t^2$ by inputting the $(t-1)^{th}$ input feature $x_{t-1}$ and the spliced state vector $[h_{t-1}, g_{t-1}]$ to the second gated neuron at the forget gate layer. Formula (14-2) indicates to obtain the second gated vector $o_t^2$ by inputting the $(t-1)^{th}$ input feature $x_{t-1}$ and the spliced state vector $[h_{t-1}, g_{t-1}]$ to the second gated neuron at the output gate layer. Formula (14-3) indicates to obtain the second supplementary gated vector $i_t^{2*}$ by inputting the second gated vector $f_t^2$ and/or $o_t^2$ to the second transform neuron at the input gate layer. Formula (14-4) indicates to obtain the first candidate cell state vector $\tilde{c}_t^1$ by inputting the $(t-1)^{th}$ input feature $x_{t-1}$ and the spliced state vector $[h_{t-1}, g_{t-1}]$ to the candidate neuron. Formula (14-5) indicates to obtain the $t^{th}$ cell state vector $C_t$ by multiplying the second gated vector $f_t^2$ by the $(t-1)^{th}$ cell state vector $C_{t-1}$, and adding a multiplication result and a product of the second supplementary gated vector $i_t^{2*}$ and the first candidate cell state vector $\tilde{c}_t^1$. Formula (14-6) indicates to obtain the $t^{th}$ hidden state vector $h_t$ by

multiplying the second gated vector $o_t^2$ by *tanh(Ct)*.

As shown in FIG. 11(c), $\sigma_{2\_1}$ and $\sigma_{2\_2}$ represent second gated neurons at the input gate layer and the output gate layer in the second-type recurrent neural network, $\varphi_2$ represents a second transform neuron at the forget gate layer, $i_t^2$ represents a second gated vector output by the second gated neuron at the input gate layer, $o_t^2$ represents a second gated vector output by the second gated neuron at the output gate layer, and $f_t^{2*}$ represents a second supplementary gated vector output by the second transform neuron at the forget gate layer.

Two dashed lines in FIG. 11(c) may represent that one or two of the two dashed lines may be reserved. Specifically, the second transform neuron $\varphi_2$ may perform lightweight processing on $i_t^2$, or may perform lightweight processing on $o_t^2$, or may perform lightweight processing on $i_t^2$ and $o_t^2$. When lightweight processing is performed on $i_t^2$ and $o_t^2$, lightweight processing may be performed on a result obtained by splicing or adding $i_t^2$ and $o_t^2$. In other words, when the second gated neuron includes the gated neurons at the input gate layer and the output gate layer in the second-type recurrent neural network, the second supplementary gated vector includes a second supplementary gated vector that is obtained by the second transform neuron by performing lightweight processing on a second gated vector determined by a second gated neuron at the input gate layer and/or the output gate layer.

As shown in FIG. 11(c), determining the $t^{th}$ hidden state vector and the $t^{th}$ cell state vector based on the second gated vector, the second supplementary gated vector, the first candidate cell state vector, and the $(t-1)^{th}$ cell state vector in step S60284 includes: determining the $t^{th}$ cell state vector based on the second gated vector determined by the second gated neuron at the input gate layer, the second supplementary gated vector, and the first candidate cell state vector; and determining the $t^{th}$ hidden state vector based on the $t^{th}$ cell state vector and the second gated vector determined by the second gated neuron at the output gate layer.

The processing process shown in FIG. 11(c) may be expressed as Formulas (15-1) to (15-6):

$$i_t^2 = \sigma_{2\_1}(W_i x_{t-1} + U_i([h_{t-1}, g_{t-1}]) + b_i) \tag{15-1}$$

$$o_t^2 = \sigma_{2\_2}(W_o x_{t-1} + U_o([h_{t-1}, g_{t-1}]) + b_o) \tag{15-2}$$

$$f_t^{2*} = \varphi_2\left(W_f i_t^2\right), \text{or } f_t^{2*} = \varphi_2\left(W_f o_t^2\right), \text{or } f_t^{2*} = \varphi_2\left(W_f [i_t^2, o_t^2]\right) \tag{15-3}$$

$$\tilde{c}_t^1 = \tanh\left(W_c x_{t-1} + U_c([h_{t-1}, g_{t-1}]) + b_c\right) \tag{15-4}$$

$$C_t = f_t^{2*} \circ C_{t-1} + i_t^2 \circ \tilde{c}_t^1 \tag{15-5}$$

$$h_t = o_t^2 \circ tanh(C_t) \tag{15-6}$$

Formula (15-1) indicates to obtain the second gated vector $i_t^2$ by inputting the $(t-1)^{th}$ input feature $x_{t-1}$ and the spliced state vector $[h_{t-1}, g_{t-1}]$ to the second gated neuron at the input gate layer. Formula (15-2) indicates to obtain the second gated vector $o_t^2$ by inputting the $(t-1)^{th}$ input feature $x_{t-1}$ and the spliced state vector $[h_{t-1}, g_{t-1}]$ to the second gated neuron at the output gate layer. Formula (15-3) indicates to obtain the second supplementary gated vector $f_t^{2*}$ by inputting the second gated vector $i_t^2$ and/or $o_t^2$ to the second transform neuron at the forget gate layer. Formula (15-4) indicates to obtain the first candidate cell state vector $\tilde{c}_t^1{}_t$ by inputting the $(t-1)^{th}$ input feature $x_{t-1}$ and the spliced state vector $[h_{t-1}, g_{t-1}]$ to the candidate neuron. Formula (15-5) indicates to obtain the $t^{th}$ cell state vector $C_t$ by multiplying the second supplementary gated vector $f_t^{2*}$ by the $(t-1)^{th}$ cell state vector $C_{t-1}$, and adding a multiplication result and a product of the second gated vector $i_t^2$ and the first candidate cell state vector $\tilde{c}_t^1$. Formula (15-6) indicates to obtain the tth

hidden state vector $h_t$ by multiplying the second gated vector $o_t^2$ by $tanh(C_t)$.

As described above, the quantity of parameters in the recurrent neural network is positively correlated with the dimension of the hidden state vector output by the recurrent neural network. A main difference between FIG. 1(b), and FIG. 11(a), FIG. 11(b), and FIG. 11(c) lies in that the long short-term memory neural network shown in FIG. 1(b) includes three gated neurons, and there is two gated neurons and one transform neuron in FIG. 11(a), FIG. 11(b), and FIG. 11(c). A quantity of parameters of a single gated neuron in FIG. 1(b) may be expressed as $Params_{lstm\_gate} = (dim_{h2} + dim_x) \times dim_{h2}$. A quantity of parameters of a single gated neuron in FIG. 11(a), FIG. 11(b), and FIG. 11(c) may be expressed as $Params_{grostlstm\_gate} = (dim_{hg2} + dim_g + dim_x) \times dim_{hg2}$. In addition, with reference to the foregoing Formulas (7-3) and (7-4), it may be deduced that the quantity of parameters of the gated neuron in FIG. 11(a), FIG. 11(b), and FIG. 11(c) is reduced at least by about $Params_{lstm\_gate}$ - $Params_{grostlstm\_gate} = (dim_{h2} + dim_x) \times dim_{h2} \times (1 - r_{g2})$ in comparison with the quantity of parameters in FIG. 1(b). Because the calculation amount in the recurrent neural network is approximately directly proportional to the quantity of parameters, the calculation amount is also reduced accordingly.

According to this embodiment of this application, lightweight processing is performed on the second gated vector, to obtain the second supplementary gated vector. Three gated neurons in the second-type recurrent neural network are directly used to output three gated vectors based on the (t-1)th input feature and a (t-1)th spliced state vector. In comparison, in this application, a quantity of parameters and a calculation amount for generating a gated vector can be reduced, thereby reducing a quantity of parameters and a calculation amount in the entire second-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the second-type recurrent neural network on a hidden state can be ensured, so that the second-type recurrent neural network has higher universality.

In the foregoing embodiment of this application, step S601 to step S603 may be understood as generating an extended state vector through lightweight processing at the lightweight level outside the recurrent neural network, to reduce the quantity of parameters and the calculation amount in the recurrent neural network. Step S6024 to step S6026, step S60281 to step S60284, and the like may be understood as a combination of generating an extended state vector through lightweight processing at the lightweight level outside the recurrent neural network and generating a supplementary gated vector through lightweight processing at the lightweight level inside the recurrent neural network, to comprehensively reduce the quantity of parameters and the calculation amount in the recurrent neural network. Actually, the supplementary gated vector may be generated through only lightweight processing at the lightweight level inside the recurrent neural network, to reduce the quantity of parameters and the calculation amount in the recurrent neural network. The following describes in detail with reference to FIG. 12 to FIG. 16(c) a data processing method for generating a supplementary gated vector through only lightweight processing at the lightweight level inside a recurrent neural network.

FIG. 12 is a flowchart of a data processing method according to an embodiment of this application. The method may be performed by a data processing apparatus that can process data. For example, the method may be performed by the foregoing various terminal devices or servers. As shown in FIG. 12, the method includes the following steps.

Step S121: Extract a feature sequence of target data, where the feature sequence includes T input features, T is a positive integer, and t∈[1, T].

The feature sequence of the target data may be extracted with reference to the feature sequence extraction process in step S601 in the foregoing embodiment of this application. Details are not described herein again.

For t∈[1, T], the following step S122 to step S122 are performed to obtain T hidden state vectors.

Step S122: Obtain the T hidden state vectors based on a first-type recurrent neural network, where a tth hidden state vector is determined based on a (t-1)th input feature, a (t-1)th hidden state vector, a third supplementary gated vector, and a third gated vector. The third gated vector is determined based on the (t-1)th input feature and the (t-1)th hidden state vector by using a first gated neuron in the first-type recurrent neural network. The third supplementary gated vector is obtained by performing lightweight processing on the third gated vector by using a first transform neuron in the first-type recurrent neural network.

The first gated neural network may be a gated neuron at an update gate layer in the first-type recurrent neural network, or a gated neuron at a reset gate layer in the first-type recurrent neural network. The first gated neuron may determine the third gated vector based on the (t-1)th input feature and the (t-1)th hidden state vector with reference to the processing process shown in the foregoing Formula (2-1) or (2-2).

It should be understood that step S122 is a recursive recurrent process. A 0th hidden state vector may be a customized initial value, for example, may be 0 or any empirical value. 1st to Tth hidden state vectors may be output values of the recurrent neural network.

The lightweight processing may include linear transformation and/or nonlinear transformation. The linear transformation and the nonlinear transformation may be transformation manners at a lightweight level. Matrix transformation, normalization, an activation function, or the like may be used for the linear transformation. Convolution processing or the like may be used for the nonlinear transformation.

Lightweight processing is performed on the third gated vector, to obtain the third supplementary gated vector. In comparison with a case in which two gated vectors $z_t$ and $r_t$ are output based on the (t-1)th input feature and the (t-1)th hidden state vector by using two gated neurons in FIG. 2(b), a quantity of parameters and a calculation amount for generating a gated vector can be reduced, thereby reducing a quantity of parameters and a calculation amount in the entire recurrent neural network and improving a network computing speed.

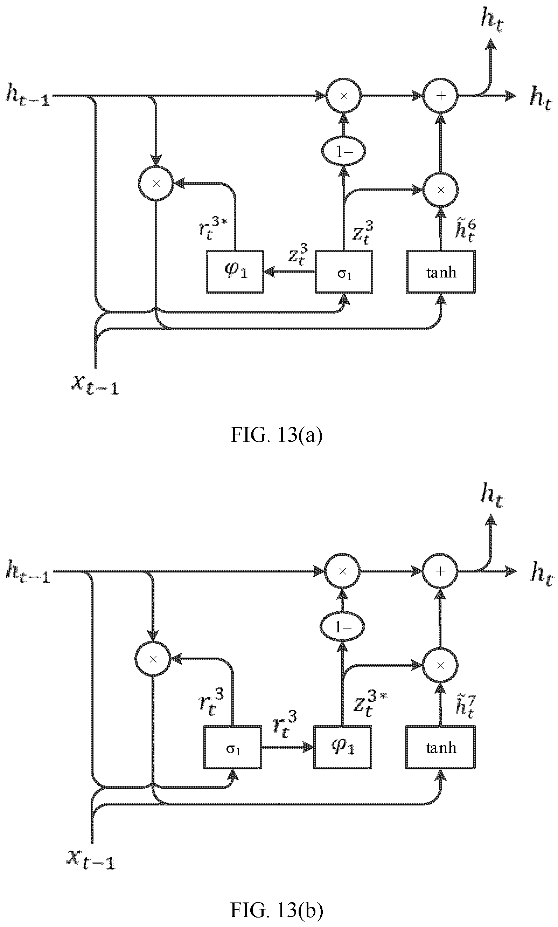

With reference to FIG. 13(a) and FIG. 13(b), the following separately describes a process of determining the tth hidden state vector based on the (t-1)th input feature, the (t-1)th hidden state vector, the third supplementary gated vector, and the third gated vector in step S 122 when the first gated neuron is a gated neuron at the update gate layer or the reset gate layer in the first-type recurrent neural network. FIG. 13(a) and FIG. 13(b) are diagrams of determining a hidden state vector by using a first-type recurrent neural network according to an embodiment of this application.

As shown in FIG. 13(a), $\sigma_1$ represents the first gated neuron at the update gate layer in the first-type recurrent neural network, $\varphi_1$ represents the first transform neuron, $z_t^3$ represents the third gated vector output by the first gated neuron at the update gate layer, $r_t^{3*}$ represents the third supplementary gated vector output by the first transform neuron, and $\tilde{h}_t^6$ represents a sixth candidate hidden state vector.

As shown in FIG. 13(a), when the first gated neuron is the gated neuron at the update gate layer in the first-type recurrent neural network, determining the tth hidden state vector based on the (t-1)th input feature, the (t-1)th hidden state vector, the third supplementary gated vector, and the third gated vector in step S122 includes: determining the sixth candidate hidden state vector based on the (t-1)th input feature, the (t-1)th hidden state vector, and the third supplementary gated vector by using a candidate neuron in the first-type recurrent neural network; and determining the tth hidden state vector based on the third gated vector, the (t-1)th hidden state vector, and the sixth candidate hidden state vector.

The processing process shown in FIG. 13(a) may be expressed as Formulas (16-1) to (16-4):

$$z_t^3 = \sigma_1(W_z x_{t-1} + U_z h_{t-1}) \qquad (16\text{-}1)$$

$$r_t^{3*} = \varphi_1(U_r z_t^3) \qquad (16\text{-}2)$$

$$\tilde{h}_t^6 = tanh(W_h x_{t-1} + U_h(r_t^{3*} \circ h_{t-1})) \qquad (16\text{-}3)$$

$$h_t = (1 - z_t^3) \circ h_{t-1} + z_t^3 \circ \tilde{h}_t^6 \qquad (16\text{-}4)$$

Formula (16-1) indicates to obtain the third gated vector $z_t^3$ by inputting the (t-1)th input feature $x_{t-1}$ and the (t-1)th hidden state vector $h_{t-1}$ to the first gated neuron at the update gate layer. Formula (16-2) indicates to obtain the third supplementary gated vector $r_t^{3*}$ by inputting the third gated vector $z_t^3$ to the first transform neuron $\varphi_1$. Formula (16-3) indicates to obtain the sixth candidate hidden state vector $\tilde{h}_t^6$ by multiplying the third supplementary gated vector $r_t^{3*}$ by the (t-1)th hidden state vector $h_{t-1}$, and inputting a multiplication result and the input feature $x_{t-1}$ to the candidate neuron $tanh$. Formula (16-4) indicates to obtain the tth hidden state vector $h_t$ by multiplying the third gated vector $z_t^3$ by the sixth candidate hidden state vector $\tilde{h}_t^6$, multiplying a difference between a unit vector and the third gated vector $z_t^3$ by the (t-1)th hidden state vector $h_{t-1}$, and adding two multiplication results.

As shown in FIG. 13(b), $\sigma_1$ represents the first gated neuron at the reset gate layer in the first-type recurrent neural network, $\varphi_1$ represents the first transform neuron, $r_t^3$ represents the third gated vector output by the first gated neuron at the reset gate layer, $z_t^{3*}$ represents the third supplementary gated vector output by the first transform neuron, and $\tilde{h}_t^7$ represents a seventh candidate hidden state vector.

As shown in FIG. 13(b), when the first gated neuron is the gated neuron at the reset gate layer in the first-type recurrent neural network, determining the tth hidden state vector based on the (t-1)th input feature, the (t-1)th hidden state vector, the third supplementary gated vector, and the third gated vector includes: determining the seventh candidate hidden state vector based on the $(t-1)^{th}$ input feature, the $(t-1)^{th}$ hidden state vector, and the third gated vector by using a candidate neuron in the first-type recurrent neural network; and determining the $t^{th}$ hidden state vector based on the third supplementary gated vector, the $(t-1)^{th}$ hidden state vector, and the seventh candidate hidden state vector.

The processing process shown in FIG. 13(b) may be expressed as Formulas (17-1) to (17-4):

$$r_t^3 = \sigma_1(W_r x_{t-1} + U_r h_{t-1}) \qquad (17\text{-}1)$$

$$z_t^{3*} = \varphi_1(U_z r_t^3) \qquad (17\text{-}2)$$

$$\tilde{h}_t^7 = tanh(W_h x_{t-1} + U_h(r_t^3 \circ h_{t-1})) \qquad (17\text{-}3)$$

$$h_t = (1 - z_t^{3*}) \circ h_{t-1} + z_t^{3*} \circ \tilde{h}_t^7 \qquad (17\text{-}4)$$

Formula (17-1) indicates to obtain the third gated vector $r_t^3$ by inputting the $(t-1)^{th}$ input feature $x_{t-1}$ and the $(t-1)^{th}$ hidden state vector $h_{t-1}$ to the first gated neuron at the reset gate layer. Formula (17-2) indicates to obtain the third supplementary gated vector $z_t^{3*}$ by inputting the third gated vector $r_t^3$ to the first transform neuron $\sigma_1$. Formula (17-3) indicates to obtain the seventh candidate hidden state vector $\tilde{h}_t^7$ by multiplying the third gated vector $r_t^3$ by the $(t-1)^{th}$ hidden state vector $h_{t-1}$, and inputting a multiplication result and the input feature $x_{t-1}$ to the candidate neuron. Formula (17-4) indicates to obtain the $t^{th}$ hidden state vector $h_t$ by multiplying the third supplementary gated vector $z_t^{3*}$ by the seventh candidate hidden state vector $\tilde{h}_t^7$, multiplying a difference between a unit vector and the third supplementary gated vector $z_t^{3*}$ by the $(t-1)^{th}$ hidden state vector $h_{t-1}$, and adding two multiplication results.

It can be learned based on Formulas (16-1) to (16-4) and Formulas (17-1) to (17-4) that a quantity of weight matrices of a neuron in the recurrent neural network in Formulas (16-1) to (16-4) and Formulas (17-1) to (17-4) is smaller than that in the foregoing Formulas (2-1) to (2-4), thereby significantly reducing the quantity of parameters and the calculation amount in the recurrent neural network.

It should be noted that the first transform neuron $\varphi_1$ may perform lightweight processing at the lightweight level such as linear transformation and/or nonlinear transformation. For example, $\varphi_1$ may use a sigmoid function.

Step S123: Obtain a processing result of the target data based on the T hidden state vectors by using a downstream task network.

The downstream task network may be customized based on a specific downstream task, and different downstream task networks may be used for different downstream tasks. A network structure, a network type, and the like of the downstream task network are not limited in this embodiment of this application. For example, the downstream task may include at least one of the following: a speech recognition task, a speech noise cancellation task, a voice wake-up task, a text recognition task, and a text translation task. Correspondingly, the processing result may include at least one of the following: a speech recognition result, a speech noise cancellation result, and a voice wake-up result of voice data, a text recognition result of image data, and a text translation result of text data.

For example, in the speech recognition task, a text sequence corresponding to voice data may be determined based on T hidden state vectors by using a decoder. For example, the decoder may determine, based on the T hidden state vectors, a probability that each hidden state vector belongs to each word in a language model, and provide a text sequence with a maximum probability as a processing result of the voice data. In the voice wake-up task, after a text sequence of voice data is output by using a decoder, whether the text sequence corresponding to the voice data matches a specified word or sentence of a voice assistant may be detected, and a matching result is used as a processing result of the voice data. In the speech noise cancellation task, a processing process reverse to feature extraction in step S121 may be performed on T hidden state vectors, for example, processing reverse to MFCC is performed, to obtain voice data after noise cancellation.

According to this embodiment of this application, lightweight processing is performed on the third gated vector, to obtain the third supplementary gated vector. This is equivalent to generating a partial gated vector through lightweight processing. In a related technology, two gated neurons in the first-type recurrent neural network are directly used to output two gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire first-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the first-type recurrent neural network on a hidden state can be ensured, so that the first-type recurrent neural network has higher universality.

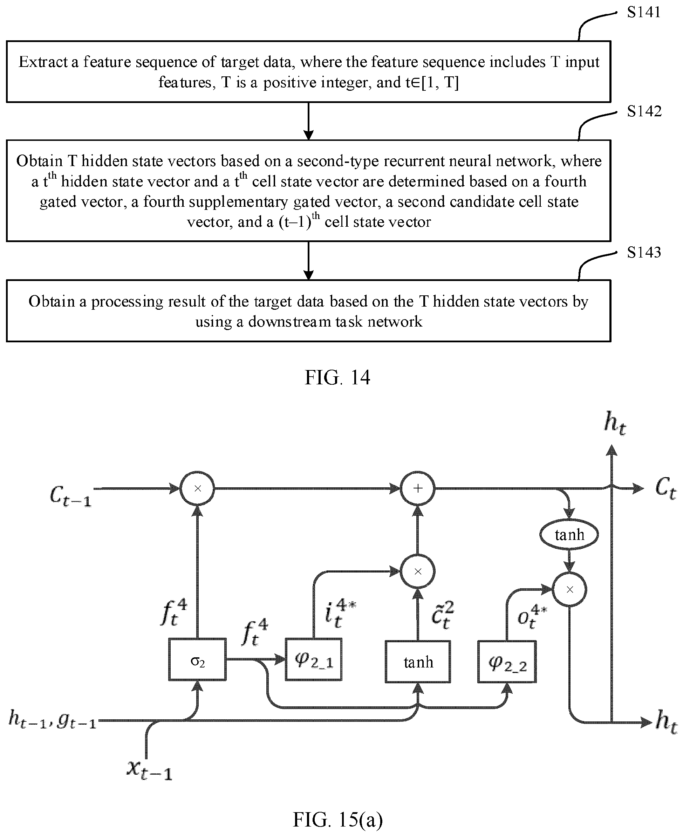

FIG. 14 is a flowchart of a data processing method according to an embodiment of this application. The method may be performed by a data processing apparatus that can process data. For example, the method may be performed by the foregoing various terminal devices or servers. As shown in FIG. 14, the method includes the following steps.

Step S141: Extract a feature sequence of target data, where the feature sequence includes T input features, T is a positive integer, and $t \in [1, T]$.

The feature sequence of the target data may be extracted with reference to the feature sequence extraction process in step S601 in the foregoing embodiment of this application. Details are not described herein again.

Step S142: Obtain T hidden state vectors based on a second-type recurrent neural network, where a $t^{th}$ hidden state vector and a $t^{th}$ cell state vector are determined based on a fourth gated vector, a fourth supplementary gated vector, a second candidate cell state vector, and a $(t-1)^{th}$ cell state vector. The fourth gated vector is determined based on a $(t-1)^{th}$ input feature and a $(t-1)^{th}$ hidden state vector by using a second gated neuron in the second-type recurrent neural network. The fourth supplementary gated vector is obtained by performing lightweight processing on the fourth gated vector by using a second transform neuron in the second-type recurrent neural network. The second candidate cell state vector is determined based on the $(t-1)^{th}$ input feature and the $(t-1)^{th}$ hidden state vector by using a candidate neuron in the second-type recurrent neural network.

The second gated neural network may be any gated neuron at a forget gate layer, an input gate layer, and an output gate layer in the second-type recurrent neural network, or may be any two gated neurons at a forget gate layer, an input gate layer, and an output gate layer. The second gated neuron may determine the fourth gated vector based on the $(t-1)^{th}$ input feature and the $(t-1)^{th}$ hidden state vector with reference to the processing process shown in the foregoing Formulas (1-1), (1-2), and (2-3).

The lightweight processing may include linear transformation and/or nonlinear transformation. The linear transformation and the nonlinear transformation may be transformation manners at the lightweight level. Matrix transformation, normalization, an activation function, or the like may be used for the linear transformation. Convolution processing or the like may be used for the nonlinear transformation.

When the second gated neural network in step S142 is any gated neuron at the forget gate layer, the input gate layer, and the output gate layer in the second-type recurrent neural network, lightweight processing may be separately performed on the fourth gated vector by using two second transform neurons, to obtain two fourth supplementary gated vectors. It should be understood that weight matrices of the two second transform neurons may be different. When the second gated neural network in step S142 is any two gated neurons at the forget gate layer, the input gate layer, and the output gate layer in the second-type recurrent neural network, lightweight processing may be performed by using the second transform neuron on a fourth gated vector output by one of any two gated neurons; or an operation such as splicing or adding may be first performed on two fourth gated vectors output by any two gated neurons, and then lightweight processing is performed on a result obtained after the operation such as splicing or adding, to obtain the fourth supplementary gated vector.

Lightweight processing is performed on a fourth gated vector generated by one or two gated neurons in the second-type recurrent neural network, to obtain the fourth supplementary gated vector. In comparison with a case in which three gated vectors $f_t$, $i_t$, and $o_t$ are output based on the $(t-1)^{th}$ input feature and the $(t-1)^{th}$ hidden state vector by using three gated neurons in FIG. 1(b), the quantity of parameters and the calculation amount for generating the gated vector can be reduced, thereby reducing the quantity of parameters and the calculation amount in the entire recurrent neural network and improving a network computing speed.

The candidate neuron may determine the second candidate cell state vector based on the $(t-1)^{th}$ input feature and the $(t-1)^{th}$ hidden state vector with reference to the processing process shown in the foregoing Formula (1-4).

It should be understood that step S142 is a recursive recurrent process. A $0^{th}$ hidden state vector is an initial value, and a $0^{th}$ cell state vector may be a customized initial value, for example, may be 0 or any empirical value. $1^{st}$ to $T^{th}$ cell state vectors and $1^{st}$ to $T^{th}$ hidden state vectors may be output values of the recurrent neural network.

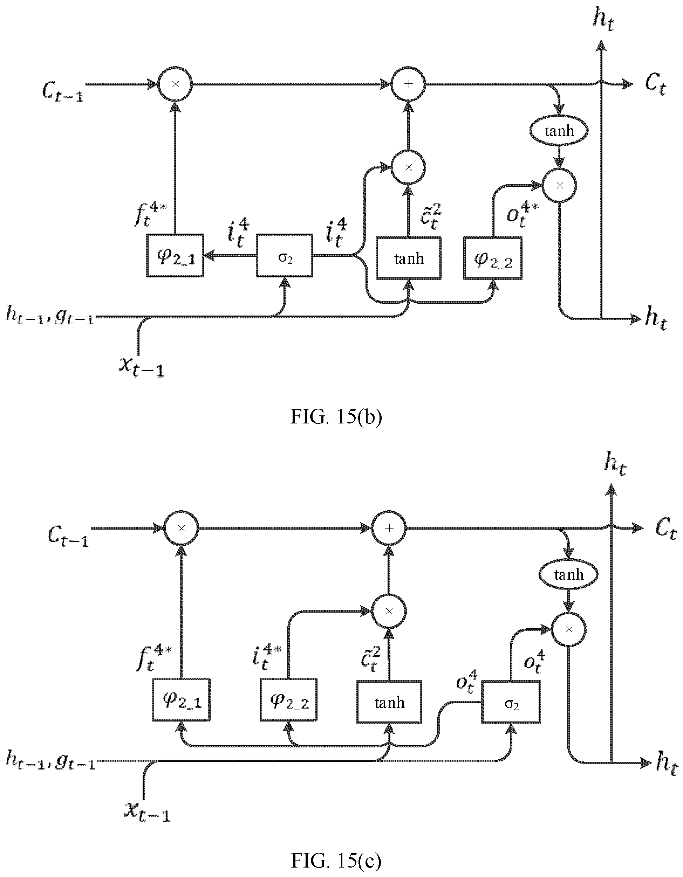

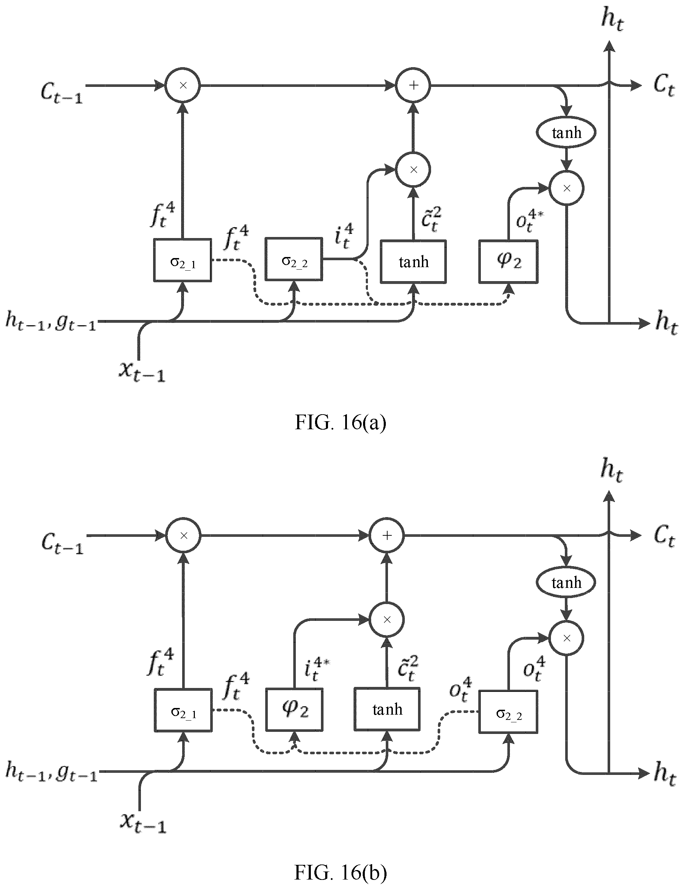

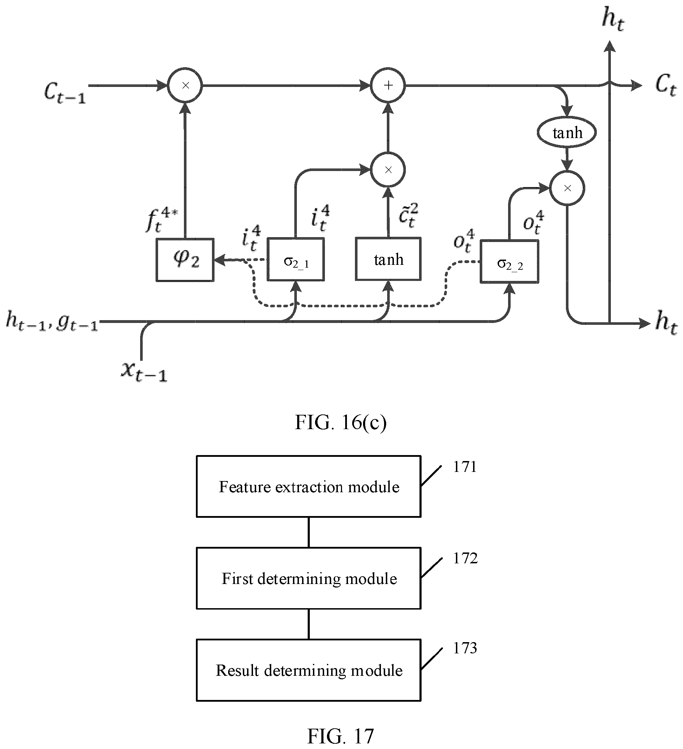

With reference to FIG. 15(a), FIG. 15(b), and FIG. 15(c), the following separately describes a process of determining the $t^{th}$ hidden state vector in step S142 when the second gated neuron is any gated neuron at the forget gate layer, the input gate layer, and the output gate layer in the second-type recurrent neural network. With reference to FIG. 16(a), FIG. 16(b), and FIG. 16(c), the following separately describes a process of determining the $t^{th}$ hidden state vector in step S 142 when the second gated neuron is any two gated neurons at the forget gate layer, the input gate layer, and the output gate layer in the second-type recurrent neural network. FIG. 15(a), FIG. 15(b), and

FIG. 15(c) are diagrams of determining a hidden state vector by using a second-type recurrent neural network according to an embodiment of this application. FIG. 16(a), FIG. 16(b), and FIG. 16(c) are diagrams of determining a hidden state vector by using a second-type recurrent neural network according to an embodiment of this application.

As shown in FIG. 15(a), $\sigma_2$ represents a second gated neuron at the forget gate layer in the second-type recurrent neural network, $\varphi_{2\_1}$ and $\varphi_{2\_2}$ represent two second transform neurons at the input gate layer and the output gate layer in the second-type recurrent neural network, $f_t^4$ represents a fourth gated vector output by the second gated neuron at the forget gate layer, $i_t^{4*}$ represents a fourth supplementary gated vector output by the second transform neuron at the input gate layer, $o_t^{4*}$ represents a fourth supplementary gated vector output by the second transform neuron at the output gate layer, and $\tilde{c}_t^2$ represents the second candidate cell state vector.

As shown in FIG. 15(a), when the second gated neuron is a gated neuron at the forget gate layer in the second-type recurrent neural network, the fourth supplementary gated vector includes fourth supplementary gated vectors that are obtained by performing lightweight processing on the fourth gated vector respectively by second transform neurons at the input gate layer and the output gate layer in the second-type recurrent neural network. Determining the $t^{th}$ hidden state vector and the $t^{th}$ cell state vector based on the fourth gated vector, the fourth supplementary gated vector, the second candidate cell state vector, and the $(t-1)^{th}$ cell state vector in step S142 includes:

determining the $t^{th}$ cell state vector based on the fourth supplementary gated vector that is obtained by performing lightweight processing on the fourth gated vector by the second transform neuron at the input gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

The processing process shown in FIG. 15(a) may be expressed as Formulas (18-1) to (18-6):

$$f_t^4 = \sigma_2(W_f x_{t-1} + U_f h_{t-1} + b_f) \qquad (18\text{-}1)$$

$$i_t^{4*} = \varphi_{2\_1}(W_i f_t^4) \qquad (18\text{-}2)$$

$$o_t^{4*} = \varphi_{2\_2}(W_o f_t^4) \qquad (18\text{-}3)$$

$$\tilde{c}_t^2 = \tanh(W_c x_{t-1} + U_c h_{t-1} + b_c) \qquad (18\text{-}4)$$

$$C_t = f_t^4 \circ C_{t-1} + i_t^{4*} \circ \tilde{c}_t^2 \qquad (18\text{-}5)$$

$$h_t = o_t^{4*} \circ tanh(C_t) \qquad (18\text{-}6)$$

Formula (18-1) indicates to obtain the fourth gated vector $f_t^4$ by inputting the $(t-1)^{th}$ input feature $x_{t-1}$ and the $(t-1)^{th}$ hidden state vector $h_{t-1}$ to the second gated neuron at the forget gate layer. Formula (18-2) indicates to obtain the fourth supplementary gated vector $i_t^{4*}$ by inputting the fourth gated vector $f_t^4$ to the second transform neuron at the input gate layer. Formula (18-3) indicates to obtain the fourth supplementary gated vector $o_t^{4*}$ by inputting the fourth gated vector $f_t^4$ to the second transform neuron at the output gate layer. Formula (18-4) indicates to obtain the second candidate cell state vector $\tilde{c}_t^2$ by inputting the $(t-1)^{th}$ input feature $x_{t-1}$ and the $(t-1)^{th}$ hidden state vector $h_{t-1}$ to the candidate neuron. Formula (18-5) indicates to obtain the $t^{th}$ cell state vector $C_t$ by multiplying the fourth gated vector $f_t^4$ by the $(t-1)^{th}$ cell state vector $C_{t-1}$, and adding a multiplication result and a product of the fourth supplementary gated vector $i_t^{4*}$ and the second candidate cell state vector $\tilde{c}_t^2$. Formula (18-6) indicates to obtain the $t^{th}$ hidden state vector $h_t$ by multiplying the fourth supplementary gated vector $o_t^{4*}$ by *tanh(Ct)*.

As shown in FIG. 15(b), $\sigma_2$ represents a second gated neuron at the input gate layer in the second-type recurrent neural network, $\varphi_{2\text{-}1}$ and $\varphi_{2\_2}$ represent two second transform neurons at the forget gate layer and the output gate layer in the second-type recurrent neural network, $i_t^4$ represents a fourth gated vector output by the second gated neuron at the input gate layer, $f_t^{4*}$ represents a fourth supplementary gated vector output by the second transform neuron at the forget gate layer, $o_t^{4*}$ represents a fourth supplementary gated vector output by the second transform neuron at the output gate layer, and $\tilde{c}_t^2$ represents the second candidate cell state vector.

As shown in FIG. 15(b), when the second gated neuron is a gated neuron at the input gate layer in the second-type recurrent neural network, the fourth supplementary gated vector includes fourth supplementary gated vectors that are obtained by performing lightweight processing on the fourth gated vector respectively by second transform neurons at the forget gate layer and the output gate layer in the second-type recurrent neural network. Determining the $t^{th}$ hidden state vector and the $t^{th}$ cell state vector based on the fourth gated vector, the fourth supplementary gated vector, the second candidate cell state vector, and the $(t-1)^{th}$ cell state vector in step S142 includes:

determining the $t^{th}$ cell state vector based on the fourth supplementary gated vector that is obtained by performing lightweight processing on the fourth gated vector by the second transform neuron at the forget gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

The processing process shown in FIG. 15(b) may be expressed as Formulas (19-1) to (19-6):

$$i_t^4 = \sigma_2(W_i x_{t-1} + U_i h_{t-1} + b_i) \qquad (19\text{-}1)$$

$$f_t^{4*} = \varphi_{2\_1}(W_f i_t^4) \qquad (19\text{-}2)$$

$$o_t^{4*} = \varphi_{2\_2}(W_o i_t^4) \qquad (19\text{-}3)$$

$$\tilde{c}_t^2 = \tanh(W_c x_{t-1} + U_c h_{t-1} + b_c) \qquad (19\text{-}4)$$

$$C_t = f_t^{4*} \circ C_{t-1} + i_t^4 \circ \tilde{c}_t^2 \qquad (19\text{-}5)$$

$$h_t = o_t^{4*} \circ tanh(C_t) \qquad (19\text{-}6)$$

Formula (19-1) indicates to obtain the fourth gated vector $i_t^4$ by inputting the $(t-1)^{th}$ input feature $x_{t-1}$ and the $(t-1)^{th}$ hidden state vector $h_{t-1}$ to the second gated neuron at the input gate layer. Formula (19-2) indicates to obtain the fourth supplementary gated vector $f_t^{4*}$ by inputting the fourth gated vector *it* to the second transform neuron at the forget gate layer. Formula (19-3) indicates to obtain the fourth supplementary gated vector $o_t^{4*}$ by inputting the fourth gated vector $i_t^4$ to the second transform neuron at the output gate layer. Formula (19-4) indicates to obtain the second candidate cell state vector $\tilde{c}_t^2$ by inputting the $(t-1)^{th}$ input feature $x_{t-1}$ and the $(t-1)^{th}$ hidden state vector $h_{t-1}$ to the candidate neuron. Formula (19-5) indicates to obtain the $t^{th}$ cell state vector $C_t$ by multiplying the fourth supplementary gated vector $f_t^{4*}$ by the $(t-1)^{th}$ cell state vector $C_{t-1}$, and adding a multiplication result and a product of the fourth gated vector *it* and the second candidate cell state vector $\tilde{c}_t^2$. Formula (19-6) indicates to obtain the $t^{th}$ hidden state vector $h_t$ by multiplying the fourth supplementary gated vector $o_t^{4*}$ by *tanh(Ct)*.

As shown in FIG. 15(c), $\sigma_2$ represents a second gated neuron at the output gate layer in the second-type recurrent neural network, $\varphi_{2\text{-}1}$ and $\varphi_{2\_2}$ represent two second transform neurons at the forget gate layer and the input gate layer in the second-type recurrent neural network, $o_t^4$ represents a fourth gated vector output by the second gated neuron at the output gate layer, $f_t^{4*}$ represents a fourth supplementary gated vector output by the second transform neuron at the forget gate layer, $i_t^{4*}$ represents a fourth supplementary gated vector output by the second transform neuron at the input gate layer, and $\tilde{c}_t^2$ represents the second candidate cell state vector.

As shown in FIG. 15(c), when the second gated neuron is a gated neuron at the output gate layer in the second-type recurrent neural network, the fourth supplementary gated vector includes fourth supplementary gated vectors that are obtained by performing lightweight processing on the fourth gated vector respectively by second transform neurons at the forget gate layer and the input gate layer in the second-type recurrent neural network. Determining the $t^{th}$ hidden state vector and the $t^{th}$ cell state vector based on the fourth gated vector, the fourth supplementary gated vector, the second candidate cell state vector, and the $(t-1)^{th}$ cell state vector in step S142 includes:

determining the $t^{th}$ cell state vector based on the fourth supplementary gated vectors that are obtained by performing lightweight processing on the fourth gated vector respectively by the second transform neurons at the forget gate layer and the input gate layer, and the second candidate cell state vector; and determining the $t^{th}$ hidden state vector based on the $t^{th}$ cell state vector and the second gated vector.

The processing process shown in FIG. 15(c) may be expressed as Formulas (20-1) to (20-6):

$$o_t^4 = \sigma_2(W_o x_{t-1} + U_o h_{t-1} + b_0) \qquad (20\text{-}1)$$

$$f_t^{4*} = \varphi_{2\_1}(W_f o_t^4) \qquad (20\text{-}2)$$

$$i_t^{4*} = \varphi_{2\_2}(W_i o_t^4) \qquad (20\text{-}3)$$

$$\tilde{c}_t^2 = \tanh(W_c x_{t-1} + U_c h_{t-1} + b_c) \qquad (20\text{-}4)$$

$$C_t = f_t^{4*} \circ C_{t-1} + i_t^{4*} \circ \tilde{c}_t^2 \qquad (20\text{-}5)$$

$$h_t = o_t^4 \circ tanh(C_t) \qquad (20\text{-}6)$$

Formula (20-1) indicates to obtain the fourth gated vector $o_t^4$ by inputting the $(t-1)^{th}$ input feature $x_{t-1}$ and the $(t-1)^{th}$ hidden state vector $h_{t-1}$ to the second gated neuron at the output gate layer. Formula (20-2) indicates to obtain the fourth supplementary gated vector $f_t^{4*}$ by inputting the fourth gated vector $o_t^4$ to the second transform neuron at the forget gate layer. Formula (20-3) indicates to obtain the fourth supplementary gated vector $i_t^{4*}$ by inputting the fourth gated vector $o_t^4$ to the second transform neuron at the input gate layer. Formula (20-4) indicates to obtain the second candidate cell state vector $\tilde{c}_t^2$ by inputting the $(t-1)^{th}$ input feature $x_{t-1}$ and the $(t-1)^{th}$ hidden state vector $h_{t-1}$ to the candidate neuron. Formula (20-5) indicates to obtain the $t^{th}$ cell state vector $C_t$ by multiplying the fourth supplementary gated vector $f_t^{4*}$ by the $(t-1)^{th}$ cell state vector $C_{t-1}$, and adding a multiplication result and a product of the fourth supplementary gated vector $i_t^{4*}$ and the second candidate cell state vector $\tilde{c}_t^2$. Formula (20-6) indicates to obtain the $t^{th}$ hidden state vector $h_t$ by multiplying the fourth gated vector $o_t^4$ by $tanh(Ct)$.

As shown in FIG. 16(a), $\sigma_{2\_1}$ and $\sigma_{2\_2}$ represent second gated neurons at the forget gate layer and the input gate layer in the second-type recurrent neural network, $\varphi_2$ represents a second transform neuron, $f_t^4$ represents a fourth gated vector output by the second gated neuron at the forget gate layer, $i_t^4$ represents a fourth gated vector output by the second gated neuron at the input gate layer, and $o_t^{4*}$ represents a fourth supplementary gated vector output by the second transform neuron at the output gate layer.

Two dashed lines in FIG. 16(a) may represent that one or two of the two dashed lines may be reserved. Specifically, the second transform neuron $\varphi_2$ may perform lightweight processing on $f_t^4$, or may perform lightweight processing on $i_t^4$, or may perform lightweight processing on $f_t^4$ and $i_t^4$. When lightweight processing is performed on $f_t^4$ and $i_t^4$, lightweight processing may be performed on a result obtained by splicing or adding $f_t^4$ and $i_t^4$. In other words, when the second gated neuron includes the gated neurons at the forget gate layer and the input gate layer in the second-type recurrent neural network, the fourth supplementary gated vector includes a fourth supplementary gated vector that is obtained by the second transform neuron by performing lightweight processing on a fourth gated vector determined by a second gated neuron at the forget gate layer and/or the input gate layer.

As shown in FIG. 16(a), determining the t$^{th}$ hidden state vector and the t$^{th}$ cell state vector based on the fourth gated vector, the fourth supplementary gated vector, the second candidate cell state vector, and the (t-1)$^{th}$ cell state vector includes: determining the t$^{th}$ cell state vector based on the fourth gated vectors respectively determined by the second gated neurons at the forget gate layer and the input gate layer, and the second candidate cell state vector; and determining the t$^{th}$ hidden state vector based on the t$^{th}$ cell state vector and the fourth supplementary gated vector.

The processing process shown in FIG. 16(a) may be expressed as Formulas (21-1) to (21-6):

$$f_t^4 = \sigma_{2\_1}(W_f x_{t-1} + U_f h_{t-1} + b_f) \tag{21-1}$$

$$i_t^4 = \sigma_{2\_2}(W_i x_{t-1} + U_i h_{t-1} + b_i) \tag{21-2}$$

$$o_t^{4*} = \varphi_2(W_o f_t^4), \text{ or } o_t^{4*} = \varphi_2(W_o i_t^4), \text{ or } o_t^{4*} = \varphi_2(W_o[f_t^4, i_t^4]) \tag{21-3}$$

$$\tilde{c}_t^2 = \tanh(W_c x_{t-1} + U_c h_{t-1} + b_c) \tag{21-4}$$

$$C_t = f_t^4 \circ C_{t-1} + i_t^4 \circ \tilde{c}_t^2 \tag{21-5}$$

$$h_t = o_t^{4*} \circ tanh(C_t) \tag{21-6}$$

Formula (21-1) indicates to obtain the fourth gated vector $f_t^4$ by inputting the (t-1)$^{th}$ input feature $x_{t-1}$ and the (t-1)$^{th}$ hidden state vector $h_{t-1}$ to the second gated neuron at the forget gate layer. Formula (21-2) indicates to obtain the fourth gated vector $i_t^4$ by inputting the (t-1)$^{th}$ input feature $x_{t-1}$ and the (t-1)$^{th}$ hidden state vector $h_{t-1}$ to the second gated neuron at the input gate layer. Formula (21-3) indicates to obtain the fourth supplementary gated vector $o_t^{4*}$ by inputting the fourth gated vector $i_t^4$ and/or $f_t^4$ to the second transform neuron at the output gate layer. Formula (21-4) indicates to obtain the second candidate cell state vector $\tilde{c}_t^2$ by inputting the (t-1)$^{th}$ input feature $x_{t-1}$ and the (t-1)$^{th}$ hidden state vector $h_{t-1}$ to the candidate neuron. Formula (21-5) indicates to obtain the t$^{th}$ cell state vector $C_t$ by multiplying the fourth gated vector $f_t^4$ by the (t-1)$^{th}$ cell state vector $C_{t-1}$, and adding a multiplication result and a product of the fourth gated vector *it* and the second candidate cell state vector $\tilde{c}_t^2$. Formula (21-6) indicates to obtain the t$^{th}$ hidden state vector $h_t$ by multiplying the fourth supplementary gated vector $o_t^{4*}$ by *tanh(Ct)*.

As shown in FIG. 16(b), $\sigma_{2\_1}$ and $\sigma_{2\_2}$ represent second gated neurons at the forget gate layer and the output gate layer in the second-type recurrent neural network, $\varphi_2$ represents a second transform neuron at the input gate layer, $f_t^4$ represents a fourth gated vector output by the second gated neuron at the forget gate layer, $o_t^4$ represents a fourth gated vector output by the second gated neuron at the output gate layer, and $i_t^{4*}$ represents a fourth supplementary gated vector output by the second transform neuron at the input gate layer.

Two dashed lines in FIG. 16(b) may represent that one or two of the two dashed lines may be reserved. Specifically, the second transform neuron $\varphi_2$ may perform lightweight processing on $f_t^4$ , or may perform lightweight processing on $o_t^4$ , or may perform lightweight processing on $f_t^4$ and $o_t^4$ . When lightweight processing is performed on $f_t^4$ and $o_t^4$ , lightweight processing may be performed on a result obtained by splicing or adding $f_t^4$ and $o_t^4$ . In other words, when the second gated neuron includes the gated neurons at the forget gate layer and the output gate layer in the second-type recurrent neural network, the fourth supplementary gated vector includes a fourth supplementary gated vector that is obtained by the second transform neuron by performing lightweight processing on a fourth gated vector determined by a second gated neuron at the forget gate layer and/or the output gate layer.

As shown in FIG. 16(a), determining the $t^{th}$ hidden state vector and the $t^{th}$ cell state vector based on the fourth gated vector, the fourth supplementary gated vector, the second candidate cell state vector, and the $(t-1)^{th}$ cell state vector includes: determining the $t^{th}$ cell state vector based on the fourth gated vector determined by the second gated neuron at the forget gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

The processing process shown in FIG. 16(b) may be expressed as Formulas (22-1) to (22-6):

$$f_t^4 = \sigma_{2\_1}(W_f x_{t-1} + U_f h_{t-1} + b_f) \tag{22-1}$$

$$o_t^4 = \sigma_{2\_2}(W_o x_{t-1} + U_o h_{t-1} + b_o) \tag{22-2}$$

$$i_t^{4*} = \varphi_2(W_i f_t^4), \text{ or } i_t^{4*} = \varphi_2(W_i o_t^4), \text{ or } i_t^{4*} = \varphi_2(W_i[f_t^4, o_t^4]) \tag{22-3}$$

$$\tilde{c}_t^2 = \tanh(W_c x_{t-1} + U_c h_{t-1} + b_c) \tag{22-4}$$

$$C_t = f_t^4 \circ C_{t-1} + i_t^{4*} \circ \tilde{c}_t^2 \tag{22-5}$$

$$h_t = o_t^4 \circ tanh(C_t) \tag{22-6}$$

Formula (22-1) indicates to obtain the fourth gated vector $f_t^4$ by inputting the $(t-1)^{th}$ input feature $x_{t-1}$ and the $(t-1)^{th}$ hidden state vector $h_{t-1}$ to the second gated neuron at the forget gate layer. Formula (22-2) indicates to obtain the fourth gated vector $o_t^4$ by inputting the $(t-1)^{th}$ input feature $x_{t-1}$ and the $(t-1)^{th}$ hidden state vector $h_{t-1}$ to the second gated neuron at the output gate layer. Formula (22-3) indicates to obtain the fourth supplementary gated vector $i_t^{4*}$ by inputting the fourth gated vector $f_t^4$ and/or $o_t^4$ to the second transform neuron at the input gate layer. Formula (22-4) indicates to obtain the second candidate cell state vector $\tilde{c}_t^2$ by inputting the $(t-1)^{th}$ input feature $x_{t-1}$ and the $(t-1)^{th}$ hidden state vector $h_{t-1}$ to the candidate neuron. Formula (22-5) indicates to obtain the $t^{th}$ cell state vector $C_t$ by multiplying the fourth gated vector $f_t^4$ by the $(t-1)^{th}$ cell state vector $C_{t-1}$, and adding a multiplication result and a product of the fourth supplementary gated vector $i_t^{4*}$ and the second candidate cell state vector $\tilde{c}_t^2$ . Formula (22-6) indicates to obtain the $t^{th}$ hidden state vector $h_t$ by multiplying the fourth gated vector $o_t^4$ by *tanh(Ct)*.

As shown in FIG. 16(c), $\sigma_{2\_1}$ and $\sigma_{2\_2}$ represent second gated neurons at the input gate layer and the output gate layer in the second-type recurrent neural network, $\varphi_2$ represents a second transform neuron at the forget gate layer, $i_t^4$

represents a fourth gated vector output by the second gated neuron at the input gate layer, $o_t^4$ represents a fourth gated vector output by the second gated neuron at the output gate layer, and $f_t^{4*}$ represents a fourth supplementary gated vector output by the second transform neuron at the forget gate layer.

Two dashed lines in FIG. 16(c) may represent that one or two of the two dashed lines may be reserved. Specifically, the second transform neuron $\varphi_2$ may perform lightweight processing on $i_t^4$, or may perform lightweight processing on $o_t^4$, or may perform lightweight processing on $i_t^4$ and $o_t^4$. When lightweight processing is performed on $i_t^4$ and $o_t^4$, lightweight processing may be performed on a result obtained by splicing or adding $i_t^4$ and $o_t^4$. In other words, when the second gated neuron includes the gated neurons at the input gate layer and the output gate layer in the second-type recurrent neural network, the fourth supplementary gated vector includes a fourth supplementary gated vector that is obtained by the second transform neuron by performing lightweight processing on a fourth gated vector determined by a second gated neuron at the input gate layer and/or the output gate layer.

As shown in FIG. 16(a), determining the $t^{th}$ hidden state vector and the $t^{th}$ cell state vector based on the fourth gated vector, the fourth supplementary gated vector, the second candidate cell state vector, and the $(t-1)^{th}$ cell state vector includes: determining the $t^{th}$ cell state vector based on the fourth gated vector determined by the second gated neuron at the input gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

The processing process shown in FIG. 16(c) may be expressed as Formulas (23-1) to (23-6):

$$i_t^4 = \sigma_{2\_1}(W_i x_{t-1} + U_i h_{t-1} + b_i) \tag{23-1}$$

$$o_t^4 = \sigma_{2\_2}(W_o x_{t-1} + U_o h_{t-1} + b_o) \tag{23-2}$$

$$f_t^{4*} = \varphi_2\big(W_f i_t^4\big), \text{ or } f_t^{4*} = \varphi_2\big(W_f o_t^4\big), \text{ or } f_t^{4*} = \varphi_2\big(W_f [i_t^4, o_t^4]\big) \tag{23-3}$$

$$\tilde{c}_t^2 = \tanh\,(W_c x_{t-1} + U_c h_{t-1} + b_c) \tag{23-4}$$

$$C_t = f_t^{4*} \circ C_{t-1} + i_t^4 \circ \tilde{c}_t^2 \tag{23-5}$$

$$h_t = o_t^4 \circ tanh(C_t) \tag{23-6}$$

Formula (23-1) indicates to obtain the fourth gated vector $i_t^4$ by inputting the $(t-1)^{th}$ input feature $x_{t-1}$ and the $(t-1)^{th}$ hidden state vector $h_{t-1}$ to the second gated neuron at the input gate layer. Formula (23-2) indicates to obtain the fourth gated vector $o_t^4$ by inputting the $(t-1)^{th}$ input feature $x_{t-1}$ and the $(t-1)^{th}$ hidden state vector $h_{t-1}$ to the second gated neuron at the output gate layer. Formula (23-3) indicates to obtain the fourth supplementary gated vector $f_t^{4*}$ by inputting the fourth gated vector $i_t^4$ and/or $o_t^4$ to the second transform neuron at the forget gate layer. Formula (23-4) indicates to obtain the second candidate cell state vector $\tilde{c}_t^2$ by inputting the $(t-1)^{th}$ input feature $x_{t-1}$ and the $(t-1)^{th}$ hidden state vector $h_{t-1}$ to the candidate neuron. Formula (23-5) indicates to obtain the $t^{th}$ cell state vector $C_t$ by multiplying the fourth supplementary gated vector $f_t^{4*}$ by the $(t-1)^{th}$ cell state vector $C_{t-1}$, and adding a multiplication result and a product of the fourth gated vector $i_t^4$ and the second candidate cell state vector $\tilde{c}_t^2$. Formula (23-6) indicates to obtain the $t^{th}$ hidden state vector $h_t$ by multiplying the fourth gated vector $o_t^4$ by $tanh(C_t)$.

Step S143: Obtain a processing result of the target data based on the T hidden state vectors by using a downstream task network.

The downstream task network may be customized based on a specific downstream task, and different downstream task networks may be used for different downstream tasks. A network structure, a network type, and the like of the downstream task network are not limited in this embodiment of this application. For example, the downstream task may include at least one of the following: a speech recognition task, a speech noise cancellation task, a voice wake-up task, a text recognition task, and a text translation task. Correspondingly, the processing result may include at least one of the following: a speech recognition result, a speech noise cancellation result, and a voice wake-up result of voice data, a text recognition result of image data, and a text translation result of text data.

For example, in the speech recognition task, a text sequence corresponding to voice data may be determined based on T hidden state vectors by using a decoder. For example, the decoder may determine, based on the T hidden state vectors, a probability that each hidden state vector belongs to each word in a language model, and provide a text sequence with a maximum probability as a processing result of the voice data. In the voice wake-up task, after a text sequence of voice data is output by using a decoder, whether the text sequence corresponding to the voice data matches a specified word or sentence of a voice assistant may be detected, and a matching result is used as a processing result of the voice data. In the speech noise cancellation task, a processing process reverse to feature extraction in step S 141 may be performed on T hidden state vectors, for example, processing reverse to MFCC is performed, to obtain voice data after noise cancellation.

According to this embodiment of this application, lightweight processing is performed on the fourth gated vector, to obtain the fourth supplementary gated vector. This is equivalent to generating a partial gated vector through lightweight processing. In a related technology, three gated neurons in the second-type recurrent neural network are directly used to output three gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire second-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the second-type recurrent neural network on a hidden state can be ensured, so that the second-type recurrent neural network has higher universality.

FIG. 17 is a block diagram of a data processing apparatus according to an embodiment of this application. As shown in FIG. 17, the apparatus includes the following modules.

A feature extraction module 171 is configured to extract a feature sequence of target data. The feature sequence includes T input features. Herein, T is a positive integer, and $t \in [1, T]$.

A first determining module 172 is configured to obtain T hidden state vectors based on a recurrent neural network. A $t^{th}$ hidden state vector is determined based on a $(t-1)^{th}$ input feature, a $(t-1)^{th}$ hidden state vector, and a $(t-1)^{th}$ extended state vector. The $(t-1)^{th}$ extended state vector is obtained by performing lightweight processing based on the $(t-1)^{th}$ hidden state vector.

A result determining module 173 is configured to obtain a processing result of the target data based on the T hidden state vectors by using a downstream task network.

According to this embodiment of this application, because a partial state vector in a complete state vector that currently needs to be input to the recurrent neural network is an extended state vector obtained through lightweight processing, the recurrent neural network may be controlled to output a hidden state vector of a small dimension. In this way, a quantity of parameters and a calculation amount that are required for outputting the hidden state vector by the recurrent neural network can be reduced. A dimension of the hidden state vector output by the recurrent neural network is reduced. However, because an extended state vector obtained by performing lightweight processing on the hidden state vector and the hidden state vector jointly form a complete state vector input to the recurrent neural network, this is equivalent to a supplementary to status information input to the recurrent neural network. In this way, a network computing speed can be improved, network precision can be ensured during data processing, and processing efficiency of the target data can be improved. In addition, a recurrent neural network with a reduced quantity of parameters and a reduced calculation amount can be deployed on a terminal device, and has higher universality.

Optionally, the recurrent neural network includes a first-type recurrent neural network. The first-type recurrent neural network includes a reset gate layer and an update gate layer. The reset gate layer is used to control information to be discarded from a hidden state vector. The update gate layer is used to control information to be added to a hidden state vector. For the first determining module 172, when the recurrent neural network includes the first-type recurrent neural network, that a $t^{th}$ hidden state vector is determined based on a $(t-1)^{th}$ input feature, a $(t-1)^{th}$ hidden state vector, and a $(t-1)^{th}$ extended state vector includes: determining first gated vectors based on the $(t-1)^{th}$ input feature, the $(t-1)^{th}$ hidden state vector, and the $(t-1)^{th}$ extended state vector respectively by using first gated neurons at the reset gate layer and the update gate layer in the first-type recurrent neural network; determining, by using a candidate neuron in the first-type recurrent neural network, a first candidate hidden state vector based on the first gated vector determined by the first gated neuron at the reset gate layer, the $(t-1)^{th}$ input feature, and the $(t-1)^{th}$ hidden state vector, or determining a first candidate hidden state vector based on the first gated vector determined by the first gated neuron at the reset gate layer, the $(t-1)^{th}$ input feature, the $(t-1)^{th}$ hidden state vector, and the $(t-1)^{th}$ extended state vector; and determining the $t^{th}$ hidden state vector based on the first gated vector determined by the first gated neuron at the update gate layer, the $(t-1)^{th}$ hidden state vector, and the first candidate hidden state vector.

According to this embodiment of this application, the $t^{th}$ hidden state vector is determined based on the $(t-1)^{th}$ input feature, the $(t-1)^{th}$ hidden state vector, and the $(t-1)^{th}$ extended state vector by using the first-type recurrent neural network, so that the first-type recurrent neural network can output a hidden state vector of a small dimension, thereby reducing a quantity of parameters and a calculation amount in the first-type recurrent neural network.

Optionally, for the first determining module 172, when the recurrent neural network includes the first-type recurrent neural network, that a $t^{th}$ hidden state vector is determined based on a $(t-1)^{th}$ input feature, a $(t-1)^{th}$ hidden state vector, and a $(t-1)^{th}$ extended state vector includes: determining a first gated vector based on the $(t-1)^{th}$ input feature, the $(t-1)^{th}$ hidden state vector, and the $(t-1)^{th}$ extended state vector by using a first gated neuron at the reset gate layer or the update gate layer in the first-type recurrent neural network; performing lightweight processing on the first gated vector by using a first transform neuron in the first-type recurrent neural network, to obtain a first supplementary gated vector; and determining the $t^{th}$ hidden state vector based on the $(t-1)^{th}$ input feature, the $(t-1)^{th}$ hidden state vector, the first supplementary gated vector, and the first gated vector, or determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a second candidate hidden state vector based on the $(t-1)^{th}$ input feature, the $(t-1)^{th}$ hidden state vector, and the first supplementary gated vector by using a candidate neuron in the first-type recurrent neural network; and determining the $t^{th}$ hidden state vector based on the first gated vector, the $(t-1)^{th}$ hidden state vector, and the second candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector includes: determining a third candidate hidden state vector based on the $(t-1)^{th}$ input feature, the $(t-1)^{th}$ hidden state vector, and the first gated vector by using a candidate neuron in the first-type recurrent neural network; and determining the $t^{th}$ hidden state vector based on the first supplementary gated vector, the $(t-1)^{th}$ hidden state vector, and the third candidate hidden state vector.

Optionally, when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fourth candidate hidden state vector based on the $(t-1)^{th}$ input feature, the $(t-1)^{th}$ hidden state vector, the first supplementary gated vector, and the $(t-1)^{th}$ extended state vector by using a candidate neuron in the first-type recurrent neural network; and determining the $t^{th}$ hidden state vector based on the first gated vector, the $(t-1)^{th}$ hidden state vector, and the fourth candidate hidden state vector.

Optionally, when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector includes: determining a fifth candidate hidden state vector based on the $(t-1)^{th}$ input feature, the $(t-1)^{th}$ hidden state vector, the first gated vector, and the $(t-1)^{th}$ extended state vector by using a candidate neuron in the first-type recurrent neural network; and determining the $t^{th}$ hidden state vector based on the first supplementary gated vector, the $(t-1)^{th}$ hidden state vector, and the fifth candidate hidden state vector.

According to this embodiment of this application, lightweight processing is performed on the first gated vector, to obtain the first supplementary gated vector. This is equivalent to generating a partial gated vector through lightweight processing. In a related technology, two gated neurons in the first-type recurrent neural network are directly used to output two gated vectors based on the $(t-1)^{th}$ input feature and a $(t-1)^{th}$ spliced state vector. In comparison, in this application, a quantity of parameters and a calculation amount for generating a gated vector can be reduced, thereby reducing a quantity of parameters and a calculation amount in the entire first-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the first-type recurrent neural network on a hidden state can be ensured, so that the first-type recurrent neural network has higher universality.

Optionally, the recurrent neural network includes a second-type recurrent neural network. The second-type recurrent neural network includes a forget gate layer, an input gate layer, and an output gate layer. The forget gate layer is used to control information to be discarded from a cell state vector. The input gate layer is used to control information to be added to a cell state vector. The output gate layer is used to control information in a to-be-output cell state vector. For the first determining module 172, that a $t^{th}$ hidden state vector is determined based on a $(t-1)^{th}$ input feature, a $(t-1)^{th}$ hidden state vector, and a $(t-1)^{th}$ extended state vector includes: splicing the $(t-1)^{th}$ hidden state vector and the $(t-1)^{th}$ extended state vector, to obtain a $(t-1)^{th}$ spliced state vector; and determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network, where the $t^{th}$ cell state vector is determined based on the $(t-1)^{th}$ spliced state vector, the $(t-1)^{th}$ input feature, and the $(t-1)^{th}$ cell state vector, the $t^{th}$ hidden state vector is determined based on the $(t-1)^{th}$ spliced state vector, the $(t-1)^{th}$ input feature, and the $t^{th}$ cell state vector, and a $0^{th}$ cell state vector is an initial value.

According to this embodiment of this application, the second-type recurrent neural network can output a hidden state vector of a small dimension, thereby reducing a quantity of parameters and a calculation amount in the second-type recurrent neural network.

Optionally, the determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network includes: determining a second gated vector based on the $(t-1)^{th}$ input feature and the $(t-1)^{th}$ spliced state vector by using a second gated neuron in the second-type recurrent neural network; performing lightweight processing on the second gated vector by using a second transform neuron in the second-type recurrent neural network, to obtain a second supplementary gated vector; determining a first candidate cell state vector based on the $(t-1)^{th}$ input feature and the $(t-1)^{th}$ spliced state vector by using a candidate neuron in the second-type recurrent neural network; and determining the $t^{th}$ hidden state vector and the $t^{th}$ cell state vector based on the second gated vector, the second supplementary gated vector, the first candidate cell state vector, and the $(t-1)^{th}$ cell state vector.

Optionally, when the second gated neuron is a gated neuron at the forget gate layer in the second-type recurrent neural network, the second supplementary gated vector includes second supplementary gated vectors that are obtained by performing lightweight processing on the second gated vector respectively by second transform neurons at the input gate layer and the output gate layer in the second-type recurrent neural network. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the input gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the input gate layer in the second-type recurrent neural network, the second supplementary gated vector includes second supplementary gated vectors that are obtained by performing lightweight processing on the second gated vector respectively by second transform neurons at the forget gate layer and the output gate layer in the second-type recurrent neural network. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vector that is obtained by performing lightweight processing on the second gated vector by the second transform neuron at the forget gate layer, the second gated vector, and the first candidate cell state vector; and determining the $t^{th}$ hidden state vector based on the $t^{th}$ cell state vector and the second supplementary gated vector that is obtained by performing lightweight processing on the second gated vector by the second transform neuron at the output gate layer.

Optionally, when the second gated neuron is a gated neuron at the output gate layer in the second-type recurrent neural network, the second supplementary gated vector includes second supplementary gated vectors that are obtained by performing lightweight processing on the second gated vector respectively by second transform neurons at the forget gate layer and the input gate layer in the second-type recurrent neural network. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second supplementary gated vectors that are obtained by performing lightweight processing on the second gated vector respectively by the second transform neurons at the forget gate layer and the input gate layer, and the first candidate cell state vector; and determining the $t^{th}$ hidden state vector based on the $t^{th}$ cell state vector and the second gated vector.

Optionally, when the second gated neuron includes gated neurons at the forget gate layer and the input gate layer in the second-type recurrent neural network, the second supplementary gated vector includes a second supplementary gated vector that is obtained by the second transform neuron by performing lightweight processing on a second gated vector determined by the second gated neuron at the forget gate layer and/or the input gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vectors respectively determined by the second gated neurons at the forget gate layer and the input gate layer, and the first candidate cell state vector; and determining the $t^{th}$ hidden state vector based on the $t^{th}$ cell state vector and the second supplementary gated vector.

Optionally, when the second gated neuron includes gated neurons at the forget gate layer and the output gate layer in the second-type recurrent neural network, the second supplementary gated vector includes a second supplementary gated vector that is obtained by the second transform neuron by performing lightweight processing on a second gated vector determined by a second gated neuron at the forget gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the forget gate layer, the second supplementary gated vector, and the first candidate cell state vector; and determining the $t^{th}$ hidden state vector based on the $t^{th}$ cell state vector and the second gated vector determined by the second gated neuron at the output gate layer.

Optionally, when the second gated neuron includes gated neurons at the input gate layer and the output gate layer in the second-type recurrent neural network, the second supplementary gated vector includes a second supplementary gated vector that is obtained by the second transform neuron by performing lightweight processing on a second gated vector determined by a second gated neuron at the input gate layer and/or the output gate layer. The determining the $t^{th}$ hidden state vector and the $t^{th}$ cell state vector based on the second gated vector, the second supplementary gated vector, the first candidate cell state vector, and the $(t-1)^{th}$ cell state vector includes: determining the $t^{th}$ cell state vector based on the second gated vector determined by the second gated neuron at the input gate layer, the second supplementary gated vector, and the first candidate cell state vector; and determining the $t^{th}$ hidden state vector based on the $t^{th}$ cell state vector and the second gated vector determined by the second gated neuron at the output gate layer.

According to this embodiment of this application, lightweight processing is performed on the second gated vector, to obtain the second supplementary gated vector. This is equivalent to generating a partial gated vector through lightweight processing. In a related technology, three gated neurons in the second-type recurrent neural network are directly used to output three gated vectors based on the $(t-1)^{th}$ input feature and a $(t-1)^{th}$ spliced state vector. In comparison, in this application, a quantity of parameters and a calculation amount for generating a gated vector can be reduced, thereby reducing a quantity of parameters and a calculation amount in the entire second-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the second-type recurrent neural network on a hidden state can be ensured, so that the second-type recurrent neural network has higher universality.

Optionally, the lightweight processing includes nonlinear transformation and/or linear transformation.

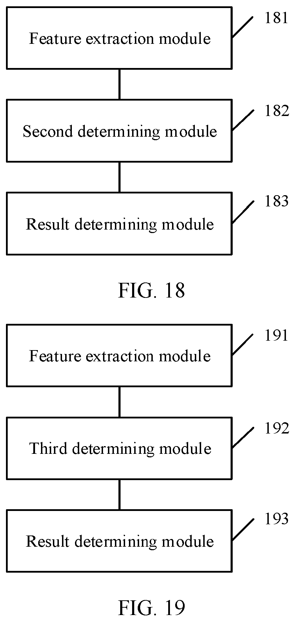

FIG. 18 is a block diagram of a data processing apparatus according to an embodiment of this application. As shown in FIG. 18, the apparatus includes the following modules.

A feature extraction module 181 is configured to extract a feature sequence of target data. The feature sequence includes T input features. Herein, T is a positive integer, and $t \in [1, T]$.

A second determining module 182 is configured to obtain T hidden state vectors based on a first-type recurrent neural network, where a $t^{th}$ hidden state vector is determined based on a $(t-1)^{th}$ input feature, a $(t-1)^{th}$ hidden state vector, a third supplementary gated vector, and a third gated vector. The third gated vector is determined based on the $(t-1)^{th}$ input feature and the $(t-1)^{th}$ hidden state vector by using a first gated neuron in the first-type recurrent neural network. The third supplementary gated vector is obtained by performing lightweight processing on the third gated vector by using a first transform neuron in the first-type recurrent neural network.

A result determining module 183 is configured to obtain a processing result of the target data based on the T hidden state vectors by using a downstream task network.

Optionally, when the first gated neuron is a gated neuron at an update gate layer in the first-type recurrent neural network, for the second determining module 182, that a $t^{th}$ hidden state vector is determined based on a $(t-1)^{th}$ input feature, a $(t-1)^{th}$ hidden state vector, a third supplementary gated vector, and a third gated vector includes: determining a sixth candidate hidden state vector based on the $(t-1)^{th}$ input feature, the $(t-1)^{th}$ hidden state vector, and the third supplementary gated vector by using a candidate neuron in the first-type recurrent neural network; and determining the $t^{th}$ hidden state vector based on the third gated vector, the $(t-1)^{th}$ hidden state vector, and the sixth candidate hidden state vector.

Optionally, when the first gated neuron is a gated neuron at a reset gate layer in the first-type recurrent neural network, for the second determining module 182, that a $t^{th}$ hidden state vector is determined based on a $(t-1)^{th}$ input feature, a $(t-1)^{th}$ hidden state vector, a third supplementary gated vector, and a third gated vector includes: determining a seventh candidate hidden state vector based on the $(t-1)^{th}$ input feature, the $(t-1)^{th}$ hidden state vector, and the third gated vector by using a candidate neuron in the first-type recurrent neural network; and determining the $t^{th}$ hidden state vector based on the third supplementary gated vector, the $(t-1)^{th}$ hidden state vector, and the seventh candidate hidden state vector.

Optionally, the lightweight processing includes nonlinear transformation and/or linear transformation.

According to this embodiment of this application, lightweight processing is performed on the third gated vector, to obtain the third supplementary gated vector. This is equivalent to generating a partial gated vector through lightweight processing. In a related technology, two gated neurons in the first-type recurrent neural network are directly used to output two gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire first-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the first-type recurrent neural network on a hidden state can be ensured, so that the first-type recurrent neural network has higher universality.

FIG. 19 is a block diagram of a data processing apparatus according to an embodiment of this application. As shown in FIG. 19, the apparatus includes the following modules.

A feature extraction module 191 is configured to extract a feature sequence of target data. The feature sequence includes T input features. Herein, T is a positive integer, and $t \in [1, T]$.

A third determining module 192 is configured to obtain T hidden state vectors based on a second-type recurrent neural network, where a $t^{th}$ hidden state vector and a $t^{th}$ cell state vector are determined based on a fourth gated vector, a fourth supplementary gated vector, a second candidate cell state vector, and a $(t-1)^{th}$ cell state vector. The fourth gated vector is determined based on a $(t-1)^{th}$ input feature and a $(t-1)^{th}$ hidden state vector by using a second gated neuron in the second-type recurrent neural network. The fourth supplementary gated vector is obtained by performing lightweight processing on the fourth gated vector by using a second transform neuron in the second-type recurrent neural network. The second candidate cell state vector is determined based on the $(t-1)^{th}$ input feature and the $(t-1)^{th}$ hidden state vector by using a candidate neuron in the second-type recurrent neural network.

A result determining module 193 is configured to obtain a processing result of the target data based on the T hidden state vectors by using a downstream task network.

Optionally, when the second gated neuron is a gated neuron at a forget gate layer in the second-type recurrent neural network, the fourth supplementary gated vector includes fourth supplementary gated vectors that are obtained by performing lightweight processing on the fourth gated vector respectively by second transform neurons at an input gate layer and an output gate layer in the second-type recurrent neural network. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the input gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at an input gate layer in the second-type recurrent neural network, the fourth supplementary gated vector includes fourth supplementary gated vectors that are obtained by performing lightweight processing on the fourth gated vector respectively by second transform neurons at a forget gate layer and an output gate layer in the second-type recurrent neural network. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vector that is obtained by performing lightweight processing on the fourth gated vector by the second transform neuron at the forget gate layer, the fourth gated vector, and the second candidate cell state vector; and determining the $t^{th}$ hidden state vector based on the $t^{th}$ cell state vector and the fourth supplementary gated vector that is obtained by performing lightweight processing on the fourth gated vector by the second transform neuron at the output gate layer.

Optionally, when the second gated neuron is a gated neuron at the output gate layer in the second-type recurrent neural network, the fourth supplementary gated vector includes fourth supplementary gated vectors that are obtained by performing lightweight processing on the fourth gated vector respectively by second transform neurons at the forget gate layer and the input gate layer in the second-type recurrent neural network. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth supplementary gated vectors that are obtained by performing lightweight processing on the fourth gated vector respectively by the second transform neurons at the forget gate layer and the input gate layer, and the second candidate cell state vector; and determining the $t^{th}$ hidden state vector based on the $t^{th}$ cell state vector and the second gated vector.

Optionally, when the second gated neuron includes gated neurons at the forget gate layer and the input gate layer in the second-type recurrent neural network, the fourth supplementary gated vector includes a fourth supplementary gated vector that is obtained by the second transform neuron by performing lightweight processing on a fourth gated vector determined by the second gated neuron at the forget gate layer and/or the input gate layer. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vectors respectively determined by the second gated neurons at the forget gate layer and the input gate layer, and the second candidate cell state vector; and determining the $t^{th}$ hidden state vector based on the $t^{th}$ cell state vector and the fourth supplementary gated vector.

Optionally, when the second gated neuron includes gated neurons at the forget gate layer and the output gate layer in the second-type recurrent neural network, the fourth supplementary gated vector includes a fourth supplementary gated vector that is obtained by the second transform neuron by performing lightweight processing on a fourth gated vector determined by a second gated neuron at the forget gate layer and/or the output gate layer. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the forget gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

Optionally, when the second gated neuron includes gated neurons at the input gate layer and the output gate layer in the second-type recurrent neural network, the fourth supplementary gated vector includes a fourth supplementary gated vector that is obtained by the second transform neuron by performing lightweight processing on a fourth gated vector determined by a second gated neuron at the input gate layer and/or the output gate layer. For the third determining module 192, that a $t^{th}$ hidden state vector and a $t^{th}$ cell state vector are determined based on a fourth gated vector, a fourth supplementary gated vector, a second candidate cell state vector, and a $(t-1)^{th}$ cell state vector includes: determining the $t^{th}$ cell state vector based on the fourth gated vector determined by the second gated neuron at the input gate layer, the fourth supplementary gated vector, and the second candidate cell state vector; and determining the $t^{th}$ hidden state vector based on the $t^{th}$ cell state vector and the fourth gated vector determined by the second gated neuron at the output gate layer.

According to this embodiment of this application, lightweight processing is performed on the fourth gated vector, to obtain the fourth supplementary gated vector. This is equivalent to generating a supplementary gated vector through lightweight processing at a lightweight level. Three gated neurons in the second-type recurrent neural network are directly used to output three gated vectors based on the $(t-1)^{th}$ input feature and a $(t-1)^{th}$ hidden state vector. In comparison, in this application, a quantity of parameters and a calculation amount for generating a gated vector can be reduced, thereby reducing a quantity of parameters and a calculation amount in the entire second-type recurrent neural network and improving a network computing speed. In addition, compared with a current manner in which a quantity of parameters and a calculation amount in a network are compressed through pruning processing, in this embodiment of this application, the quantity of parameters and the calculation amount can be reduced, and control of the second-type recurrent neural network on a hidden state can be ensured, so that the second-type recurrent neural network has higher universality.

An embodiment of this application provides a data processing apparatus, including a processor and a memory configured to store instructions executable by the processor. When executing the instructions, the processor is configured to implement the foregoing method.

An embodiment of this application provides a terminal device. The terminal device may perform the foregoing data processing method.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code is run in a processor in an electronic device, the processor in the electronic device performs the foregoing method.

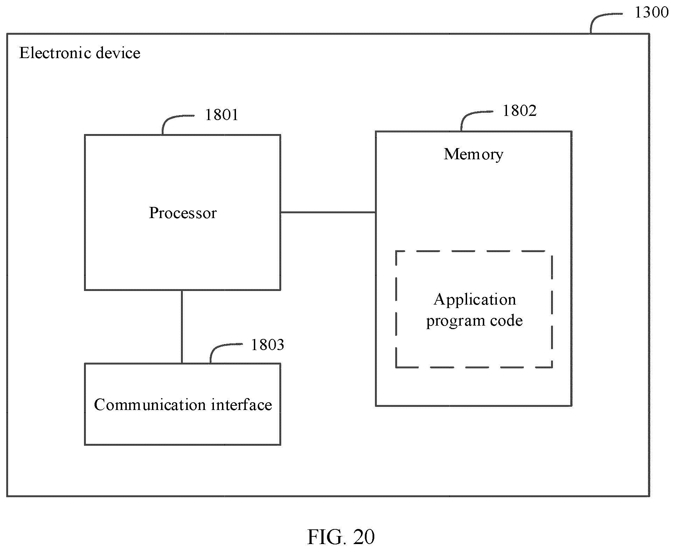

FIG. 20 is a diagram of a structure of an electronic device 1300 according to an embodiment of this application. As shown in FIG. 20, the electronic device 1300 may be a server or a terminal device, and performs functions in the data processing method shown in any one of FIG. 2 to FIG. 16(c). The electronic device 1300 includes at least one processor 1801, at least one memory 1802, and at least one communication interface 1803. In addition, the electronic device may further include an antenna and other general-purpose components, and details are not described herein.

The following specifically describes the components of the electronic device 1300 with reference to FIG. 20.

The processor 1801 may be a general-purpose central processing unit (CPU), a microprocessor, an application-specific integrated circuit (application-specific integrated circuit, ASIC), or one or more integrated circuits configured to control execution of the foregoing solution program. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, an Ethernet, a radio access network (RAN), a core network, or a wireless local area network (Wireless Local Area Network, WLAN).

The memory 1802 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM), other compact disc storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of instructions or a data structure and that is accessible to a computer. However, this is not limited thereto. The memory may exist independently, and is connected to the processor through a bus. The memory may alternatively be integrated with the processor.

The memory 1802 is configured to store application program code for executing the foregoing solution, and the processor 1801 controls the execution. The processor 1801 is configured to execute the application program code stored in the memory 1802.

In the foregoing embodiments, descriptions of embodiments have respective focuses. For a part that is not described in detail in an embodiment, refer to related descriptions in other embodiments.

The computer-readable storage medium may be a tangible device that can retain and store instructions used by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random-access memory (Random-Access Memory, RAM), a read-only memory (Read-Only Memory, ROM), an erasable programmable read-only memory (Electrically Programmable Read-Only Memory, EPROM, or flash memory), a static random-access memory (Static Random-Access Memory, SRAM), a portable compact disk read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium, or downloaded to an external computer or external storage device via a network, such as the Internet, a local area network, a wide area network and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include object-oriented programming languages such as Smalltalk and C++, and conventional procedural programming languages such as a "C" language or a similar programming language. The computer-readable program instructions may be executed entirely on a user computer, partly on a user computer, as a stand-alone software package, partly on a user computer and partly on a remote computer, or entirely on a remote computer or a server. In a case involving a remote computer, the remote computer may be connected to a user computer over any type of network, including a local area network (Local Area Network, LAN) or a wide area network (Wide Area Network, WAN), or may be connected to an external computer (for example, connected over Internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that when the instructions are executed by the processor of the computer or the another programmable data processing apparatus, an apparatus for implementing functions/actions specified in one or more blocks in the flowcharts and/or block diagrams is generated. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or block diagrams.

The computer-readable program instructions may alternatively be loaded onto a computer, another programmable data processing apparatus, or another device, so that a series of operation steps are executed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in an order different from that marked in the accompanying drawings. For example, two consecutive blocks may actually be executed substantially in parallel, and may sometimes be executed in a reverse order, depending on a related function.

It should also be noted that each block in the block diagrams and/or the flowcharts, and a combination of blocks in the block diagrams and/or the flowcharts may be implemented by hardware (for example, a circuit or an ASIC (Application Specific Integrated Circuit, application specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit can implement several functions enumerated in the claims. Some measures are recorded in dependent claims that are different from each other, but this does not mean that these measures cannot be combined to produce good effect.

The foregoing has described embodiments of this application. The foregoing descriptions are examples, not exhaustive, and are not limited to the disclosed embodiments. Without departing from the scope of the described embodiments, many modifications and variations are apparent to a person of ordinary skill in the technical field. Selection of terms used in this specification is intended to best explain the principles of embodiments, actual application, or improvements to technologies in the market, or to enable another person of ordinary skill in the art to understand embodiments disclosed in this specification.

**Claims**

1.  A data processing method, wherein the method comprises:

    extracting a feature sequence of target data, wherein the feature sequence comprises T input features, T is a positive integer, and $t \in [1, T]$;
    obtaining T hidden state vectors based on a recurrent neural network, wherein a $t^{th}$ hidden state vector is determined based on a $(t-1)^{th}$ input feature, a $(t-1)^{th}$ hidden state vector, and a $(t-1)^{th}$ extended state vector, and the $(t-1)^{th}$ extended state vector is obtained by performing lightweight processing based on the $(t-1)^{th}$ hidden state vector; and
    obtaining a processing result of the target data based on the T hidden state vectors by using a downstream task network.

2.  The method according to claim 1, wherein the recurrent neural network comprises a first-type recurrent neural network, the first-type recurrent neural network comprises a reset gate layer and an update gate layer, the reset gate layer is used to control information to be discarded from a hidden state vector, the update gate layer is used to control information to be added to a hidden state vector, and that a $t^{th}$ hidden state vector is determined based on a $(t-1)^{th}$ input feature, a $(t-1)^{th}$ hidden state vector, and a $(t-1)^{th}$ extended state vector comprises:

determining first gated vectors based on the $(t-1)^{th}$ input feature, the $(t-1)^{th}$ hidden state vector, and the $(t-1)^{th}$ extended state vector respectively by using first gated neurons at the reset gate layer and the update gate layer; determining, by using a candidate neuron in the first-type recurrent neural network, a first candidate hidden state vector based on the first gated vector determined by the first gated neuron at the reset gate layer, the $(t-1)^{th}$ input feature, and the $(t-1)^{th}$ hidden state vector, or determining a first candidate hidden state vector based on the first gated vector determined by the first gated neuron at the reset gate layer, the $(t-1)^{th}$ input feature, the $(t-1)^{th}$ hidden state vector, and the $(t-1)^{th}$ extended state vector; and determining the $t^{th}$ hidden state vector based on the first gated vector determined by the first gated neuron at the update gate layer, the $(t-1)^{th}$ hidden state vector, and the first candidate hidden state vector.

3. The method according to claim 1, wherein the recurrent neural network comprises a first-type recurrent neural network, the first-type recurrent neural network comprises a reset gate layer and an update gate layer, the reset gate layer is used to control information to be discarded from a hidden state vector, the update gate layer is used to control information to be added to a hidden state vector, and that a $t^{th}$ hidden state vector is determined based on a $(t-1)^{th}$ input feature, a $(t-1)^{th}$ hidden state vector, and a $(t-1)^{th}$ extended state vector comprises:

determining a first gated vector based on the $(t-1)^{th}$ input feature, the $(t-1)^{th}$ hidden state vector, and the $(t-1)^{th}$ extended state vector by using a first gated neuron at the reset gate layer or the update gate layer in the first-type recurrent neural network;
performing lightweight processing on the first gated vector by using a first transform neuron in the first-type recurrent neural network, to obtain a first supplementary gated vector; and
determining the $t^{th}$ hidden state vector based on the $(t-1)^{th}$ input feature, the $(t-1)^{th}$ hidden state vector, the first supplementary gated vector, and the first gated vector; or determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector.

4. The method according to claim 3, wherein when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector comprises:

determining a second candidate hidden state vector based on the $(t-1)^{th}$ input feature, the $(t-1)^{th}$ hidden state vector, and the first supplementary gated vector by using a candidate neuron in the first-type recurrent neural network; and
determining the $t^{th}$ hidden state vector based on the first gated vector, the $(t-1)^{th}$ hidden state vector, and the second candidate hidden state vector.

5. The method according to claim 3, wherein when the first gated neuron is a gated neuron at the reset gate layer in the first-type recurrent neural network, the determining the $t^{th}$ hidden state vector based on the $(t-1)^{th}$ input feature, the $(t-1)^{th}$ hidden state vector, the first supplementary gated vector, and the first gated vector comprises:

determining a third candidate hidden state vector based on the $(t-1)^{th}$ input feature, the $(t-1)^{th}$ hidden state vector, and the first gated vector by using a candidate neuron in the first-type recurrent neural network; and
determining the $t^{th}$ hidden state vector based on the first supplementary gated vector, the $(t-1)^{th}$ hidden state vector, and the third candidate hidden state vector.

6. The method according to claim 3, wherein when the first gated neuron is a gated neuron at the update gate layer in the first-type recurrent neural network, the determining the $t^{th}$ hidden state vector based on the $(t-1)^{th}$ input feature, the $(t-1)^{th}$ hidden state vector, the first supplementary gated vector, the first gated vector, and the $(t-1)^{th}$ extended state vector comprises:

determining a fourth candidate hidden state vector based on the $(t-1)^{th}$ input feature, the $(t-1)^{th}$ hidden state vector, the first supplementary gated vector, and the $(t-1)^{th}$ extended state vector by using a candidate neuron in the first-type recurrent neural network; and
determining the $t^{th}$ hidden state vector based on the first gated vector, the $(t-1)^{th}$ hidden state vector, and the fourth candidate hidden state vector.

7. The method according to claim 3, wherein when the first gated neuron is a gated neuron at the reset gate layer in the first-type recurrent neural network, the determining the $t^{th}$ hidden state vector based on the $(t-1)^{th}$ input feature, the

$(t-1)^{th}$ hidden state vector, the first supplementary gated vector, the first gated vector, and the $(t-1)^{th}$ extended state vector comprises:

determining a fifth candidate hidden state vector based on the $(t-1)^{th}$ input feature, the $(t-1)^{th}$ hidden state vector, the first gated vector, and the $(t-1)^{th}$ extended state vector by using a candidate neuron in the first-type recurrent neural network; and

determining the $t^{th}$ hidden state vector based on the first supplementary gated vector, the $(t-1)^{th}$ hidden state vector, and the fifth candidate hidden state vector.

8. The method according to claim 1, wherein the recurrent neural network comprises a second-type recurrent neural network, and that a $t^{th}$ hidden state vector is determined based on a $(t-1)^{th}$ input feature, a $(t-1)^{th}$ hidden state vector, and a $(t-1)^{th}$ extended state vector comprises:

splicing the $(t-1)^{th}$ hidden state vector and the $(t-1)^{th}$ extended state vector, to obtain a $(t-1)^{th}$ spliced state vector; and

determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network, wherein the $t^{th}$ cell state vector is determined based on the $(t-1)^{th}$ spliced state vector, the $(t-1)^{th}$ input feature, and the $(t-1)^{th}$ cell state vector, the $t^{th}$ hidden state vector is determined based on the $(t-1)^{th}$ spliced state vector, the $(t-1)^{th}$ input feature, and the $t^{th}$ cell state vector, and a $0^{th}$ cell state vector is an initial value.

9. The method according to claim 8, wherein the determining the $t^{th}$ hidden state vector and a $t^{th}$ cell state vector based on the $(t-1)^{th}$ input feature, the $(t-1)^{th}$ spliced state vector, and a $(t-1)^{th}$ cell state vector by using the second-type recurrent neural network comprises:

determining a second gated vector based on the $(t-1)^{th}$ input feature and the $(t-1)^{th}$ spliced state vector by using a second gated neuron in the second-type recurrent neural network;

performing lightweight processing on the second gated vector by using a second transform neuron in the second-type recurrent neural network, to obtain a second supplementary gated vector;

determining a first candidate cell state vector based on the $(t-1)^{th}$ input feature and the $(t-1)^{th}$ spliced state vector by using a candidate neuron in the second-type recurrent neural network; and

determining the $t^{th}$ hidden state vector and the $t^{th}$ cell state vector based on the second gated vector, the second supplementary gated vector, the first candidate cell state vector, and the $(t-1)^{th}$ cell state vector.

10. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the forget gate layer, the second supplementary gated vector comprises second supplementary gated vectors that are obtained by performing lightweight processing on the second gated vector respectively by second transform neurons at the input gate layer and the output gate layer; and the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second supplementary gated vector that is obtained by performing lightweight processing on the second gated vector by the second transform neuron at the input gate layer, the second gated vector, and the first candidate cell state vector; and

determining the $t^{th}$ hidden state vector based on the $t^{th}$ cell state vector and the second supplementary gated vector that is obtained by performing lightweight processing on the second gated vector by the second transform neuron at the output gate layer.

11. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the input gate layer, the second supplementary gated vector comprises second supplementary gated vectors that are obtained by performing lightweight processing on the second gated vector respectively by second transform neurons at the forget gate layer and the output gate layer; and

the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second supplementary gated vector that is obtained by performing lightweight processing on the second gated vector by the second transform neuron at the forget gate layer, the second gated vector, and the first candidate cell state vector; and
determining the $t^{th}$ hidden state vector based on the $t^{th}$ cell state vector and the second supplementary gated vector that is obtained by performing lightweight processing on the second gated vector by the second transform neuron at the output gate layer.

12. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the output gate layer, the second supplementary gated vector comprises second supplementary gated vectors that are obtained by performing lightweight processing on the second gated vector respectively by second transform neurons at the forget gate layer and the input gate layer; and
the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second supplementary gated vectors that are obtained by performing lightweight processing on the second gated vector respectively by the second transform neurons at the forget gate layer and the input gate layer, and the first candidate cell state vector; and
determining the $t^{th}$ hidden state vector based on the $t^{th}$ cell state vector and the second gated vector.

13. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the forget gate layer and the input gate layer, the second supplementary gated vector comprises a second supplementary gated vector that is obtained by the second transform neuron by performing lightweight processing on a second gated vector determined by a second gated neuron at the forget gate layer and/or the input gate layer; and
the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second gated vectors respectively determined by the second gated neurons at the forget gate layer and the input gate layer, and the first candidate cell state vector; and
determining the $t^{th}$ hidden state vector based on the $t^{th}$ cell state vector and the second supplementary gated vector.

14. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the forget gate layer and the output gate layer, the second supplementary gated vector comprises a second supplementary gated vector that is obtained by the second transform neuron by performing lightweight processing on a second gated vector determined by a second gated neuron at the forget gate layer and/or the output gate layer; and
the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second gated vector determined by the second gated neuron at the forget gate layer, the second supplementary gated vector, and the first candidate cell state vector; and
determining the $t^{th}$ hidden state vector based on the $t^{th}$ cell state vector and the second gated vector determined by the second gated neuron at the output gate layer.

15. The method according to claim 9, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the input gate layer and the output gate layer, the second supplementary gated vector comprises a second supplementary gated vector that is obtained by the second transform neuron by performing lightweight processing on a second gated vector determined by a second gated neuron at the input gate layer and/or the output gate layer; and

the determining the $t^{th}$ hidden state vector and the $t^{th}$ cell state vector based on the second gated vector, the second supplementary gated vector, the first candidate cell state vector, and the $(t-1)^{th}$ cell state vector comprises:

determining the $t^{th}$ cell state vector based on the second gated vector determined by the second gated neuron at the input gate layer, the second supplementary gated vector, and the first candidate cell state vector; and determining the $t^{th}$ hidden state vector based on the $t^{th}$ cell state vector and the second gated vector determined by the second gated neuron at the output gate layer.

16. The method according to any one of claims 1 to 15, wherein the lightweight processing comprises nonlinear transformation and/or linear transformation.

17. The method according to any one of claims 1 to 15, wherein the target data comprises at least one of the following: voice data, image data, and text data; and the processing result comprises at least one of the following: a speech recognition result of the voice data, a speech noise cancellation result of the voice data, a voice wake-up result of the voice data, a text recognition result of the image data, and a text translation result of the text data.

18. A data processing method, wherein the method comprises:

extracting a feature sequence of target data, wherein the feature sequence comprises T input features, T is a positive integer, and $t \in [1, T]$;
obtaining T hidden state vectors based on a first-type recurrent neural network, wherein a $t^{th}$ hidden state vector is determined based on a $(t-1)^{th}$ input feature, a $(t-1)^{th}$ hidden state vector, a third supplementary gated vector, and a third gated vector, the third gated vector is determined based on the $(t-1)^{th}$ input feature and the $(t-1)^{th}$ hidden state vector by using a first gated neuron in the first-type recurrent neural network, and the third supplementary gated vector is obtained by performing lightweight processing on the third gated vector by using a first transform neuron in the first-type recurrent neural network; and
obtaining a processing result of the target data based on the T hidden state vectors by using a downstream task network.

19. The method according to claim 18, wherein the first-type recurrent neural network comprises a reset gate layer and an update gate layer, the reset gate layer is used to control information to be discarded from a hidden state vector, the update gate layer is used to control information to be added to a hidden state vector, and when the first gated neuron is a gated neuron at the update gate layer, that a $t^{th}$ hidden state vector is determined based on a $(t-1)^{th}$ input feature, a $(t-1)^{th}$ hidden state vector, a third supplementary gated vector, and a third gated vector comprises:

determining a sixth candidate hidden state vector based on the $(t-1)^{th}$ input feature, the $(t-1)^{th}$ hidden state vector, and the third supplementary gated vector by using a candidate neuron in the first-type recurrent neural network; and
determining the $t^{th}$ hidden state vector based on the third gated vector, the $(t-1)^{th}$ hidden state vector, and the sixth candidate hidden state vector.

20. The method according to claim 18, wherein the first-type recurrent neural network comprises a reset gate layer and an update gate layer, the reset gate layer is used to control information to be discarded from a hidden state vector, the update gate layer is used to control information to be added to a hidden state vector, and when the first gated neuron is a gated neuron at the reset gate layer, that a $t^{th}$ hidden state vector is determined based on a $(t-1)^{th}$ input feature, a $(t-1)^{th}$ hidden state vector, a third supplementary gated vector, and a third gated vector comprises:

determining a seventh candidate hidden state vector based on the $(t-1)^{th}$ input feature, the $(t-1)^{th}$ hidden state vector, and the third gated vector by using a candidate neuron in the first-type recurrent neural network; and
determining the $t^{th}$ hidden state vector based on the third supplementary gated vector, the $(t-1)^{th}$ hidden state vector, and the seventh candidate hidden state vector.

21. A data processing method, wherein the method comprises:

extracting a feature sequence of target data, wherein the feature sequence comprises T input features, T is a positive integer, and $t \in [1, T]$;

obtaining T hidden state vectors based on a second-type recurrent neural network, wherein a $t^{th}$ hidden state vector and a $t^{th}$ cell state vector are determined based on a fourth gated vector, a fourth supplementary gated vector, a second candidate cell state vector, and a $(t-1)^{th}$ cell state vector, the fourth gated vector is determined based on a $(t-1)^{th}$ input feature and a $(t-1)^{th}$ hidden state vector by using a second gated neuron in the second-type recurrent neural network, the fourth supplementary gated vector is obtained by performing lightweight processing on the fourth gated vector by using a second transform neuron in the second-type recurrent neural network, and the second candidate cell state vector is determined based on the $(t-1)^{th}$ input feature and the $(t-1)^{th}$ hidden state vector by using a candidate neuron in the second-type recurrent neural network; and

obtaining a processing result of the target data based on the T hidden state vectors by using a downstream task network.

22. The method according to claim 21, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the forget gate layer, the fourth supplementary gated vector comprises fourth supplementary gated vectors that are obtained by performing lightweight processing on the fourth gated vector respectively by second transform neurons at the input gate layer and the output gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth supplementary gated vector that is obtained by performing lightweight processing on the fourth gated vector by the second transform neuron at the input gate layer, the fourth gated vector, and the second candidate cell state vector; and

determining the $t^{th}$ hidden state vector based on the $t^{th}$ cell state vector and the fourth supplementary gated vector that is obtained by performing lightweight processing on the fourth gated vector by the second transform neuron at the output gate layer.

23. The method according to claim 21, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the input gate layer, the fourth supplementary gated vector comprises fourth supplementary gated vectors that are obtained by performing lightweight processing on the fourth gated vector respectively by second transform neurons at the forget gate layer and the output gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth supplementary gated vector that is obtained by performing lightweight processing on the fourth gated vector by the second transform neuron at the forget gate layer, the fourth gated vector, and the second candidate cell state vector; and

determining the $t^{th}$ hidden state vector based on the $t^{th}$ cell state vector and the fourth supplementary gated vector that is obtained by performing lightweight processing on the fourth gated vector by the second transform neuron at the output gate layer.

24. The method according to claim 22, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron is a gated neuron at the output gate layer, the fourth supplementary gated vector comprises fourth supplementary gated vectors that are obtained by performing lightweight processing on the fourth gated vector respectively by second transform neurons at the forget gate layer and the input gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth supplementary gated vectors that are obtained by performing lightweight processing on the fourth gated vector respectively by the second transform neurons at the forget gate layer and the input gate layer, and the second candidate cell state vector; and

determining the $t^{th}$ hidden state vector based on the $t^{th}$ cell state vector and the second gated vector.

25. The method according to claim 21, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the forget gate layer and the input gate layer, the fourth supplementary gated vector comprises a fourth supplementary gated vector that is obtained by the second transform neuron by performing lightweight processing on a fourth gated vector determined by a second gated neuron at the forget gate layer and/or the input gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth gated vectors respectively determined by the second gated neurons at the forget gate layer and the input gate layer, and the second candidate cell state vector; and

determining the $t^{th}$ hidden state vector based on the $t^{th}$ cell state vector and the fourth supplementary gated vector.

26. The method according to claim 21, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the forget gate layer and the output gate layer, the fourth supplementary gated vector comprises a fourth supplementary gated vector that is obtained by the second transform neuron by performing lightweight processing on a fourth gated vector determined by a second gated neuron at the forget gate layer and/or the output gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth gated vector determined by the second gated neuron at the forget gate layer, the fourth supplementary gated vector, and the second candidate cell state vector; and

determining the $t^{th}$ hidden state vector based on the $t^{th}$ cell state vector and the fourth gated vector determined by the second gated neuron at the output gate layer.

27. The method according to claim 21, wherein the second-type recurrent neural network comprises a forget gate layer, an input gate layer, and an output gate layer, the forget gate layer is used to control information to be discarded from a cell state vector, the input gate layer is used to control information to be added to a cell state vector, and the output gate layer is used to control information in a to-be-output cell state vector; and when the second gated neuron comprises gated neurons at the input gate layer and the output gate layer, the fourth supplementary gated vector comprises a fourth supplementary gated vector that is obtained by the second transform neuron by performing lightweight processing on a fourth gated vector determined by a second gated neuron at the input gate layer and/or the output gate layer; and

that a $t^{th}$ hidden state vector and a $t^{th}$ cell state vector are determined based on a fourth gated vector, a fourth supplementary gated vector, a second candidate cell state vector, and a $(t-1)^{th}$ cell state vector comprises:

determining the $t^{th}$ cell state vector based on the fourth gated vector determined by the second gated neuron at the input gate layer, the fourth supplementary gated vector, and the second candidate cell state vector; and

determining the $t^{th}$ hidden state vector based on the $t^{th}$ cell state vector and the fourth gated vector determined by the second gated neuron at the output gate layer.

28. A data processing apparatus, comprising:

a feature extraction module, configured to extract a feature sequence of target data, wherein the feature sequence comprises T input features, T is a positive integer, and $t \in [1, T]$;

a first determining module, configured to obtain T hidden state vectors based on a recurrent neural network, wherein a $t^{th}$ hidden state vector is determined based on a $(t-1)^{th}$ input feature, a $(t-1)^{th}$ hidden state vector, and a

$(t-1)^{th}$ extended state vector, and the $(t-1)^{th}$ extended state vector is obtained by performing lightweight processing based on the $(t-1)^{th}$ hidden state vector; and

a result determining module, configured to obtain a processing result of the target data based on the T hidden state vectors by using a downstream task network.

29. A data processing apparatus, comprising:

a feature extraction module, configured to extract a feature sequence of target data, wherein the feature sequence comprises T input features, T is a positive integer, and $t \in [1, T]$;

a second determining module, configured to obtain T hidden state vectors based on a first-type recurrent neural network, wherein a $t^{th}$ hidden state vector is determined based on a $(t-1)^{th}$ input feature, a $(t-1)^{th}$ hidden state vector, a third supplementary gated vector, and a third gated vector, the third gated vector is determined based on the $(t-1)^{th}$ input feature and the $(t-1)^{th}$ hidden state vector by using a first gated neuron in the first-type recurrent neural network, and the third supplementary gated vector is obtained by performing lightweight processing on the third gated vector by using a first transform neuron in the first-type recurrent neural network; and

a result determining module, configured to obtain a processing result of the target data based on the T hidden state vectors by using a downstream task network.

30. A data processing apparatus, comprising:

a feature extraction module, configured to extract a feature sequence of target data, wherein the feature sequence comprises T input features, T is a positive integer, and $t \in [1, T]$;

a third determining module, configured to obtain T hidden state vectors based on a second-type recurrent neural network, wherein a $t^{th}$ hidden state vector and a $t^{th}$ cell state vector are determined based on a fourth gated vector, a fourth supplementary gated vector, a second candidate cell state vector, and a $(t-1)^{th}$ cell state vector, the fourth gated vector is determined based on a $(t-1)^{th}$ input feature and a $(t-1)^{th}$ hidden state vector by using a second gated neuron in the second-type recurrent neural network, the fourth supplementary gated vector is obtained by performing lightweight processing on the fourth gated vector by using a second transform neuron in the second-type recurrent neural network, and the second candidate cell state vector is determined based on the $(t-1)^{th}$ input feature and the $(t-1)^{th}$ hidden state vector by using a candidate neuron in the second-type recurrent neural network; and

a result determining module, configured to obtain a processing result of the target data based on the T hidden state vectors by using a downstream task network.

31. A data processing apparatus, comprising:

a processor; and

a memory, configured to store instructions executable by the processor, wherein

the processor is configured to perform the method according to any one of claims 1 to 27 when executing the instructions.

32. A non-volatile computer-readable storage medium, storing computer program instructions, wherein when the computer program instructions are executed by a processor, the method according to any one of claims 1 to 27 is implemented.

33. A computer program product, comprising computer-readable code or a non-volatile computer-readable storage medium carrying computer-readable code, wherein when the computer-readable code is run on an electronic device, a processor in the electronic device performs the method according to any one of claims 1 to 27.

FIG. 1(a)

FIG. 1(b)

FIG. 2(a)

FIG. 2(b)

FIG. 3

FIG. 4

FIG. 5

S601

Extract a feature sequence of target data, where the feature sequence includes T input features, T is a positive integer, and t∈[1, T]

S602

Obtain T hidden state vectors based on a recurrent neural network, where a $t^{th}$ hidden state vector is determined based on a $(t-1)^{th}$ input feature, a $(t-1)^{th}$ hidden state vector, and a $(t-1)^{th}$ extended state vector

S603

Obtain a processing result of the target data based on the T hidden state vectors by using a downstream task network

FIG. 6

Hidden state vector $h_{t-1}$

State vector extension module

Extended state vector $g_{t-1}$

Gated recurrent unit neural network module

Input feature $x_{t-1}$

Hidden state vector $h_t$

FIG. 7(a)

FIG. 7(b)

FIG. 8(a)

FIG. 8(b)

FIG. 9(a)

FIG. 9(b)

FIG. 9(c)

FIG. 9(d)

FIG. 10(a)

FIG. 10(b)

FIG. 10(c)

FIG. 11(a)

FIG. 11(b)

FIG. 11(c)

S121

Extract a feature sequence of target data, where the feature sequence includes T input features, T is a positive integer, and t∈[1, T]

S122

Obtain T hidden state vectors based on a first-type recurrent neural network, where a $t^{th}$ hidden state vector is determined based on a $(t–1)^{th}$ input feature, a $(t–1)^{th}$ hidden state vector, a third supplementary gated vector, and a third gated vector

S123

Obtain a processing result of the target data based on the T hidden state vectors by using a downstream task network

FIG. 12

FIG. 13(a)

FIG. 13(b)

S141

Extract a feature sequence of target data, where the feature sequence includes T input features, T is a positive integer, and t∈[1, T]

S142

Obtain T hidden state vectors based on a second-type recurrent neural network, where a t$^{th}$ hidden state vector and a t$^{th}$ cell state vector are determined based on a fourth gated vector, a fourth supplementary gated vector, a second candidate cell state vector, and a (t–1)$^{th}$ cell state vector

S143

Obtain a processing result of the target data based on the T hidden state vectors by using a downstream task network

FIG. 14

FIG. 15(a)

FIG. 15(b)

FIG. 15(c)

FIG. 16(a)

FIG. 16(b)

FIG. 16(c)

FIG. 17

Feature extraction module / 181

Second determining module / 182

Result determining module / 183

FIG. 18

Feature extraction module / 191

Third determining module / 192

Result determining module / 193

FIG. 19

1300

Electronic device

1801

Processor

1802

Memory

Application program code

1803

Communication interface

FIG. 20

# INTERNATIONAL SEARCH REPORT

| International application No. |
| --- |
| **PCT/CN2023/103854** |

| A. | CLASSIFICATION OF SUBJECT MATTER |
| --- | --- |

G06N3/044(2023.01)i

According to International Patent Classification (IPC) or to both national classification and IPC

| B. | FIELDS SEARCHED |
| --- | --- |

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU: 隐含状态向量, 隐藏状态向量, 线性, 非线性, 轻量化, 输入, 矩阵变换, 卷积, 循环神经网络, RNN, LSTM, GRU, light weight+, hidden state vector+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 107633225 A (BEIJING KINGSOFT INTERNET SECURITY SOFTWARE CO., LTD.) 26 January 2018 (2018-01-26) description, paragraphs [0053]-[0100], figures 1 and 3, and claims 9-10 | 1, 16-18, 31-33 |
| Y | US 2019138887 A1 (BOARD OF TRUSTEES OF MICHIGAN STATE UNIVERSITY) 09 May 2019 (2019-05-09) description, paragraphs [0094]-[0097] | 1, 16-18, 31-33 |
| A | CN 111160036 A (CHINA MOBILE (SUZHOU) SOFTWARE TECHNOLOGY CO., LTD. et al.) 15 May 2020 (2020-05-15) entire document | 1-33 |
| A | US 2018336887 A1 (SAMSUNG ELECTRONICS CO., LTD.) 22 November 2018 (2018-11-22) entire document | 1-33 |
| A | US 11164066 B1 (GOOGLE LLC) 02 November 2021 (2021-11-02) entire document | 1-33 |

| ✓ | Further documents are listed in the continuation of Box C. | ✓ | See patent family annex. |
| --- | --- | --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2023** | **25 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/103854** |

## C. DOCUMENTS CONSIDERED TO BE RELEVANT

| Category* | Citation of document, with indication, where appropriate, of the relevant passages | Relevant to claim No. |
| --- | --- | --- |
| A | US 2021286544 A1 (UNIVERSITY OF LOUISIANA AT LAFAYETTE) 16 September 2021 (2021-09-16)<br>entire document | 1-33 |

Form PCT/ISA/210 (second sheet) (July 2022)

## INTERNATIONAL SEARCH REPORT
### Information on patent family members

International application No.

**PCT/CN2023/103854**

| Patent document cited in search report | | | Publication date (day/month/year) | Patent family member(s) | | | Publication date (day/month/year) |
|---|---|---|---|---|---|---|---|
| CN | 107633225 | A | 26 January 2018 | None | | | |
| US | 2019138887 | A1 | 09 May 2019 | None | | | |
| CN | 111160036 | A | 15 May 2020 | None | | | |
| US | 2018336887 | A1 | 22 November 2018 | KR | 20180127890 | A | 30 November 2018 |
| US | 11164066 | B1 | 02 November 2021 | None | | | |
| US | 2021286544 | A1 | 16 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211258515